(19) Europäisches Patentamt / European Patent Office / Office européen des brevets

(11) **EP 4 475 544 A1**

(12) **EUROPEAN PATENT APPLICATION**
published in accordance with Art. 153(4) EPC

(43) Date of publication:
**11.12.2024 Bulletin 2024/50**

(21) Application number: **23778051.5**

(22) Date of filing: **24.03.2023**

(51) International Patent Classification (IPC):
**H04N 23/45** (2023.01)

(52) Cooperative Patent Classification (CPC):
**H04N 23/45; H04N 23/62; H04N 23/631;
H04N 23/632; H04N 23/635; H04N 23/667;
H04N 23/69**

(86) International application number:
**PCT/CN2023/083740**

(87) International publication number:
**WO 2023/185683 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.04.2022 CN 202210351277**

(71) Applicant: **Huawei Technologies Co., Ltd.
Shenzhen, Guangdong 518129 (CN)**

(72) Inventors:
- **WANG, Jun**
  **Shenzhen, Guangdong 518129 (CN)**
- **CHEN, Ran**
  **Shenzhen, Guangdong 518129 (CN)**
- **LIU, Huanyu**
  **Shenzhen, Guangdong 518129 (CN)**
- **AO, Huanhuan**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MACRO PHOTOGRAPHING METHOD, ELECTRONIC DEVICE AND COMPUTER-READABLE STORAGE MEDIUM**

(57) Embodiments of this application disclose a macro shooting method, an electronic device, and a computer-readable storage medium, to perform a switching relay by using at least two macro cameras with different focal lengths in a zoom process of a macro mode, so as to implement macro shooting with a wider focal length. The method includes: in a macro shooting mode, when a zoom ratio is within a first ratio range, displaying, in a viewfinder frame, an image captured by a first macro camera; when the zoom ratio is a camera switching ratio, switching an image displayed in the viewfinder frame from the image captured by the first macro camera to an image captured by a second macro camera, to display, in the viewfinder frame, the image captured by the second macro camera; and when the zoom ratio is greater than the camera switching ratio and is within a second ratio range, displaying the image captured by the second macro camera in the viewfinder frame, where the second ratio range includes the camera switching ratio, and a focal length of the first macro camera is different from a focal length of the second macro camera.

08:08
Friday, August 8

28°C
Shenzhen

AI Life  Settings  Calendar  MeeTime

Clock  Application Store  Memo  Gallery

Camera  Contacts  Phone  Messages

1111

111

TO FIG. 11B

FIG. 11A

CONT.
FROM
FIG.11A

1113

1112

1115    1114

1x

Aperture  Night  Portrait  Photo  Video  Professional

▲

TO
FIG. 11C

FIG. 11B

CONT. FROM FIG. 11B

1116

1117 Macro mode enabled

1115 1114

1x

Aperture Night Portrait P—ofessional

TO
FIG. 11D

FIG. 11C

CONT.
FROM
FIG. 11C

1119

1120

TO
FIG. 11E

1118

1115    1114

1.5x

Aperture Night  Portrait      o Professional

FIG. 11D

FIG. 11E

FIG. 11F

**Description**

This application claims priority to Chinese Patent Application No. 202210351277.3, filed with the China National Intellectual Property Administration on April 2, 2022 and entitled "MACRO SHOOTING METHOD, ELECTRONIC DEVICE, AND COMPUTER-READABLE STORAGE MEDIUM", which is incorporated herein by reference in its entirety.

**TECHNICAL FIELD**

This application relates to the field of image technologies, and in particular, to a macro shooting method, an electronic device, and a computer-readable storage medium.

**BACKGROUND**

In macro shooting, small objects can be shot at an ultra-short distance, which brings different shooting experience to a user. With maturity of a miniaturization technology of a macro camera module, it is possible to implement macro shooting on miniaturized and portable electronic devices.

Currently, a single fixed-focus macro camera is usually used to implement a macro shooting function. For example, a mobile phone uses an ultra-near focusing capability and digital zoom of an ultra-wide-angle macro camera to implement an ultra-wide-angle macro shooting function.

However, a single fixed-focus macro camera has a single focal length range and can cover a small quantity of focal length ranges, and consequently an effect of macro shooting is poor.

**SUMMARY**

Embodiments of this application provide a macro shooting method, an electronic device, and a computer-readable storage medium, to resolve a problem that existing macro shooting can only cover a single focal length range, and an effect of macro shooting is poor.

According to a first aspect, an embodiment of this application provides a macro shooting method, applied to an electronic device, where the electronic device includes at least two macro cameras, and the method includes:

in a macro shooting mode, when a zoom ratio is within a first ratio range, displaying, in a viewfinder frame, an image captured by a first macro camera;

when the zoom ratio is a camera switching ratio, switching an image displayed in the viewfinder frame from the image captured by the first macro camera to an image captured by a second macro camera; and

when the zoom ratio is greater than the camera switching ratio and is within a second ratio range, displaying, in the viewfinder frame, the image captured by the second macro camera, where the second ratio range includes the camera switching ratio, a focal length range of the first macro camera is different from a focal length range of the second macro camera, and the at least two macro cameras include the first macro camera and the second macro camera.

It can be learned from the foregoing technical solution that, in this embodiment of this application, in a zoom process of the macro shooting mode, a switching relay is performed based on macro cameras with different focal length ranges, to implement macro shooting with a wider focal length range, and an effect of macro shooting is better.

For example, the first macro camera is an ultra-wide-angle macro camera, the second macro camera is a long-focus macro camera, the first ratio range is 0.5x to 3.5x, the second ratio range is 3.5x to 15x, and the camera switching ratio is 3.5x. When the zoom ratio is within the first ratio range, that is, an ultra-wide-angle focal length range, the ultra-wide-angle macro camera is used for macro shooting. When the zoom ratio reaches the camera switching ratio, the ultra-wide-angle macro camera is switched to the long-focus macro camera. When the zoom ratio is within the second ratio range, that is, a long-focus focal length range, the long-focus macro camera is used for macro shooting. In this way, macro shooting from the ultra-wide-angle focal length range to the long-focus focal length range is implemented. The image displayed in the viewfinder frame may be a full FOV image or a partial FOV image captured by the macro camera.

In some possible implementations of the first aspect, the method further includes:

displaying, in a superimposed manner, a navigation window on a preview image displayed in the viewfinder frame, where the navigation window is used to display a navigation image, and a field of view of the navigation image is greater than a field of view of the preview image.

In this implementation, a navigation image with a larger field of view (field of view, FOV) is displayed on the preview image in a superimposed manner, so that it is convenient for a user to search for a shooting subject and perform image composition in a macro shooting process, and macro shooting experience of the user is improved. The navigation image and the preview image may be a full FOV image or a partial FOV image captured by the macro camera.

In some possible implementations of the first aspect, when the zoom ratio is within the second ratio range, the navigation image is the image captured by the first macro camera, and the preview image is the image captured by the second macro camera. For example, an image captured by the long-focus macro camera is used as the preview image, and an image captured by the ultra-wide-angle macro camera is used as the navigation image.

In some possible implementations of the first aspect, when the zoom ratio is within the first ratio range, the navigation image and the preview image each are the image captured by the first macro camera; and/or when the zoom ratio is within the second ratio range, the navigation image and the preview image each are the image captured by the second macro camera.

In some possible implementations of the first aspect, when the zoom ratio is within the first ratio range, the navigation image and the preview image each are the image captured by the first macro camera; and when the zoom ratio is within the second ratio range, the navigation image is the image captured by the first macro camera, and the preview image is the image captured by the second macro camera.

In some possible implementations of the first aspect, when the zoom ratio is within the first ratio range, the navigation image and the preview image each are the image captured by the first macro camera; when the zoom ratio is within a third ratio range, the navigation image is the image captured by the first macro camera, and the preview image is the image captured by the second macro camera; and when the zoom ratio is within a fourth ratio range, the navigation image and the preview image each are the image captured by the second macro camera, where the second ratio range includes the third ratio range and the fourth ratio range, and the third ratio range includes the camera switching ratio.

For example, the first ratio range is 0.5x to 3.5x, and in this case, ultra-wide-angle preview and ultra-wide-angle navigation are performed. The second ratio range is 3.5x to 15x, and the third ratio range is 3.5x to 10x, and in this case, long-focus preview and ultra-wide-angle navigation are performed. The second ratio range is greater than 10x, and in this case, long-focus preview and long-focus navigation are performed.

In some possible implementations of the first aspect, the zoom ratio is within the first ratio range; and the displaying, in a viewfinder frame, an image captured by a first macro camera, and displaying, in a superimposed manner, a navigation window on a preview image displayed in the viewfinder frame includes:

in a zoom process of the first ratio range, performing, based on an initially calibrated image offset value or an image offset value updated last time, image offset cropping on the image captured by the first macro camera, to obtain a first cropped image; based on the image offset value, identifying, by using an identification pattern, a location of the first cropped image in the image captured by the first macro camera, to obtain a first identification image; and displaying the first cropped image in the viewfinder frame, and displaying the first identification image in the navigation window of the viewfinder frame, where the identification pattern identifies a relative location relationship between the preview image and the navigation image.

Further, the relative location relationship between the preview image and the navigation image is obtained through image matching, and is identified in the navigation window by using the identification pattern. The user may learn a location of an FOV of the preview image in an FOV of the navigation image based on the identification pattern, to facilitate macro image composition and searching for a shooting subject. For example, the identification pattern is a rectangular block.

In addition, image offset cropping is further performed based on the image offset value on the image captured by the first macro camera, so that image transition is more smooth and natural in the zoom process, thereby improving user experience in macro shooting.

For example, the first ratio range is 0.5x to 3.5x. In a zoom process of 0.5x to 3.5x, a value of an image offset between a center of a long-focus image and a center of an ultra-wide-angle image is determined through image matching, image offset cropping is performed on the ultra-wide-angle image based on the image offset value, and the cropped image is used as a to-be-displayed image. A location of a preview image FOV in a navigation image FOV is marked based on the image offset value, to obtain an ultra-wide-angle image (that is, the first identification image) including the rectangular block, and the ultra-wide-angle image including the rectangular block and the cropped image are displayed in a superimposed manner, to implement ultra-wide-angle preview and ultra-wide-angle navigation. In specific application, after the ultra-wide-angle image is zoomed out, a location of the preview image is identified in the zoomed-out image based on the offset value, to obtain a navigation image including an identifier, and then the navigation image including the identifier is displayed in a corresponding location of the viewfinder frame. The navigation window is smaller than the viewfinder frame, that is, the viewfinder frame includes the navigation window.

In some possible implementations of the first aspect, the method further includes:

performing image feature matching based on the first cropped image and the image captured by the second macro camera, to obtain a first image feature matching result; and determining, based on the first image feature matching result and a zoom ratio of the image captured by the first macro camera, an image offset value of the image captured by the first macro camera, and performing offset value updating based on the image offset value of the image captured by the first macro camera. During image feature matching, down-sampling may be first performed on the first cropped image and the image captured by the second macro camera, and then image feature matching is performed on two down-sampled zoomed-out images, to reduce a calculation amount.

In some possible implementations of the first aspect, the determining, based on the first image feature matching result and a zoom ratio of the image captured by the first macro camera, an image offset value of the image captured by the first macro camera includes:

$$offset_{cur} = \frac{zoom_{cur} - zoom_{pre}}{zoom_{end} - zoom_{pre}} * (offset - offset_{pre}) + offset_{pre}$$

obtaining, by using a formula, the image offset value of the image captured by the first macro camera, where *offset* represents a value of an offset from a field-of-view center of the first macro camera to a field-of-view center of the second macro camera, and is a pre-calibrated offset value or the image feature matching result; $offset_{pre}$ represents an image offset value of a previous frame of image, and $offset_{cur}$ represents an image offset value of a current frame of image; and $zoom_{pre}$ represents a zoom ratio of the previous frame of image, $zoom_{cur}$ represents a zoom ratio of the current frame of image, $zoom_{end}$ represents a zoom ratio obtained when image offset ends and is less than or equal to the camera switching ratio, and $zoom_{start}$ represents a zoom ratio obtained when image offset starts and is greater than or equal to a minimum zoom ratio of the first macro camera.

In some possible implementations of the first aspect, the zoom ratio is within the second ratio range or the third ratio range; and the displaying, in the viewfinder frame, the image captured by the second macro camera, and displaying, in a superimposed manner, a navigation window on a preview image displayed in the viewfinder frame includes:

in a zoom process of the second ratio range or the third ratio range, performing digital zoom cropping on the image captured by the second macro camera, to obtain a second cropped image; based on the initially calibrated image offset value or the image offset value updated last time, identifying a location of the second cropped image in a target image by using the identification pattern, to obtain a second identification image; and displaying the second cropped image in the viewfinder frame, and displaying the second identification image in the navigation window of the viewfinder frame, where the target image is a third cropped image obtained by performing, based on the initially calibrated image offset value or the updated image offset value, image offset cropping on the image captured by the first macro camera, or a full field-of-view image captured by the first macro camera. In this implementation, the navigation image is displayed on the preview image in a superimposed manner, so that the user can conveniently perform macro shooting image composition and searching for a shooting subject.

For example, a long-focus image captured by the long-focus macro camera is used as the preview image, and an image captured by the ultra-wide-angle macro camera is used as the navigation image. A second identification image may be a long-focus cropped image including a rectangular block. In specific application, a location of a preview FOV may be identified in an image obtained by cropping the ultra-wide-angle image based on the offset value, to obtain an identified image, and then a zoomed-out image of the identified image is obtained, to obtain the navigation image.

In some possible implementations of the first aspect, the method further includes: performing image feature matching based on the second cropped image and the target image, to obtain a second image feature matching result; and determining an image offset value of the target image based on the second image feature matching result and a zoom ratio of the target image, and performing offset value updating based on the image offset value of the target image.

In some possible implementations of the first aspect, the zoom ratio is within the fourth ratio range; and the displaying, in the viewfinder frame, the image captured by the second macro camera, and displaying, in a superimposed manner, a navigation window on a preview image displayed in the viewfinder frame includes:

performing digital zoom cropping on the image captured by the second macro camera, to obtain a fourth cropped image; identifying, by using the identification pattern, a location of the fourth cropped image in the image captured by the second macro camera, to obtain a third identification image; and displaying the fourth cropped image in the viewfinder frame, and displaying the third identification image in the navigation window of the viewfinder frame. In this implementation, the navigation image is displayed on the preview image in a superimposed manner, so that the user can conveniently perform macro shooting image composition and searching for a shooting subject.

For example, a full FOV image of the long-focus macro camera is used as the navigation image, and a partial FOV image of the long-focus macro camera is used as the preview image. In specific application, the long-focus full FOV image may be zoomed out first, and then a location of a preview FOV is marked in the zoomed-out image.

In some possible implementations of the first aspect, the method further includes:

if the zoom ratio is within a fifth ratio range, when detecting a photo shooting operation, in response to the photo shooting operation, outputting the image captured by the first macro camera; if the zoom ratio is within a sixth ratio range, when detecting a photo shooting operation, in response to the photo shooting operation, performing image fusion on the image captured by the first macro camera and the image captured by the second macro camera, to obtain a fused image, and outputting the fused image; or if the zoom ratio is within the second ratio range, when detecting a photo shooting operation, in response to the photo shooting operation, outputting the image captured by the second macro camera, where the first ratio range includes the fifth ratio range and the sixth ratio range.

For example, the first ratio range is 0.5x to 3.5x, and the fifth ratio range is 0.5x to 2x, and in this case, the ultra-wide-angle macro camera is used for photo shooting. The sixth ratio range is 2x to 3.5x, and in this case, the ultra-wide-angle image and the long-focus image are fused. When the zoom ratio is greater than or equal to 3.5x, the long-focus macro camera is used for photo shooting. In this implementation, image fusion is used to improve photo shooting quality, and further improve user experience in macro shooting.

In some possible implementations of the first aspect, the fused image includes a target area and a non-target area, and image quality of the target area is higher than image quality of the non-target area; and the target area is an area that is in the image captured by the first macro camera and that corresponds to the image captured by the second macro camera. For example, the target area is an area that is in the ultra-wide-angle image and that corresponds to the long-focus image FOV. In this case, the ultra-wide-angle image with a larger FOV covers the long-focus FOV image.

In some possible implementations of the first aspect, the method further includes:
detecting a first shooting distance of an image captured by a target camera; and if first shooting distances of N consecutive frames of images are all less than a first threshold, switching from the target camera to a default macro camera, and displaying, in the viewfinder frame, an image captured by the default macro camera, where the default macro camera is the first macro camera or the second macro camera. In this implementation, when it is determined that a condition for automatically entering the macro shooting mode is met, the macro shooting mode is automatically entered, thereby further improving macro shooting experience. For example, the target camera is a main camera.

In some possible implementations of the first aspect, the method further includes:
if the first shooting distances of the N consecutive frames of images are less than the first threshold, displaying prompt information in the viewfinder frame, where the prompt information is used to prompt that the macro shooting mode is entered. In this implementation, a user is prompted, by using the prompt information, that the macro shooting mode is entered, thereby further improving macro shooting experience.

In some possible implementations of the first aspect, the method further includes:
detecting a second shooting distance of an image captured by a current macro camera; and if second shooting distances of M consecutive frames of images are all greater than a second threshold, switching from the current macro camera to the default macro camera, and displaying, in the viewfinder frame, the image captured by the default macro camera, where the current macro camera is the first macro camera or the second macro camera. In this implementation, when it is determined that a condition for automatically exiting the macro shooting mode is met, the macro shooting mode is automatically exited, thereby further improving macro shooting experience. For example, the default macro camera may be the main camera, or may be another camera.

In some possible implementations of the first aspect, the viewfinder frame further includes a first shortcut control and a second shortcut control; the first shortcut control is used to switch the image displayed in the viewfinder frame from the image captured by the first macro camera to the image captured by the second macro camera; and the second shortcut control is used to switch the image displayed in the viewfinder frame from the image captured by the second macro camera to the image captured by the first macro camera. In this implementation, the user can quickly switch the macro camera by using the shortcut control, thereby further improving user experience. For example, the first shortcut control is a long-focus macro shortcut control, and the second shortcut control is an ultra-wide-angle macro shortcut control.

According to a second aspect, an embodiment of this application provides a macro shooting method, applied to an electronic device, and the method includes:
in a macro shooting mode, displaying, in a viewfinder frame, an image captured by a first macro camera, and displaying, in a superimposed manner, a navigation window on a preview image displayed in the viewfinder frame, where the navigation window is used to display a navigation image, and a field of view of the navigation image is greater than a field of view of the preview image.

It can be learned from the foregoing technical solution that, in this embodiment of this application, a navigation image of a larger FOV is displayed on the preview image in a superimposed manner, so that a user can conveniently perform macro composition and search for a shooting subject, thereby improving user experience in macro shooting. For example, the first macro camera is a long-focus macro camera or an ultra-wide-angle macro camera.

In some possible implementations of the second aspect, the navigation image is the image captured by the first macro camera or an image captured by a second macro camera, and a field of view of the second macro camera is greater than a field of view of the first macro camera.

In some possible implementations of the second aspect, the navigation image is the image captured by the first macro camera; and the displaying, in a viewfinder frame, an image captured by a first macro camera, and displaying, in a superimposed manner, a navigation window on a preview image displayed in the viewfinder frame includes:
performing, based on an initially calibrated image offset value or an image offset value updated last time, image offset cropping on the image captured by the first macro camera, to obtain a first cropped image; based on the image offset value, identifying, by using an identification pattern, a location of the first cropped image in the image captured by the first macro camera, to obtain a first identification image; and displaying the first cropped image in the viewfinder frame, and displaying the first identification image in the navigation window of the viewfinder frame, where the identification pattern identifies a relative location relationship between the preview image and the navigation image.

For example, the first macro camera is an ultra-wide-angle macro camera, a full FOV image captured by the ultra-wide-angle macro camera is used as the navigation image, and a partial FOV image captured by the ultra-wide-angle macro camera is used as the preview image.

In some possible implementations of the second aspect, the method further includes:

performing image feature matching based on the first cropped image and the image captured by the second macro camera, to obtain a first image feature matching result; and determining, based on the first image feature matching result and a zoom ratio of the image captured by the first macro camera, an image offset value of the image captured by the first macro camera, and performing offset value updating based on the image offset value of the image captured by the first macro camera.

In some possible implementations of the second aspect, the determining, based on the first image feature matching result and a zoom ratio of the image captured by the first macro camera, an image offset value of the image captured by the first macro camera includes:

obtaining, by using a formula

$$offset_{cur} = \frac{zoom_{cur} - zoom_{pre}}{zoom_{end} - zoom_{pre}} * (offset - offset_{pre}) + offset_{pre}$$

, the image offset value of the image captured by the first macro camera, where $offset$ represents a value of an offset from a field-of-view center of the first macro camera to a field-of-view center of the second macro camera, and is a pre-calibrated offset value or the image feature matching result; $offset_{pre}$ represents an image offset value of a previous frame of image, and $offset_{cur}$ represents an image offset value of a current frame of image; and $zoom_{pre}$ represents a zoom ratio of the previous frame of image, $zoom_{cur}$ represents a zoom ratio of the current frame of image, $zoom_{end}$ represents a zoom ratio obtained when image offset ends and is less than or equal to a camera switching ratio, and $zoom_{start}$ represents a zoom ratio obtained when image offset starts and is greater than or equal to a minimum zoom ratio of the first macro camera.

In some possible implementations of the second aspect, the navigation image is the image captured by the second macro camera; and the displaying, in a viewfinder frame, an image captured by a first macro camera, and displaying, in a superimposed manner, a navigation window on a preview image displayed in the viewfinder frame includes:

performing digital zoom cropping on the image captured by the first macro camera, to obtain a second cropped image; based on an initially calibrated image offset value or an image offset value updated last time, identifying, by using an identification pattern, a location of the second cropped image in a target image, to obtain a second identification image; and displaying the second cropped image in the viewfinder frame, and displaying the second identification image in the navigation window of the viewfinder frame, where the target image is a third cropped image obtained by performing, based on the initially calibrated image offset value or the updated image offset value, image offset cropping on the image captured by the second macro camera, or a full field-of-view image captured by the second macro camera.

For example, the second macro camera is an ultra-wide-angle macro camera, the first macro camera is a long-focus macro camera, a long-focus image is used as the preview image, and a full FOV image or a partial FOV image captured by the ultra-wide-angle macro camera is used as the navigation image, provided that an FOV of the partial FOV image of the ultra-wide-angle macro camera is greater than that of the long-focus image.

In some possible implementations of the second aspect, the method further includes:

performing image feature matching based on the second cropped image and the target image, to obtain a second image feature matching result; and determining an image offset value of the target image based on the second image feature matching result and a zoom ratio of the target image, and performing offset value updating based on the image offset value of the target image.

In some possible implementations of the second aspect, the navigation image is the image captured by the first macro camera; and the displaying, in a viewfinder frame, an image captured by a first macro camera, and displaying, in a superimposed manner, a navigation window on a preview image displayed in the viewfinder frame includes:

performing digital zoom cropping on the image captured by the first macro camera, to obtain a fourth cropped image; identifying, by using an identification pattern, a location of the fourth cropped image in the image captured by the first macro camera, to obtain a third identification image; and displaying the fourth cropped image in the viewfinder frame, and displaying the third identification image in the navigation window of the viewfinder frame. For example, the first macro camera is a long-focus macro camera, and in this case, a full FOV image captured by the long-focus macro camera is used as the navigation image, and a partial FOV image captured by the long-focus macro camera is used as the preview image.

In some possible implementations of the second aspect, the method further includes:

when detecting a photo shooting operation, in response to the photo shooting operation, performing image fusion on the image captured by the first macro camera and an image captured by a second macro camera, to obtain a fused image, and outputting the fused image, where the fused image includes a target area and a non-target area, and image quality of the target area is higher than image quality of the non-target area; and the target area is an area that is in the image captured by the first macro camera and that corresponds to the image captured by the second macro camera.

In some possible implementations of the second aspect, the method further includes:

detecting a first shooting distance of an image captured by a target camera; and if first shooting distances of N consecutive frames of images are all less than a first threshold, switching from the target camera to the first macro camera, and displaying, in the viewfinder frame, an image captured by a default macro camera.

In some possible implementations of the second aspect, the method further includes:

if the first shooting distances of the N consecutive frames of images are less than the first threshold, displaying prompt information in the viewfinder frame, where the prompt information is used to prompt that the macro shooting mode is entered.

In some possible implementations of the second aspect, the method further includes:

detecting a second shooting distance of the image captured by the first macro camera; and if second shooting distances of M consecutive frames of images are all greater than a second threshold, switching from the first macro camera to the default macro camera, and displaying, in the viewfinder frame, the image captured by the default macro camera.

According to a third aspect, an embodiment of this application provides an electronic device, including a memory, a processor, and a computer program that is stored in the memory and that can be run on the processor, where when the processor executes the computer program, the method according to the first aspect or the second aspect is implemented.

According to a fourth aspect, an embodiment of this application provides a computer-readable storage medium, where the computer-readable storage medium stores a computer program, and when the computer program is executed by a processor, the method according to the first aspect or the second aspect is implemented.

According to a fifth aspect, an embodiment of this application provides a chip system, the chip system includes a processor, the processor is coupled to a memory, the processor executes a computer program stored in the memory, to implement the method according to the first aspect or the second aspect. The chip system may be a single chip or a chip module including a plurality of chips.

According to a sixth aspect, an embodiment of this application provides a computer program product. When the computer program product runs on an electronic device, the electronic device is enabled to perform the method according to the first aspect or the second aspect.

It may be understood that, for beneficial effects of the second aspect to the sixth aspect, refer to related descriptions in the first aspect. Details are not described herein again.

**BRIEF** DESCRIPTION OF DRAWINGS

FIG. 1 is a schematic block diagram of a hardware structure of an electronic device 100 according to an embodiment of this application;

FIG. 2 is a block diagram of a software structure of an electronic device 100 according to an embodiment of this application;

FIG. 3A(1) to FIG. 3A(3) are a schematic diagram of manually entering a macro shooting mode according to an embodiment of this application;

FIG. 3B(1) to FIG. 3B(3) are a schematic diagram of automatically entering a macro shooting mode according to an embodiment of this application;

FIG. 3C is a schematic diagram of prompting exiting a macro shooting mode according to an embodiment of this application;

FIG. 3D(1) to FIG. 3D(4) are a schematic diagram of a zoom process of a macro shooting mode according to an embodiment of this application;

FIG. 3E(1) and FIG. 3E(2) are a schematic diagram of a shortcut control according to an embodiment of this application;

FIG. 4 is a schematic flowchart of ultra-wide-angle preview according to an embodiment of this application;

FIG. 5 is a schematic flowchart of image navigation of a single macro camera according to an embodiment of this application;

FIG. 6 is a schematic diagram of image navigation of macro shooting according to an embodiment of this application;

FIG. 7A to FIG. 7D are a schematic diagram of image navigation according to an embodiment of this application;

FIG. 8A to FIG. 8C are another schematic diagram of image navigation according to an embodiment of this application;

FIG. 9A to FIG. 9F are a schematic diagram of a long-focus low-medium-ratio image navigation solution according to an embodiment of this application;

FIG. 10 is a schematic flowchart of a long-focus low-medium-ratio image navigation solution according to an embodiment of this application;

FIG. 11A to FIG. 11F are still another schematic diagram of image navigation according to an embodiment of this application;

FIG. 12 is a schematic flowchart of an ultra-wide-angle high-ratio navigation solution according to an embodiment of this application;

FIG. 13 is a schematic flowchart of a long-focus high-ratio navigation solution according to an embodiment of this application;
FIG. 14 is a schematic diagram of a fused image according to an embodiment of this application;
FIG. 15 is a schematic flowchart of macro shooting according to an embodiment of this application;
FIG. 16A(1) to FIG. 16A(6) are a schematic diagram of macro photo shooting according to an embodiment of this application;
FIG. 16B(1) to FIG. 16B(6) are another schematic diagram of macro photo shooting according to an embodiment of this application;
FIG. 16C(1) to FIG. 16C(6) are still another schematic diagram of macro photo shooting according to an embodiment of this application;
FIG. 17A(1) to FIG. 17A(6) are a schematic diagram of a macro video recording preview scenario according to an embodiment of this application; and
FIG. 17B(1) to FIG. 17B(6) are a schematic diagram of macro video recording according to an embodiment of this application.

## DESCRIPTION OF EMBODIMENTS

In the following descriptions, for illustration instead of limitation, specific details such as a particular system structure and a technology are provided to make a thorough understanding of embodiments of this application.

Currently, in a process in which an electronic device implements a macro shooting function by using a single fixed-focus macro camera, when a zoom ratio is not a zoom level of the macro camera, a macro shooting image is usually obtained by using a digital zoom technology, that is, obtaining a macro shooting image of an equivalent focal length by performing operations such as cropping, zooming in, and interpolation processing on an image captured by the macro camera under the zoom level. However, a single macro camera can only cover a single focal length range, and problems such as image distortion often occur on an image obtained through cropping and zooming in. As a result, image quality is poor, and an effect of macro shooting is poor.

A mobile phone is used as an example. An ultra-wide-angle macro camera is integrated into the mobile phone. The ultra-wide-angle macro camera is a fixed-focus camera whose zoom level is 0.5x, and covers a zoom ratio range of 0.5x to 15x.

In a process in which the mobile phone implements macro shooting by using the ultra-wide-angle macro camera, when a zoom ratio is 0.5x, the mobile phone obtains an optical image by using the ultra-wide-angle macro camera, and in this case, digital zoom is not required. When the zoom ratio is greater than 0.5x, after obtaining an optical image whose zoom ratio is 0.5x, the mobile phone performs digital zoom on the optical image, to obtain a macro image with an equivalent focal length. In this case, when a zoom ratio is high, image quality of a macro image obtained by performing digital zoom on an ultra-wide-angle optical image is poor.

For another example, a long-focus macro camera is integrated into the mobile phone. The long-focus macro camera is a fixed-focus camera whose zoom level is 3x, and covers a zoom ratio range of 3x to 15x.

In a process in which the mobile phone implements macro shooting by using the long-focus macro camera, when a zoom ratio is 3x, the mobile phone obtains an optical image by using the long-focus macro camera, and in this case, digital zoom is not required. When the zoom ratio is greater than 3x, after obtaining an optical image whose zoom ratio is 3x, the mobile phone performs digital zoom on the optical image, to obtain a macro image with an equivalent focal length. Likewise, when the zoom ratio is high, image quality of a macro image obtained by performing digital zoom on a long-focus optical image is poor. In addition, a single long-focus macro camera cannot implement macro shooting with a focal length range under 3x. As a result, macro shooting can only cover a single focal length range.

For a problem that a focal length of a single fixed-focus macro camera is single and an effect of macro shooting is poor, embodiments of this application provide a macro shooting solution based on at least two macro cameras, to implement macro shooting with a wider focal length by a switching relay of the at least two macro cameras in a zoom process of macro shooting, thereby improving the effect of macro shooting.

Specifically, in the macro shooting solution provided in this embodiment of this application, the electronic device has at least two macro cameras, and focal lengths of the at least two macro cameras are different. In a macro shooting mode, after obtaining a current zoom ratio, the electronic device may determine a focal length range of a macro camera in which the current zoom ratio falls, and whether a camera switching ratio is reached. If the current zoom ratio falls in a focal length range of a macro camera, the electronic device uses the macro camera to perform macro shooting. If the current zoom ratio reaches the camera switching ratio, the electronic device switches from the current macro camera to another macro camera, and uses the another macro camera to perform macro shooting; or if the current zoom ratio does not reach the camera switching ratio, the electronic device continues to use the current macro camera to perform macro shooting. In this way, a switching relay of a plurality of macro cameras can implement macro shooting with a wider focal length range, thereby achieving better effect of macro shooting.

The macro camera refers to a camera that has macro focusing and macro shooting capabilities, and may include but is not limited to an ultra-wide-angle macro camera, a wide-angle macro camera, and a long-focus macro camera.

In this embodiment of this application, the focal length ranges of the at least two macro cameras are different, so that macro shooting in different focal length ranges and different zoom ratios can be implemented.

The at least two macro cameras may be fixed-focus camera. In this case, in a zoom process in the macro shooting mode, the electronic device performs discontinuous optical zoom based on the at least two fixed-focus macro cameras. In addition, in a discontinuous zoom process, an image at a corresponding zoom ratio is obtained through digital zoom. Certainly, the at least two macro cameras may be continuous zoom lenses. This is not limited herein.

For example, the electronic device includes two fixed-focus cameras. One of the fixed-focus cameras is an ultra-wide-angle macro camera with a zoom level of 0.5x, and covers zoom ratios from 0.5x to 3.5x. The other is a long-focus macro camera with a zoom level of 3.5x, and covers zoom ratios from 3.5x to 15x. A camera switching ratio is 3.5x.

In this case, in a zoom process of macro shooting, the electronic device obtains a current zoom ratio, and if the current zoom ratio is between 0.5x and 3.5x, performs macro shooting by using the ultra-wide-angle macro camera; or if the current zoom ratio is 3.5x, determines that the zoom ratio reaches the camera switching ratio, and performs camera switching, to switch from the ultra-wide-angle macro camera to the long-focus macro camera, and after the switching, performs macro shooting by using the long-focus macro camera. If the current zoom ratio is greater than 3.5x, the electronic device performs macro shooting by using the long-focus macro camera.

It may be understood that if the current zoom ratio is between 0.5x and 3.5x, the electronic device performs digital zoom cropping on an image captured by the ultra-wide-angle macro camera, to obtain an image of a corresponding zoom ratio; or if the current zoom ratio is greater than 3.5x, the electronic device performs digital zoom cropping on an image captured by the long-focus macro camera, to obtain an image of a corresponding zoom ratio.

Compared with an existing macro shooting solution based on a single fixed-focus macro camera, in the macro shooting solution based on at least two fixed-focus macro cameras provided in embodiments of this application, a wider focal length range is covered during macro shooting, and an effect of macro shooting is better.

Specifically, in the foregoing macro shooting solution based on a fixed-long-focus macro camera, only macro shooting of 3x to 15x can be implemented, but macro shooting within a focal length range less than 3x cannot be implemented. In this embodiment of this application, based on the 0.5x ultra-wide-angle macro camera and the 3.5x long-focus macro camera, macro shooting of 0.5x to 15x can be implemented, and a wider focal length range is covered during macro shooting.

In addition, in the foregoing macro shooting solution based on a fixed-focus ultra-wide-angle macro camera, macro shooting of 0.5x to 15x can be implemented, but when the zoom ratio is high (for example, 10x), digital zoom cropping is performed on a 0.5x wide-angle optical image to obtain a macro image, resulting in poor image quality and a poor effect of macro shooting. In the macro shooting solution based on two fixed-focus cameras in embodiments of this application, when the zoom ratio is greater than 3.5x, digital zoom cropping is not performed on a 0.5x wide-angle optical image, but is performed on a 3.5x long-focus optical image.

When the zoom ratio is greater than 3.5x, compared with an image obtained by performing digital zoom cropping on a 0.5x wide-angle optical image, quality of an image obtained by performing digital zoom cropping on a 3.5x long-focus optical image is better, thereby improving an effect of macro shooting.

It may be understood that the focal length range refers to ranges of focal lengths of a camera. The zoom ratio and the focal length may be mutually converted. For ease of description, the zoom ratio is used to indicate the focal length range. For example, the focal length range of the ultra-wide-angle macro camera is 0.5x to 3.5x, which is a focal length range corresponding to zoom ratios 0.5x to 3.5x. A focal length corresponding to the zoom ratio 0.5x is a focal length of the ultra-wide-angle macro camera, and a focal length corresponding to another zoom ratio is an equivalent focal length obtained through digital zoom.

The electronic device in this embodiment of this application may be but is not limited to a mobile phone, a tablet computer, a notebook computer, or the like. A specific type and a specific structure of the electronic device are not limited in this embodiment of this application.

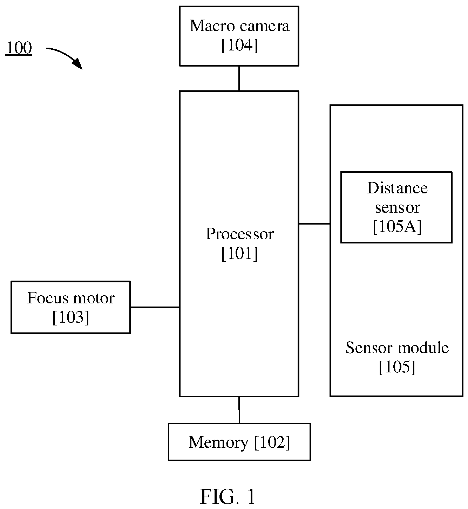

For example, FIG. 1 is a schematic diagram of a hardware structure of an electronic device 100 according to an embodiment of this application. As shown in FIG. 1, the electronic device 100 may include a processor 101, a memory 102, a focus motor 103, and a macro camera 104. The electronic device 100 may include one or N macro cameras 104, where N is a positive integer greater than 1. Certainly, in addition to the macro camera, the electronic device 100 may further include a camera of another type. For example, the electronic device 100 is a mobile phone, and includes an ultra-wide-angle macro camera, a long-focus macro camera, and a main camera.

Optionally, the electronic device 100 may further include a sensor module 105. The sensor module 105 may include but is not limited to a distance sensor 105A.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware. For example, when the electronic device 100 is a mobile phone or a tablet computer, the electronic device 100 may further include a touchscreen including a display and a touch sensor, and the like.

The processor 101 may include one or more processing units. The processor 101 may include an application processor (application processor, AP), a graphics processing unit (graphics processing unit, GPU), an image signal processor (image signal processor, ISP), a controller, a memory, a video codec, a digital signal processor (digital signal processor, DSP), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution.

In some embodiments, the processor 101 may include one or more interfaces. The interface may include a mobile industry processor interface (mobile industry processor interface, MIPI), a general purpose input/output (general-purpose input/output, GPIO) interface, and/or the like.

The MIPI interface may be configured to connect the processor 101 to peripheral components such as the display and the camera 104. The MIPI interface includes a camera serial interface (camera serial interface, CSI), a display serial interface (display serial interface, DSI), and the like. In some embodiments, the processor 101 communicates with the macro camera 104 through the CSI, to implement the macro shooting function of the electronic device 100. The processor 101 communicates with the display through the DSI, to implement a display function of the electronic device 100.

The GPIO interface may be configured by software. The GPIO interface may be configured as a control signal or a data signal. In some embodiments, the GPIO interface may be configured to connect the processor 101 to the macro camera 104, the display, the sensor module 105, and the like. The GPIO interface may alternatively be configured as an MIPI, or the like.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The electronic device 100 may implement an image shooting function by using the ISP, the macro camera 104, the video codec, the GPU, the display, the application processor, and the like.

The ISP is configured to process data fed back by the macro camera 104. For example, during image shooting, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of an image shooting scenario. In some embodiments, the ISP may be disposed in the macro camera 104.

The macro camera 104 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV

Optical zoom in this embodiment of this application may alternatively be implemented based on a plurality of fixed-focus camera. In this case, one or more camera modules in the macro camera 104 may include a plurality of fixed-focus camera. The digital signal processor is configured to process a digital signal, and may process another digital signal in addition to the digital image signal.

The memory 102 may be configured to store computer-executable program code, and the executable program code includes instructions. The processor 101 executes various function applications and data processing of the electronic device 100 by running the instructions stored in an internal memory. The memory 102 may include a program storage area and a data storage area. The program storage area may store an operating system, an application required by at least one function (for example, a sound playing function or an image playing function), and the like. The data storage area may store data (for example, audio data or an address book) created during use of the electronic device 100, and the like. In addition, the internal memory may include a highspeed random access memory, or may include a nonvolatile memory such as at least one magnetic disk storage device, a flash memory, or a universal flash storage (universal flash storage, UFS).

The distance sensor 105A is configured to measure a distance between the lens and a shooting subject. The electronic device 100 may measure a distance by using an infrared ranging sensor, a laser ranging sensor, or a time of flight camera (time of flight, TOF). In some embodiments, in an image shooting scenario, the electronic device 100 may perform distance measurement by using the distance sensor 105A to implement quick focusing. In this embodiment of this application, in a macro shooting scenario, the electronic device may alternatively perform distance measurement by using the distance sensor 105A, to implement functions of automatically entering the macro shooting mode and automatically exiting the macro shooting mode. The focus motor 103 is configured to control a focus module to move within a focus range to implement focusing. Usually, the electronic device 100 first performs zooming and then performs focusing. For example, in the macro shooting scenario, after entering the macro shooting mode, the electronic device 100 performs zooming according to a zoom ratio selected by a user, and then performs focusing after the zooming.

After the hardware architecture of the electronic device 100 is described, the following describes a software architecture of the electronic device 100 by using an example.

A software system of the electronic device 100 may use a layered architecture, an event-driven architecture, a microkernel architecture, a micro service architecture, or a cloud architecture. In embodiments of this application, an Android system with a layered architecture is used as an example to describe the software structure of the electronic device 100.

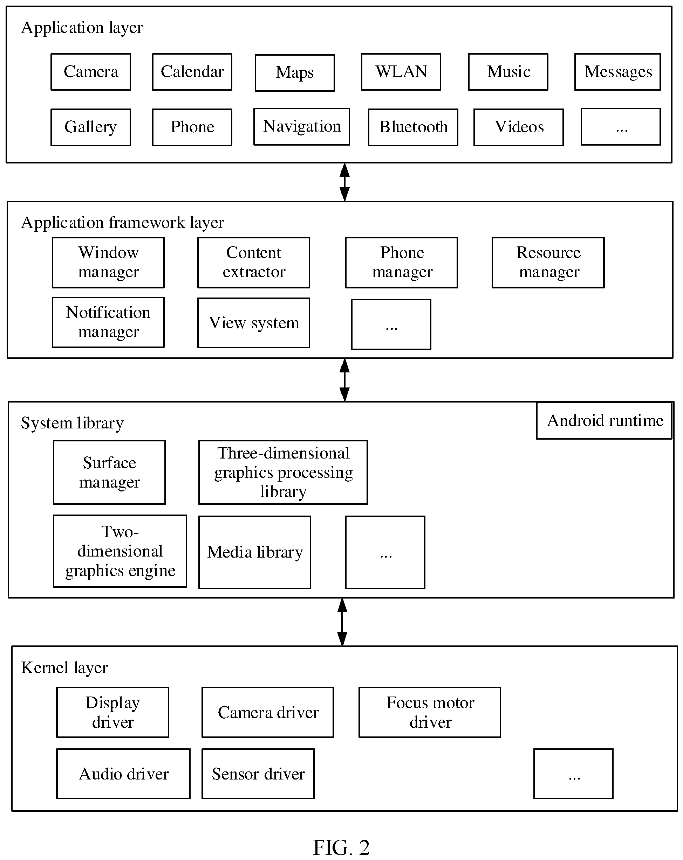

FIG. 2 is a block diagram of the software structure of the electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions. As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application program. The data may include a video, an image, audio, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The resource manager provides various resources such as a localized character string, an icon, an image, a layout file, and a video file for an application. The notification manager enables an application program to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime (Android runtime) includes a core library and a virtual machine. The Android runtime is responsible for scheduling and management of the Android system. The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), a 2D graphics engine (for example, SGL), and the like.

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG4, H.264, MP3, AAC, AMR, JPG, PNG, and the like.

The three-dimensional graphics processing library is configured to implement three-dimensional graphics drawing, image rendering, composition, layer processing, and the like. The 2D graphics engine is a drawing engine for 2D drawing. The kernel layer is a layer between hardware and software. The kernel layer includes at least a display driver, a camera driver, an audio driver, a sensor driver, and a focus motor driver.

The following describes an example of a working process of software and hardware of the electronic device 100 with reference to an image shooting scenario.

For example, when the touch sensor receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a tap operation, and a control corresponding to the tap operation is a control of an icon of a camera application is used. The camera application invokes an interface of the application framework layer to start the camera application, enables the camera driver by invoking the kernel layer, and captures a static image or a video through the camera 104.

After the hardware architecture and the software architecture of the electronic device 100 that may be related to are described, the following uses the electronic device 100 as an example to describe in detail the technical solutions provided in embodiments of this application.

In the macro shooting solution based on at least two macro cameras provided in embodiments of this application, the electronic device 100 may first enter a macro shooting mode, then obtain a current zoom ratio in a zoom process of the macro shooting mode, and determine a to-be-used macro camera according to the current zoom ratio, and whether to perform macro camera switching.

In some embodiments of this application, the electronic device 100 may enter the macro shooting mode in response to a user instruction, where the user instruction instructs the electronic device 100 to enter the macro shooting mode. That is, the user can manually enter the macro shooting mode.

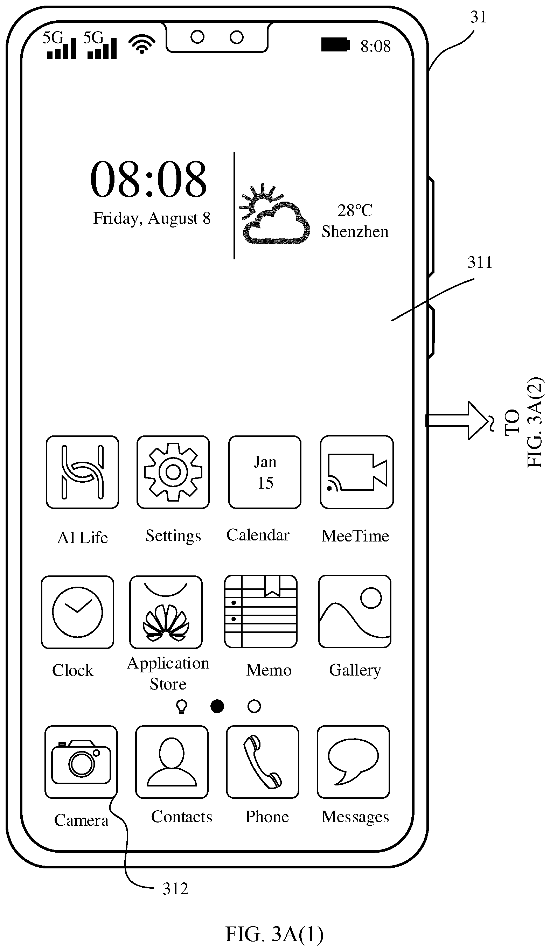

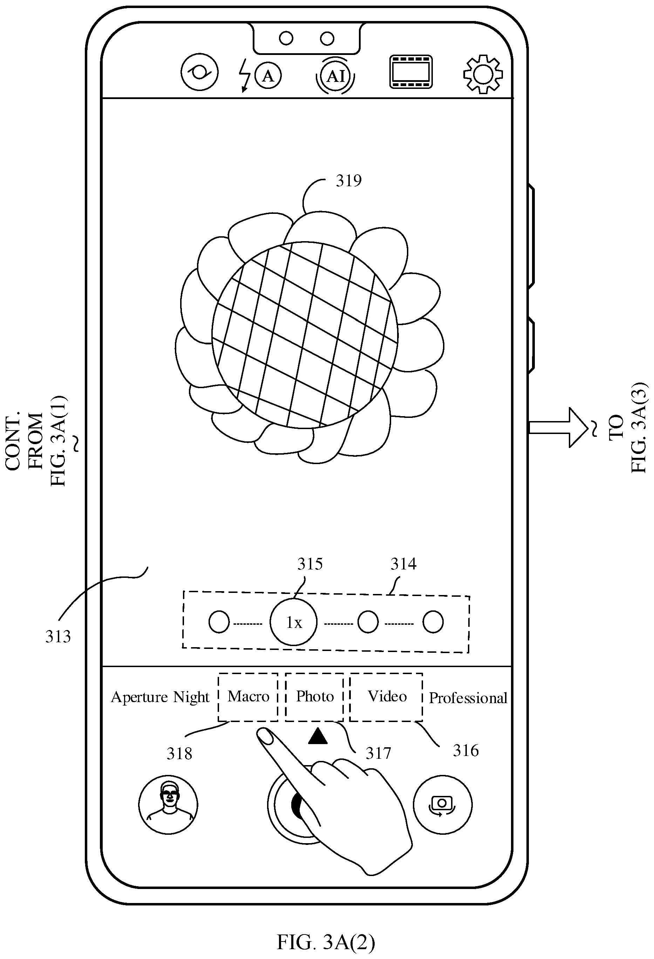

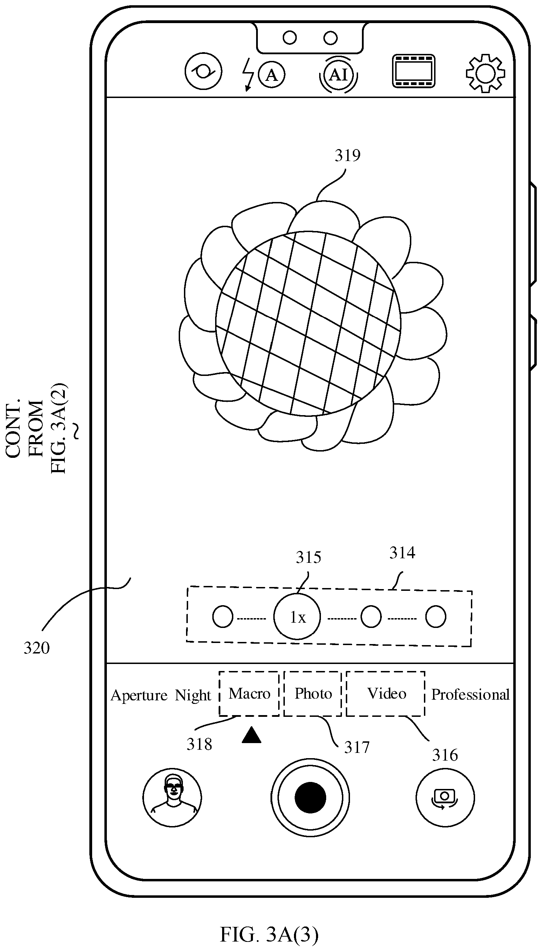

For example, refer to a schematic diagram of manually entering a macro shooting mode shown in FIG. 3A(1) to FIG. 3A(3). The electronic device 100 is specifically a mobile phone 31, and the mobile phone 31 includes a main camera, an ultra-wide-angle macro camera, and a long-focus macro camera. As shown in FIG. 3A(1) to FIG. 3A(3), a home screen 311 of the mobile phone 31 includes applications such as AI Life, Settings, Calendar, Gallery, and Camera 312. When the mobile phone 31 detects a tap operation performed by a user on Camera 312, the mobile phone 31 displays a preview interface 313 in response to the tap operation. In this case, an image captured by the main camera is displayed in the preview interface 313, and the image includes a shooting subject 319. The preview interface 313 includes a zoom bar 314 and a zoom control 315, and further includes controls of various shooting modes: an "Aperture" control, a "Night" control, a "Video" control 316, a "Photo" control 317, and a "Macro" control 318. The mobile phone 31 is currently in a photo mode.

The zoom bar 314 indicates that a current zoom ratio is 1x. The user may drag the zoom control 315 on the zoom bar 314 to change the zoom ratio. The zoom ratio is increased when the zoom control 315 is dragged leftward, and the zoom ratio is reduced when the zoom control 315 is dragged rightward.

The user may enter a corresponding shooting mode by tapping a shooting mode control. For example, if the user needs to enter a video recording mode, the user may tap the "Video" control 316 to enter the video recording mode.

To enter the macro shooting mode, the user may manually tap the "Macro" control 318. After the mobile phone 31 detects a tap operation on the "Macro" control 318, the mobile phone 31 enters the macro shooting mode in response to the tap operation, and displays a preview interface 320. In this case, a user instruction instructing the electronic device 100 to enter the macro shooting mode is a tap instruction for the "Macro" control 318.

Specifically, after detecting the tap operation on the "Macro" control 318, the mobile phone 31 switches from the current photo mode to the macro shooting mode, starts the ultra-wide-angle macro camera, obtains image data collected by using the ultra-wide-angle macro camera, and displays, in the preview interface 320, an image captured by the ultra-wide-angle macro camera. That is, after detecting the tap operation on the "Macro" control 318, the mobile phone 31 switches from the main camera to the ultra-wide-angle macro camera. In this case, when the macro shooting mode is enabled, the main camera is switched to the ultra-wide-angle macro camera by default. In some other embodiments, the main camera may alternatively be switched to the long-focus macro camera by default. That is, after the macro shooting mode is entered, an image captured by the long-focus macro camera is displayed in the preview interface 320.

When the main camera is switched to the ultra-wide-angle macro camera, a FOV of the image displayed in the preview interface 320 remains unchanged. Certainly, during camera switching, the FOV of the image displayed in the preview interface 320 may not need to remain unchanged. This is not limited herein.

In some embodiments of this application, the electronic device 100 may alternatively exit the macro shooting mode in response to a user instruction instructing to exit the macro shooting mode. That is, the user can manually exit the macro shooting mode.

FIG. 3A(1) to FIG. 3A(3) are used as an example. If the user needs to exit the macro shooting mode, the user may tap another shooting mode control to manually exit the macro shooting mode. For example, after entering the macro shooting mode, the mobile phone 31 detects a tap operation of tapping the "Video" control 316 by the user. In this case, in response to the tap operation on the "Video" control 316, the mobile phone 31 exits the macro shooting mode and enters the video recording mode. Certainly, the user may manually exit the camera application to manually exit the macro shooting mode. Alternatively, the mobile phone 31 may provide a control used to exit the macro shooting mode. When detecting a tap operation performed by the user on the control, the mobile phone 31 exits the macro shooting mode in response to the tap operation. A manner of manually exiting the macro shooting mode is not limited herein.

The electronic device 100 may manually enter the macro shooting mode and manually exit the macro shooting mode. In addition, in some other embodiments of this application, the electronic device 100 may alternatively automatically enter the macro shooting mode and automatically exit the macro shooting mode. In this case, when determining that a condition for automatically entering the macro shooting mode is met, the electronic device 100 automatically enters the macro shooting mode; and when determining that a condition for automatically exiting the macro shooting mode is met, the electronic device 100 automatically exits the macro shooting mode.

For example, the condition for automatically entering the macro shooting mode is: detecting that shooting distances of N consecutive frames of images are less than a first threshold; and the condition for automatically exiting the macro shooting mode is: detecting that shooting distances of M consecutive frames of images are greater than a second threshold. For example, N is 30 frames, and the first threshold is 10 cm; and M is 60 frames, and the second threshold is 50 cm.

In specific application, the electronic device 100 may perform distance measurement by using the distance sensor 105A or the TOF, to detect the shooting distance.

It should be noted that the condition for automatically entering the macro shooting mode and the condition for automatically exiting the macro shooting mode may be other, and this is not limited herein.

For example, to reduce a calculation amount, the electronic device 100 may detect a shooting distance of an image at an interval of a preset quantity of frames (for example, two frames), and when shooting distances detected in the N frames of images are all less than the first threshold, the electronic device 100 determines that the condition for automatically entering the macro shooting mode is met, and automatically enters the macro shooting mode. Likewise, the electronic device 100 may alternatively detect a shooting distance of an image at an interval of a preset quantity of frames (for example, three frames), and when shooting distances detected in the M frames of images are all greater than the second threshold, the electronic device 100 determines that the condition for automatically exiting the macro shooting mode is met, and automatically exits the macro shooting mode.

For another example, the condition for automatically entering the macro shooting mode is that shooting distances detected in a first time period are all less than a third threshold; and the condition for automatically exiting the macro shooting mode is that shooting distances detected in a second time period are all greater than a fourth threshold. The first time period, the second time period, the third threshold, and the fourth threshold may all be set based on an actual requirement.

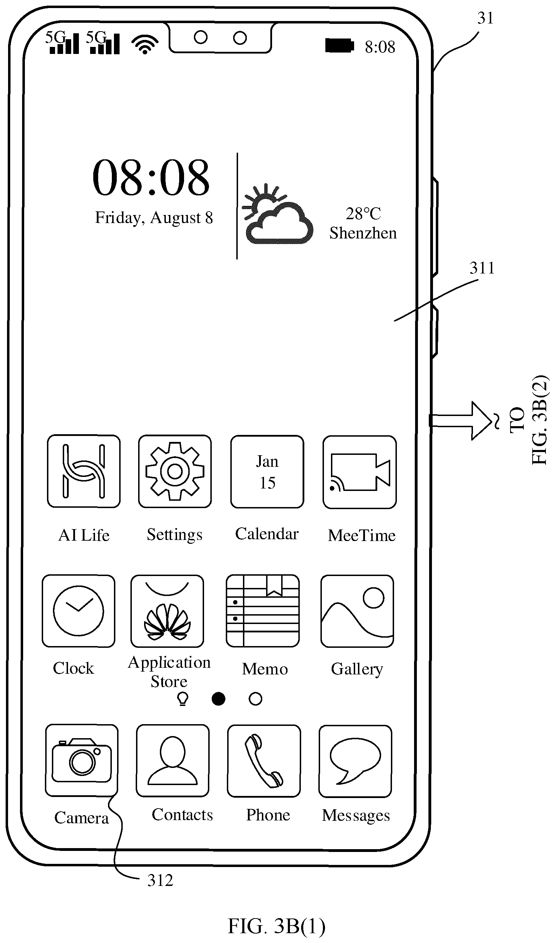

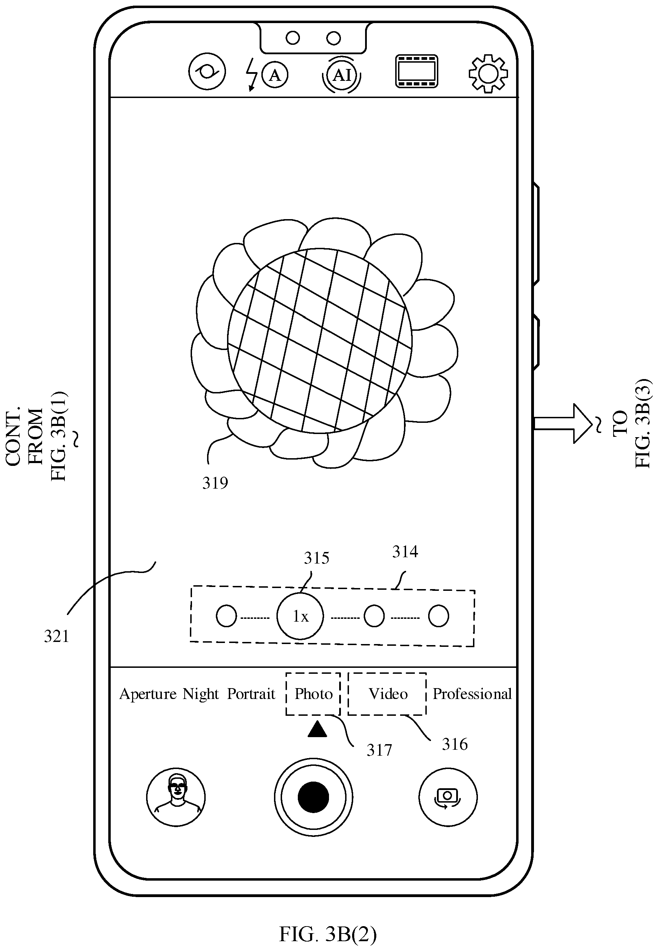

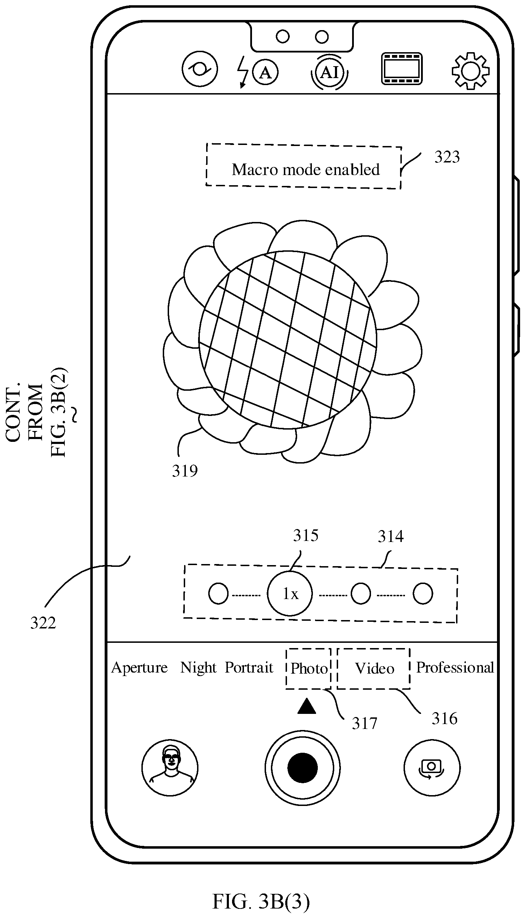

For example, refer to a schematic diagram of automatically entering the macro shooting mode shown in FIG. 3B(1) to FIG. 3B(3). When detecting a tap operation performed by the user on Camera 312, the mobile phone 31 displays a preview interface 321 in response to the tap operation. The image captured by the main camera is displayed in the preview interface 321, and the image includes the shooting subject 319. The mobile phone 31 is currently in the photo mode, that is, the preview interface 321 is a photo preview interface.

After entering a photo preview state, the mobile phone 31 detects a distance between the mobile phone 31 and the shooting subject 319, that is, the shooting distance, and determines whether the shooting distance is less than the first threshold. If it is detected that shooting distances of N consecutive frames of images captured by the main camera are all less than the first threshold, the mobile phone 31 determines that the condition for automatically entering the macro shooting mode is met, and automatically enters the macro shooting mode. After entering the macro shooting mode, the mobile phone 31 switches from the main camera to the ultra-wide-angle macro camera, and displays, in a preview interface 322, the image captured by the ultra-wide-angle macro camera. In addition, to prompt the user that the macro shooting mode is entered, the mobile phone 31 further displays prompt information 323 in the preview interface 322, where the prompt information 323 is specifically "Macro mode enabled", and is used to prompt the user that currently the macro shooting mode is automatically entered.

It may be understood that, in addition to the prompt information 323, another manner may be used to prompt the user that currently the macro shooting mode is automatically entered. For example, the mobile phone 31 plays a prompt voice "Macro mode enabled" by using a speaker. In addition, in addition to prompting the user, through the prompt operation, that currently the macro shooting mode is automatically entered, a prompt operation may be used to prompt the user how to operate in the macro shooting mode. For example, the mobile phone 31 may further display operation prompt information of the macro shooting mode in the preview interface 322. Certainly, the mobile phone 31 may not perform the prompt operation.

In addition, to reduce misoperations, after determining that the condition for automatically entering the macro shooting mode is met, the electronic device 100 may first perform the prompt operation to prompt the user whether to enter the macro shooting mode, and after receiving an instruction for confirming entering the macro shooting mode from the user, the electronic device 100 enters the macro shooting mode. For example, based on the scenario in FIG. 3B(1) to FIG. 3B(3), after determining that the condition for automatically entering the macro shooting mode is met, the mobile phone 31 pops up a prompt window in the preview interface 321, where the prompt window includes two option buttons "yes" and "no", and prompt information "Currently, it is detected that the condition is met. Enter the macro shooting mode?". When detecting a tap operation on the "yes" option button, the mobile phone 31 enters the macro shooting mode in response to the tap operation.

It should be noted that for a same part in FIG. 3A(1) to FIG. 3A(3) and FIG. 3B(1) to FIG. 3B(3), refer to the foregoing description. Details are not described herein again.

It should be further noted that in FIG. 3B(1) to FIG. 3B(3), the macro shooting mode is not set to a shooting mode parallel to the modes such as the photo mode and the video recording mode, but the macro shooting mode is set under the photo mode. In FIG. 3A(1) to FIG. 3A(3), the macro shooting mode is separately set, and the macro shooting mode is parallel to the modes such as the photo mode and the video recording mode. In specific implementation, both the two manners in FIG. 3A(1) to FIG. 3A(3) and FIG. 3B(1) to FIG. 3B(3) can be used, that is, the macro shooting function may be separately set to a shooting mode, or the macro shooting function may be set under another shooting mode, and this is not limited herein.

In the scenario in FIG. 3B(1) to FIG. 3B(3), after automatically entering the macro shooting mode, the mobile phone 31 continues to detect the shooting distance between the mobile phone 31 and the shooting subject 319 by using the distance sensor, the TOF, or the like, and determines whether the shooting distance is greater than the second threshold. If it is detected that shooting distances of M consecutive frames of images captured by the macro camera are all greater than the second threshold, the mobile phone 31 determines that the condition for automatically exiting the macro shooting mode is met, and automatically exits the macro shooting mode.

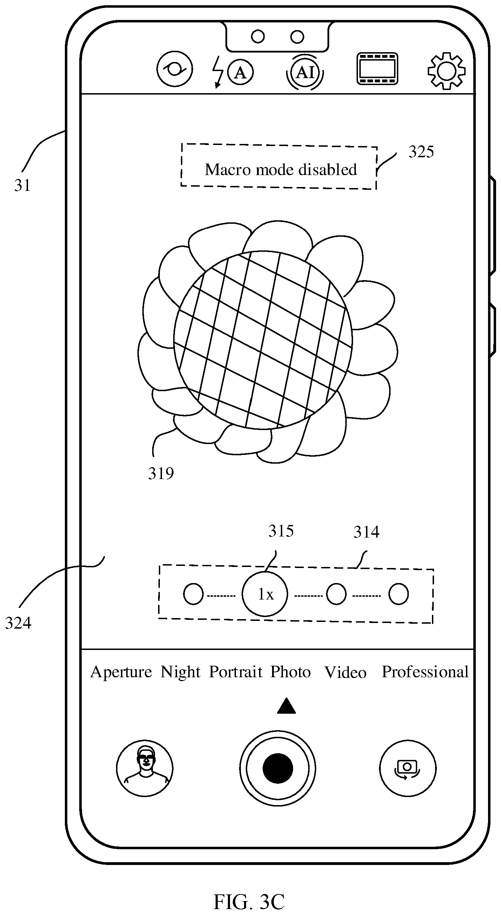

To improve user experience, the electronic device 100 may display corresponding prompt information in the preview interface when automatically exiting the macro shooting mode, to prompt the user that currently the macro shooting mode is exited. For example, refer to a schematic diagram of prompting exiting the macro shooting mode. Based on the scenario in FIG. 3B(1) to FIG. 3B(3), the mobile phone 31 is in the macro shooting mode. After determining that the condition for automatically exiting the macro shooting mode is met, the mobile phone 31 automatically exits the macro shooting mode, and displays prompt information 325 in a preview interface 324, to prompt the user that the macro shooting mode is currently disabled. The prompt information 325 is specifically "Macro mode disabled". For a same part in FIG. 3C, FIG. 3A(1) to FIG. 3A(3), and FIG. 3B(1) to FIG. 3B(3), refer to the foregoing description. Details are not described herein again.

In this embodiment of this application, when exiting the macro shooting mode, the electronic device 100 may determine, based on a current zoom ratio, a camera focal length range used after the macro shooting mode is exited. For example, the electronic device 100 includes a main camera, a long-focus macro camera, and an ultra-wide-angle macro camera. When the electronic device 100 exits the macro shooting mode, if the current zoom ratio is in a long-focus focal length range, the electronic device 100 returns to normal long-focus preview and focuses, that is, displays a focused long-focus image in the preview interface; if the current zoom ratio is in a wide-angle focal length range greater than 1x, the electronic device 100 returns to main-camera preview, that is, displays an image captured by the main camera in the preview interface; or if the current zoom ratio is within a wide-angle focal length range less than 1x, the electronic device 100 returns to a wide-angle focal length range, that is, displays an image captured by the ultra-wide-angle camera in the preview interface. It may be understood that the long-focus macro camera is a long-focus camera having a macro shooting capability, and the ultra-wide-angle macro camera is an ultra-wide-angle camera having the macro shooting capability.

Certainly, when exiting the macro shooting mode, the electronic device 100 may alternatively return to a default focal length range and a default macro camera. For example, it is preset that, when the macro shooting mode is exited, the default focal length range is a focal length range of the main camera, and the default macro camera is the main camera. That is, no matter which focal length range the current zoom ratio is in, when the macro shooting mode is exited, the current zoom ratio is automatically switched to the focal length range of the main camera, and the camera is switched to the main camera.

It can be learned from the foregoing that, the electronic device 100 may manually enter and exit the macro shooting mode, or may automatically enter and exit the macro shooting mode. In comparison, when the electronic device 100 determines, based on the shooting distance, whether to automatically enter and exit the macro shooting mode, an operation is more convenient, and the user has better macro shooting experience. Further, when the macro shooting mode is entered and/or exited, the user is prompted, by using prompt information, that the macro shooting mode is entered and that the macro shooting mode is exited, so that the user has better macro shooting experience.

It may be understood that in some other embodiments of embodiments of this application, the electronic device 100 may be in the macro shooting mode by default, that is, the electronic device 100 may not need to enter the macro shooting mode from another shooting mode.

In this embodiment of this application, after entering the macro shooting mode, the electronic device 100 obtains a current zoom ratio, and determines, based on the focal length range of the macro camera, whether the current zoom ratio reaches the camera switching ratio. If the current zoom ratio reaches the camera switching ratio, macro camera switching is performed, to implement macro shooting with a wider focal length range.

In a zoom process of the macro shooting mode, the zoom ratio may be obtained through human-machine interaction, that is, the zoom ratio is input by the user, or the zoom ratio may be determined by the electronic device 100 independently.

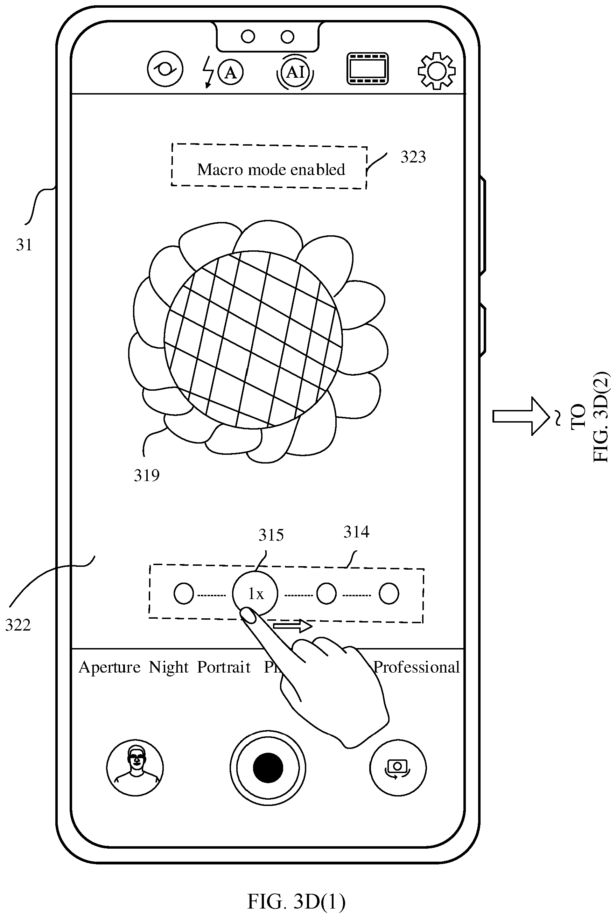

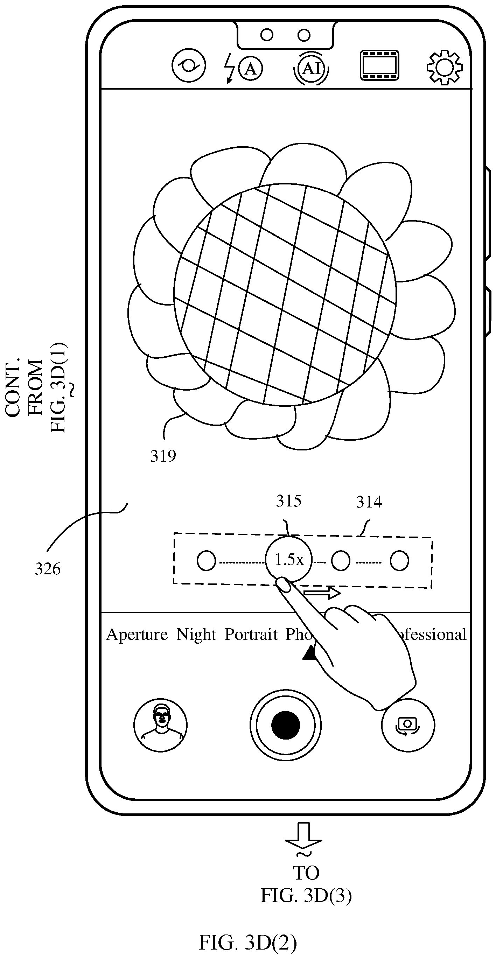

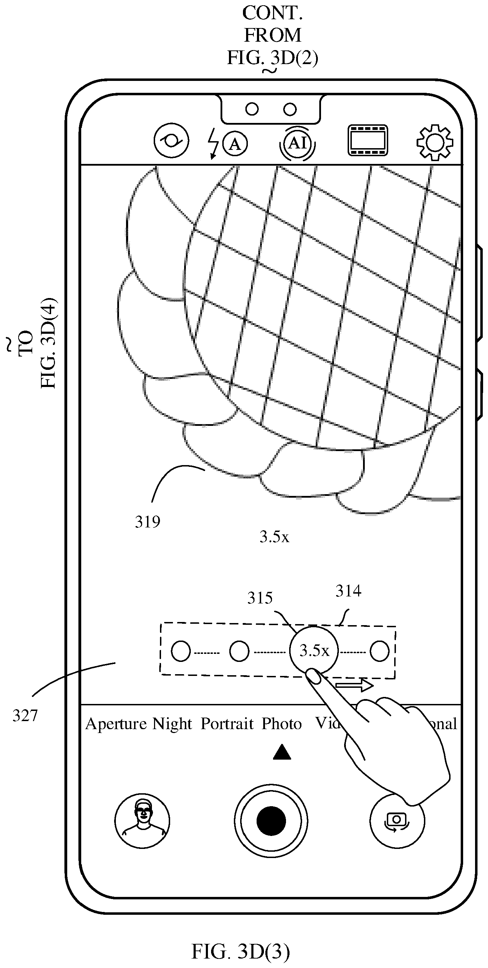

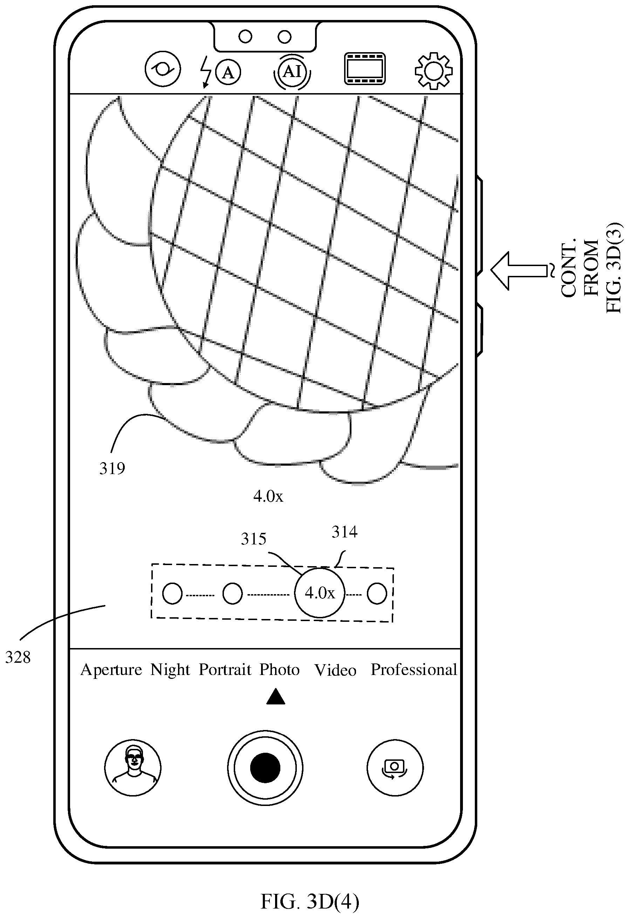

For example, refer to a schematic diagram of the zoom process of the macro shooting mode shown in FIG. 3D(1) to FIG. 3D(4). Based on the scenario in FIG. 3B(1) to FIG. 3B(3), after determining that the condition for automatically entering the macro shooting mode is met, the mobile phone 31 automatically enters the macro shooting mode, displays, in the preview interface 322, the image captured by the ultra-wide-angle macro camera, and further displays the prompt information 323 in the preview interface 322, to prompt the user that the macro shooting mode is enabled.

After entering the macro shooting mode, the user may change the zoom ratio by dragging the zoom control 315 on the zoom bar 314. In the zoom process, if a current zoom ratio reaches the camera switching ratio, a photo preview image of the mobile phone 31 is switched from the ultra-wide-angle macro camera to the long-focus macro camera, or is switched from the long-focus macro camera to the ultra-wide-angle macro camera.

For ease of description, unless otherwise mentioned, both the ultra-wide-angle macro camera and the long-focus macro camera mentioned below are fixed-focus cameras, and a zoom ratio range covered by the ultra-wide-angle macro camera is 0.5x to 3.5x, where the range includes 0.5x and does not include 3.5x; and a zoom ratio range covered by the long-focus macro camera is 3.5x to 15x, where the range includes 3.5x. A camera switching ratio is 3.5x. Certainly, in specific application, the zoom ratio ranges supported by the ultra-wide-angle macro camera and the long-focus macro camera are not limited to the foregoing mentioned range.

As shown in FIG. 3D(1) to FIG. 3D(4), the current zoom ratio displayed in the preview interface 322 is 1x. The user drags the zoom control 315 rightward to increase the zoom ratio to 1.5x. The mobile phone 31 learns, in response to the drag operation of the user on the zoom control 315, that a current zoom ratio is 1.5x, and determines that the current zoom ratio 1.5x does not reach the camera switching ratio 3.5x. In addition, the current zoom ratio 1.5x falls in the focal length range of the ultra-wide-angle macro camera. Therefore, in a process of increasing the zoom ratio from 1x to 1.5x, the mobile phone 31 does not need to perform macro camera switching, and still uses the ultra-wide-angle macro camera to perform macro shooting. Specifically, the mobile phone 31 performs digital zoom cropping on the image captured by the ultra-wide-angle macro camera, to obtain a to-be-displayed image, and displays the to-be-displayed image in a preview interface 326, to display, in the preview interface 326, the image captured by the ultra-wide-angle macro camera.

After increasing the zoom ratio to 1.5x, the user continues to drag the zoom control 315 rightward to increase the zoom ratio from 1.5x to 3.5x. The mobile phone 31 learns, in response to the drag operation of the user on the zoom control 315, that the current zoom ratio is 3.5x. The mobile phone 31 determines that the current zoom ratio 3.5x reaches the camera switching ratio, and a macro camera switching relay needs to be performed. In this case, the mobile phone 31 switches the ultra-wide-angle macro camera to the long-focus macro camera, and uses the long-focus macro camera to perform macro shooting. Specifically, the mobile phone 31 displays, in a preview interface 327 based on the current zoom ratio, the image captured by the long-focus macro camera. In this way, when the zoom ratio reaches the camera switching ratio, the image displayed in the preview interface of the mobile phone 31 is switched from the ultra-wide-angle macro camera to the long-focus macro camera.

After increasing the zoom ratio to 3.5x, the user continues to drag the zoom control 315 rightward to increase the zoom ratio from 3.5x to 4x. The mobile phone 31 learns, in response to the drag operation of the user on the zoom control 315, that the current zoom ratio is 4.0x. The mobile phone 31 determines that the current zoom ratio 4.0x does not reach the camera switching ratio, and that no macro camera switching relay is needed, and continues to perform macro shooting by using the long-focus macro camera. Specifically, the mobile phone 31 performs, based on the current zoom ratio, digital zoom cropping on the image captured by the long-focus macro camera, to obtain a to-be-displayed image, and displays the to-be-displayed image in a preview interface 328, to display, in the preview interface 328, the image captured by the long-focus macro camera. The current zoom ratio is further displayed in the preview interface 328 and the preview interface 327.

It can be learned, by comparing the preview interface 326, the preview interface 327, the preview interface 328, and the preview interface 327, that a ratio of the shooting subject 319 is increasing.

In the scenario in FIG. 3D(1) to FIG. 3D(4), in the macro shooting mode, the mobile phone 31 implements mobile phone macro shooting from an ultra-wide-angle focal length range to a long-focus focal length range by using a switching relay of the ultra-wide-angle macro camera and the long-focus macro camera.

In this embodiment of this application, in addition to camera switching by dragging the zoom control 315, camera switching may be further performed by using a shortcut control.

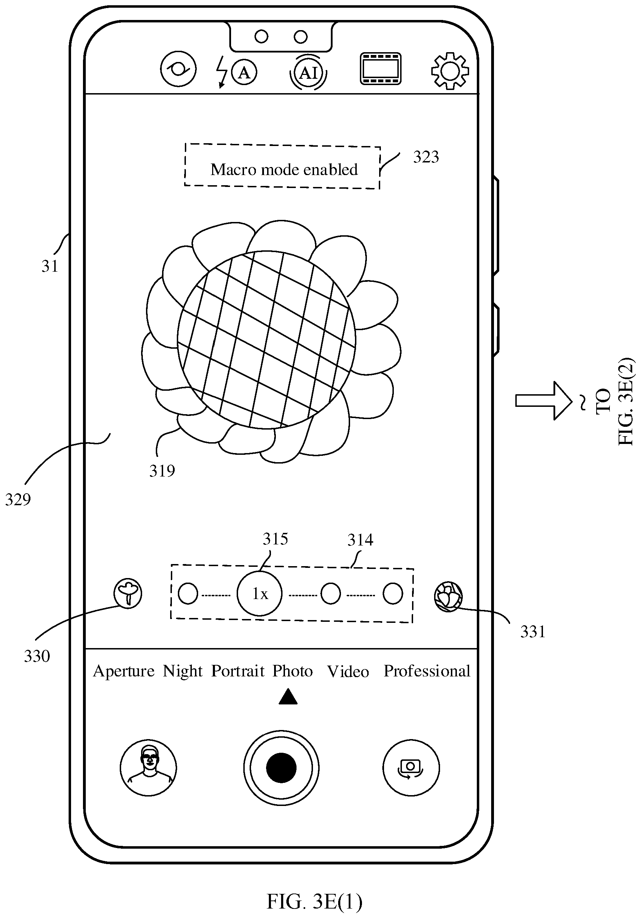

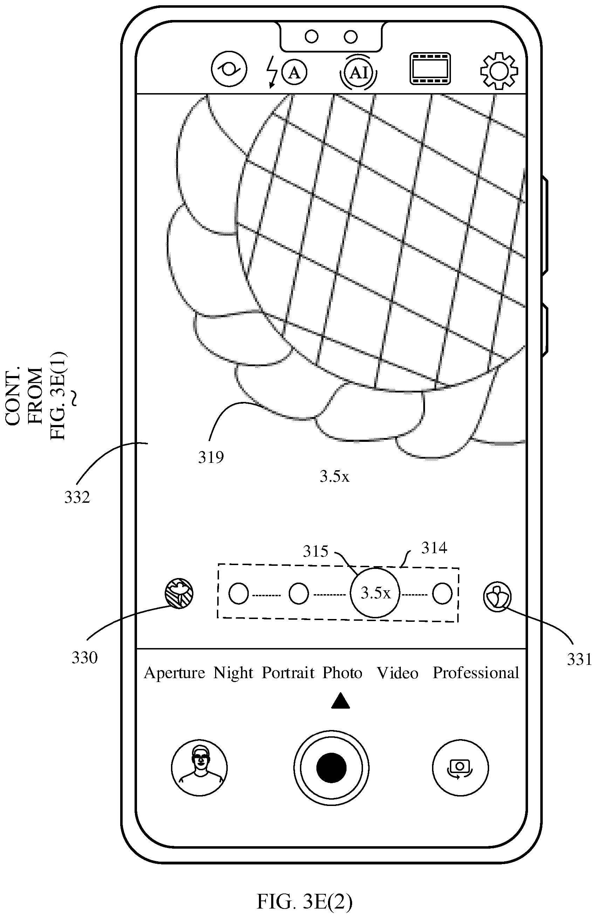

For example, refer to a schematic diagram of a shortcut control shown in FIG. 3E(1) and FIG. 3E(2). Based on the scenario in FIG. 3B(1) to FIG. 3B(3), after the mobile phone 31 automatically enters the macro shooting mode, the mobile phone 31 displays prompt information 323 in a preview interface 329, switches the main camera to the ultra-wide-angle macro camera by default, and uses the ultra-wide-angle macro camera to perform macro shooting, that is, displays the image captured by the ultra-wide-angle macro camera in the preview interface 329.

The preview interface 329 further includes an ultra-wide-angle macro shortcut control 330 and a long-focus macro shortcut control 331. If the user needs to enter an ultra-wide-angle macro mode, the user may tap the ultra-wide-angle macro shortcut control 330; and if the user needs to enter a long-focus macro mode, the user may tap the long-focus macro shortcut control 331. In the ultra-wide-angle macro mode, the ultra-wide-angle macro camera is used for macro shooting. In the long-focus macro mode, the long-focus macro camera is used for macro shooting.

As shown in FIG. 3E(1) and FIG. 3E(2), after determining that the condition for automatically entering the macro shooting mode is met, the mobile phone 31 automatically enters the macro shooting mode, and when automatically entering the macro shooting mode, enters the ultra-wide-angle macro mode by default. In this case, the ultra-wide-angle macro shortcut control 330 in the preview interface 329 is in an enabled state, and the long-focus macro shortcut control 331 is in a disabled state.

It should be noted that, to facilitate distinguishing between an enabled state and a disabled state of a shortcut control, in FIG. 3E(1) and FIG. 3E(2), a shadow is attached to the shortcut control to indicate the disabled state of the shortcut control, and no shadow is attached to the shortcut control to indicate the enabled state of the shortcut control. In specific application, the enabled state and the disabled state may alternatively be distinguished in another manner. For example, different colors may be used to represent the enabled state and the disabled state respectively.

In addition, a specific representation form of the shortcut control is not limited to that shown in FIG. 3D(1) to FIG. 3D(4), and this is not limited herein. In addition, a display location of the shortcut control is not limited to that shown in FIG. 3D(1) to FIG. 3D(4). For example, the long-focus macro shortcut control may be displayed on the zoom bar 314, and is located at a location of a zoom ratio 3.5x. This is not limited herein.

After the mobile phone 31 enters the ultra-wide-angle macro mode by default, the user may tap the long-focus macro shortcut control 331 to switch from the ultra-wide-angle macro mode to the long-focus macro mode. As shown in FIG. 3E(1) and FIG. 3E(2), after detecting a tap operation on the long-focus macro shortcut control 331, the mobile phone 31 increases the zoom ratio from 1x to 3.5x in response to the tap operation, switches the ultra-wide-angle macro camera to the long-focus macro camera, and uses the long-focus macro camera to perform macro shooting, that is, displays, in a preview interface 332, the image captured by the long-focus macro camera. The ultra-wide-angle macro shortcut control 330 in the preview interface 332 is in the disabled state, and the long-focus macro shortcut control 331 is in the enabled state.

After the mobile phone 31 switches to the long-focus macro mode, if the user needs to switch to the ultra-wide-angle macro mode, the user may further tap the ultra-wide-angle macro shortcut control 330 to quickly switch from the long-focus macro mode to the ultra-wide-angle macro mode.

In the scenario in FIG. 3E(1) and FIG. 3E(2), in addition to automatically exiting the macro shooting mode based on the shooting distance, the mobile phone 31 may further exit the macro shooting mode by using the ultra-wide-angle macro shortcut control 330. For example, the mobile phone 31 is in the ultra-wide-angle macro mode, that is, the ultra-wide-angle macro shortcut control 330 is in the enabled state, and the long-focus macro shortcut control 331 is in the disabled state. The user may tap the ultra-wide-angle macro shortcut control 330 to exit the macro shooting mode.

It may be understood that, in the scenario in FIG. 3E(1) and FIG. 3E(2), after the mobile phone 31 enters the macro shooting mode, the user may further change the zoom ratio by dragging the zoom control 315. When the user drags the zoom control 315 to increase the zoom ratio to 3.5x, the mobile phone 31 determines that the current zoom ratio 3.5x reaches the camera switching ratio, switches the ultra-wide-angle macro camera to the long-focus macro camera, uses the long-focus macro camera to perform macro shooting, displays the long-focus macro shortcut control 331 in the enabled state, and displays the ultra-wide-angle macro shortcut control 330 in the disabled state.

It should be noted that, compared with a manner in which macro camera switching is implemented by dragging the zoom control on the zoom bar, a manner in which macro camera switching is implemented by using the shortcut control is more convenient to operate, and the user has better macro shooting experience.

It should be noted that when the electronic device 100 includes at least three macro cameras, a zoom process of the macro shooting mode is similar to the zoom process of two macro cameras in the foregoing example. In other words, when a zoom ratio reaches the camera switching ratio, a macro camera switching relay is performed; or when a zoom ratio does not reach the camera switching ratio, a macro camera whose focal length range corresponds to the zoom ratio is used to perform macro shooting.

It can be learned from the foregoing that, in the macro shooting solution based on at least two macro cameras provided in this embodiment of this application, in the zoom process of the macro shooting mode, the switching relay of the at least two macro cameras is used to implement macro shooting with a wider focal length range, and an effect of macro shooting is better.

It can be learned based on the foregoing embodiment that, in the macro shooting solution based on at least two macro cameras, the electronic device 100 needs to perform a macro camera switching relay. However, field-of-view centers of the macro cameras are different, and consequently, an offset exists between image centers of the macro cameras. Therefore, when the macro camera is switched in the zoom process, image transition is unnatural and not smooth, and user experience in macro shooting is reduced.

To improve an image transition effect during macro camera switching, obtain more smooth and natural image transition during macro camera switching, and improve user experience in macro shooting, an embodiment of this application provides an image center alignment solution. In the image center alignment solution, in a zoom process of a macro shooting mode, image offset cropping is performed on an image captured by a first target macro camera based on an image offset value, to obtain a cropped image, and the cropped image is used as a to-be-displayed image. In addition, a value of an image offset between an image center of the first target macro camera and an image center of a second target macro camera is calculated based on the cropped image, and offset value updating is performed based on the image offset value. In this way, image offset cropping is performed by using the image offset value, so that a center of the cropped image is gradually closer to a center of an image captured by the second target macro camera in the zoom process. When the first target macro camera is switched to the second target macro camera, a field-of-view center of the displayed image remains unchanged, and image transition is more smooth and natural.

For ease of description, two macro cameras involved in a macro camera switching process are defined as the first target macro camera and the second target macro camera. The first target macro camera is the macro camera whose focal length range corresponds to the current zoom ratio, that is, a macro camera that is currently in use. The second target macro camera is a macro camera that needs to be switched to, that is, the first target macro camera needs to be switched to the second target macro camera. Usually, a focal length range of the second target macro camera is adjacent to the focal length range of the first target macro camera. The focal length range of the first target macro camera is less than the focal length range of the second target macro camera.

After entering the macro shooting mode, the electronic device 100 enables the first target macro camera and the second target macro camera, and obtains images captured by using the first target macro camera and the second target macro camera.

In an initial phase, an image offset value is an initial image offset value, and the initial image offset value is pre-calibrated. The electronic device 100 performs, based on the initial image offset value, image offset cropping on the image captured by the first target macro camera, to obtain a cropped image; uses the cropped image as the to-be-displayed image, that is, displays the cropped image in a preview interface, and performs image feature matching based on the cropped image and the image captured by the second target macro camera, to obtain an image feature matching result; and then determines an image offset value of a current frame of image based on the image feature matching result, and updates the image offset value based on the image offset value of the current frame of image. The current frame of image is the image captured by the first target macro camera. Updating the offset value means to use an image offset value obtained through calculation as a new image offset value.

After the image offset value is updated, the image offset value is the image offset value updated last time. When the zoom ratio changes, the electronic device 100 performs, based on the updated image offset value, image offset cropping on the image captured by the first target macro camera, to obtain a cropped image; uses the cropped image as the to-be-displayed image, that is, displays the cropped image in the preview interface, performs image feature matching based on the cropped image and the image captured by the second target macro camera, and then determines an image offset value of a current frame of image based on an image feature matching result; and then performs image offset value updating based on the image offset value of the current frame of image. This cycle is repeated until the zoom ratio reaches a camera switching ratio, and the to-be-displayed image is replaced with the image captured by the second target macro camera from the cropped image.

For example, in the zoom process of macro shooting, for the $N^{th}$ frame of image of the first target macro camera, image offset cropping is performed on the $N^{th}$ frame of image based on an image offset value updated last time, to obtain a to-be-displayed image corresponding to the $N^{th}$ frame of image. In addition, image feature matching is performed based on the to-be-displayed image corresponding to the $N^{th}$ frame of image and the image captured by the second target macro camera, to calculate an image offset value corresponding to the $N^{th}$ frame of image, and the image offset value is updated to the image offset value corresponding to the $N^{th}$ frame of image.

It is assumed that image offset cropping is performed on each frame of image, and for the $N^{th}$ frame of image, an image offset value updated last time is an image offset value corresponding to the $(N-1)^{th}$ frame of image. At the $(N+1)^{th}$ frame, image offset cropping is performed on the $(N+1)^{th}$ frame of image based on the image offset value corresponding to the $N^{th}$ frame of image, to obtain a to-be-displayed image corresponding to the $(N+1)^{th}$ frame of image. In addition, image feature matching is performed based on the to-be-displayed image corresponding to the $(N+1)^{th}$ frame of image and the image captured by the second target macro camera, to calculate an image offset value corresponding to the $(N+1)^{th}$ frame of image, and the image offset value is updated to the image offset value corresponding to the $(N+1)^{th}$ frame of image. Certainly, image offset cropping does not need to be performed on each frame of image.

An image feature matching manner may be but is not limited to a method such as scale-invariant feature transform (scale-invariant feature transform, SIFT), Fast Library for Approximate Nearest Neighbors (Fast Library for Approximate Nearest Neighbors, FLANN), or ORB (Oriented Fast and Rotated Brief). The image feature matching manner is not limited herein.

In an image feature matching process, to reduce a calculation amount, down-sampling may be performed on the cropped image and the image captured by the second macro camera, and then image feature matching is performed by using a down-sampled zoomed-out image.

For example, an image offset value of a current frame of image is calculated by using the following formula 1:

$$offset_{\text{cur}} = \frac{zoom_{cur} - zoom_{pre}}{zoom_{end} - zoom_{pre}} * (offset - offset_{pre}) + offset_{pre} \quad (1)$$

*offset* represents a value of an offset from the field-of-view center of the first target macro camera to the field-of-view center of the second target macro camera, and an initial value of the offset value is obtained by using pre-calibrated data, and is to be updated in real time to a value calculated by using an image feature matching algorithm. *offset$_{pre}$* represents an image offset value of a previous frame of image, and *offset$_{\text{cur}}$* represents the image offset value of the current frame of image. *zoom$_{pre}$* represents a zoom ratio of the previous frame of image. *zoom$_{cur}$* represents a zoom ratio of the current frame of image. *zoom$_{end}$* represents a zoom ratio obtained when image offset ends, and needs to be less than or equal to a switching ratio of the first target macro camera and the second target macro camera.

When *zoom$_{cur}$*=*zoom$_{pre}$*=*zoom$_{start}$*, *offset$_{pre}$* = 0 , where *offset* is a pre-calibrated image offset value. *zoom$_{start}$* represents a zoom ratio obtained when image offset starts. *zoom$_{start}$* and *zoom$_{end}$* are preset values. *zoom$_{start}$* is greater than or equal to a minimum zoom ratio of the first target macro camera, and is less than *zoom$_{end}$*. When the zoom ratio is greater than *zoom$_{end}$*, the image offset value is *offset*.

It can be learned from the foregoing formula that, when the zoom ratio does not change, that is, *zoom$_{cur}$*=*zoom$_{pre}$*, *offset$_{\text{cur}}$* = *offset$_{pre}$*, that is, *offset$_{\text{cur}}$* remains unchanged. In this way, to-be-displayed image offset caused by an error of *offset* obtained through image feature matching can be avoided.

When the zoom ratio increases, *offset* increases linearly. When *zoom$_{cur}$* ≥ *zoom$_{end}$*, *offset$_{\text{cur}}$* = *offset*. In this case, when the first target macro camera is switched to the second target macro camera, a field-of-view center of the to-be-displayed image may remain unchanged, so that image transition during camera switching is more smooth and natural.

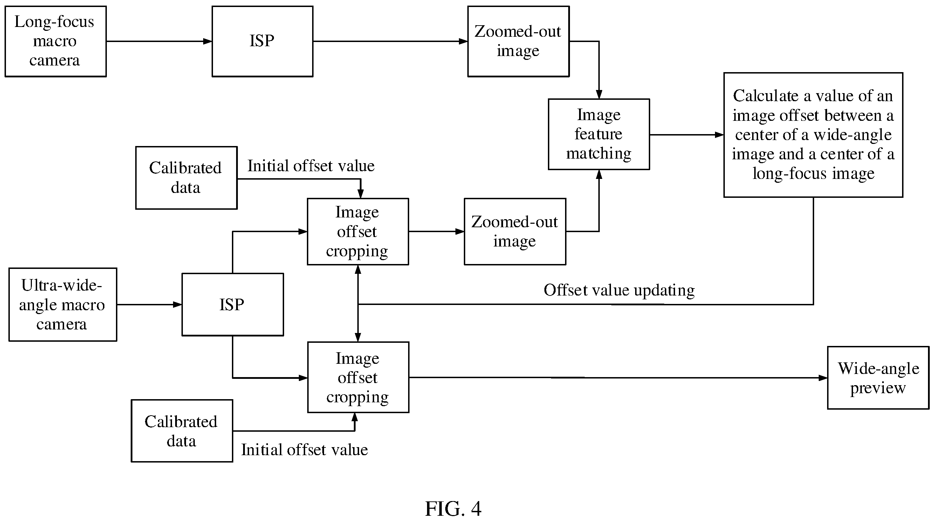

To better describe the image center alignment solution, the following describes the solution with reference to schematic flowcharts of ultra-wide-angle preview shown in FIG. 3D(1) to FIG. 3D(4) and FIG. 4.

As shown in FIG. 3D(1) to FIG. 3D(4) and FIG. 4, the electronic device 100 is specifically the mobile phone 31, and the mobile phone 31 includes a main camera, a long-focus macro camera, and an ultra-wide-angle macro camera. In this case, the first target macro camera is the ultra-wide-angle macro camera with a focal length range of 0.5x to 3.5x; and the second target macro camera is the long-focus macro camera with a focal length range of 3.5x to 15x. A camera switching ratio is 3.5x. *zoom$_{start}$* is 1x and *zoom$_{end}$* is 3.5x.

In the photo preview state, if the mobile phone 31 detects that shooting distances of N consecutive frames of images are all less than a first threshold, it is determined that the condition for automatically entering the macro shooting mode is met, and the mobile phone 31 automatically enters the macro shooting mode, enables the long-focus macro camera and the ultra-wide-angle macro camera, captures a long-focus image by using the long-focus macro camera, and captures a wide-angle image by using the ultra-wide-angle macro camera.

When the macro shooting mode is entered, the zoom ratio is 1x, that is, *zoom$_{cur}$*=*zoom$_{pre}$*=*zoom$_{start}$* =1, and *offset$_{pre}$* =0, where *offset* is a pre-calibrated image offset value.

When the zoom ratio is 1x, the image offset value is an initial offset value. After the long-focus image is processed by the ISP, a down-sampled long-focus zoomed-out image is output. When the wide-angle image is processed by the ISP module, the ISP module performs image offset cropping based on the zoom ratio and the image offset value to obtain a cropped image. In this case, image offset cropping is performed on the wide-angle image based on the initial offset value to obtain the cropped image, and the cropped image is used as a wide-angle preview image whose zoom ratio is 1x, that is, the cropped image is displayed in the preview interface 322. In addition, the mobile phone 31 further performs down-sampling processing on the cropped image to obtain a wide-angle zoomed-out image, performs image feature matching on the long-focus zoomed-out image and the wide-angle zoomed-out image, calculates a value of an image offset between a center of the long-focus image and a center of the wide-angle image based on the image feature matching, and then performs offset value updating based on the image offset value.

In a process in which the user drags the zoom control 315 to zoom from 1x to 3.5x, the mobile phone 31 performs the procedure in FIG. 4 for each frame of image.

When a zoom ratio of a current frame of image is 1.5x, the mobile phone 31 performs down-sampling on the long-focus image by using the ISP, to obtain a long-focus zoomed-out image; performs image offset cropping on the wide-angle image based on an updated image offset value, to obtain a cropped image, and displays the cropped image in the preview interface 326; further performs down-sampling on the cropped image, to obtain a wide-angle zoomed-out image; and then performs image feature matching on the wide-angle zoomed-out image and the long-focus zoomed-out image, calculates an image offset value of the current frame of image based on an image feature matching result and the current zoom ratio by using the formula 1, and performs offset value updating based on the image offset value of the current frame of image.

When a zoom ratio of a current frame of image is 3.5x, the mobile phone 31 determines that the current zoom ratio reaches the camera switching ratio, and uses the long-focus image as the to-be-displayed image, that is, displays the long-focus image in the preview interface 327, to switch the image of the preview interface from the ultra-wide-angle macro camera to the long-focus macro camera.

In the foregoing scenario, in the zoom process of the macro shooting mode, during ultra-wide-angle preview, offset cropping is performed on the wide-angle image based on the image offset value, to perform registration offset on the wide-angle image towards a long-focus FOV through FOV offset cropping, so that the long-focus FOV is located in an FOV center obtained after ultra-wide-angle cropping. In this way, when the wide-angle focal length range is switched to the long-focus focal length range, image transition is smoother and more natural, and the user has better macro shooting experience.

It should be noted that, in some other embodiments of this application, the electronic device 100 may not calculate an image offset value of a current frame of image in the zoom process of the macro shooting mode, and does not need to perform image offset cropping based on the image offset value. In this case, the electronic device 100 may directly use a full FOV image or a partial FOV image of the current macro camera as the to-be-displayed image.

When the electronic device 100 is in the macro shooting mode, a shooting distance between the camera and the shooting subject is close. When the zoom ratio is large or is in a high focal length range, a preview FOV is small. As a result, an observation field of view of the user is easily blocked by a screen of the electronic device 100, and the shooting subject is easily lost when the electronic device 100 shakes. Consequently, interaction and image composition of macro shooting are difficult, affecting user experience.

For the difficulty in interaction and image composition during macro shooting, in this embodiment of this application, an image navigation image is displayed on a preview image in a superimposed manner in the macro shooting mode, and an FOV of the image navigation image is greater than an FOV of the preview image. In this way, an image navigation image with a larger FOV is used to help the user find a macro shooting subject and perform image composition adjustment, so that user interaction and image composition are more convenient, and macro shooting experience is increased.

In some embodiments of this application, the image navigation image and the preview image may be images captured by a same macro camera. In this case, the electronic device 100 may include at least one macro camera. The electronic device 100 may use a full FOV image captured by the macro camera as the image navigation image, and use a part of the FOV image cropped from the full FOV image as the preview image, so that the FOV of the image navigation image is greater than the FOV of the preview image. Certainly, the electronic device 100 may alternatively use a partial FOV image captured by the macro camera as the image navigation image, provided that a field of view of a partial FOV image corresponding to the navigation image is greater than a field of view of a partial FOV image corresponding to the preview image.

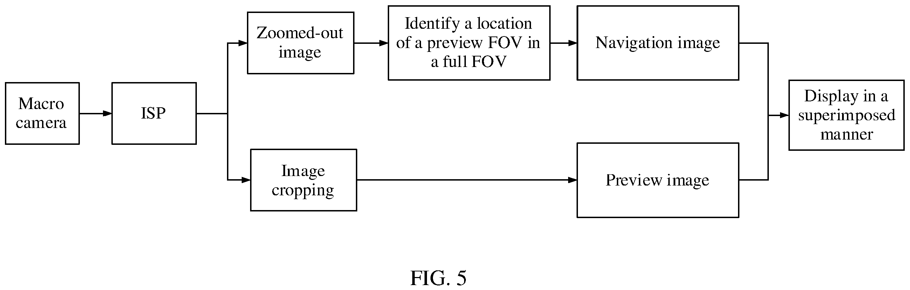

For example, refer to a schematic flowchart of image navigation of a single macro camera shown in FIG. 5. After entering the macro shooting mode, the electronic device 100 enables a macro camera, and obtains an image captured by the macro camera; performs image cropping on a full FOV image captured by the macro camera by using an ISP, to crop a partial FOV image from the full FOV image, and uses the cropped partial FOV image as the preview image; and further performs down-sampling on the full FOV image captured by the macro camera by using the ISP, to obtain a zoomed-out image output by the ISP, and identifies a location of the partial FOV image in the zoomed-out image based on a location of the partial FOV image in the full FOV image. The location of the partial FOV image in the full FOV image may be obtained by using an image cropping process. The identified zoomed-out image is used as the navigation image. Finally, the preview image and the navigation image are displayed in a superimposed manner.

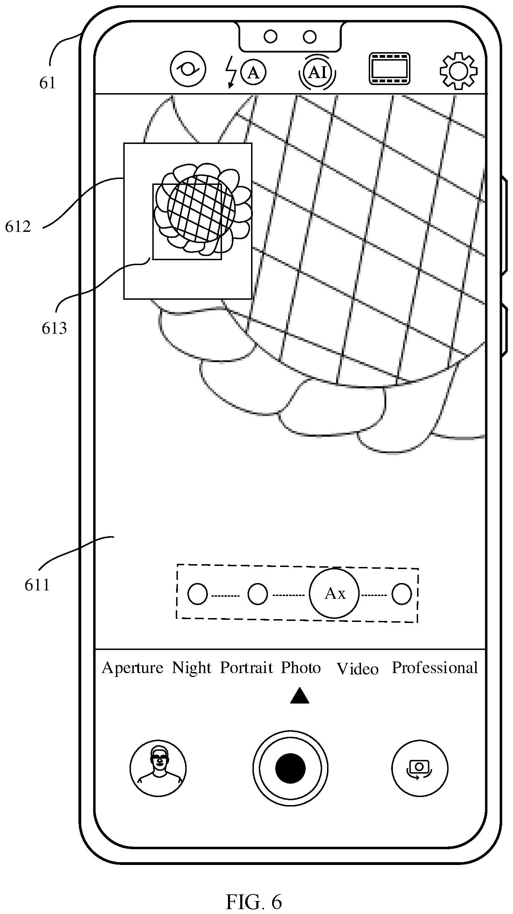

For example, refer to a schematic diagram of image navigation of macro shooting shown in FIG. 6. A mobile phone 61 is in a macro shooting mode, displays a photo preview image 611, and displays a navigation window 612 on the photo preview image 611 in a superimposed manner. The navigation window 612 is used to display the navigation image, and a location of the preview image 611 in a full FOV image is identified on the navigation image by using an identification block 613. In addition, a zoom ratio in FIG. 6 is Ax, and a value of A is arbitrary.

By observing the navigation image in the navigation window 612, a user may learn the location of the preview image 611 in the full FOV image, so that the user can conveniently perform macro image composition adjustment and search for a macro shooting subject.

It should be noted that the electronic device 100 may display the navigation image the preview image in a superimposed manner only when the zoom ratio is large or in a high focal length range. For example, in FIG. 6, the mobile phone 61 includes a long-focus macro camera, and the value of A is greater than 10, that is, a current zoom ratio is greater than 10x, and is of a long-focus high ratio. In other words, when the mobile phone 61 is in a high focal length range, the mobile phone 61 displays the navigation image on the preview image in a superimposed manner. For another example, the mobile phone 61 in FIG. 6 includes an ultra-wide-angle macro camera, and the value of A ranges from 1.5 to 3.5, that is, a current zoom ratio ranges from 1.5x to 3.5x, and belongs to a high ratio focal length range of the ultra-wide-angle macro camera. Certainly, the electronic device 100 may alternatively display the navigation image on the preview image in a superimposed manner after entering the macro shooting mode without considering values of the zoom ratio and the focal length range.

It should be noted that, when the image navigation image and the preview image are images captured by a same macro camera, if the electronic device includes at least two macro cameras, the electronic device may perform a macro camera switching relay based on the at least two macro cameras, to implement macro shooting with a wider focal length range, and may perform image navigation based on a single macro camera in the zoom process of macro shooting.

In this case, the electronic device 100 uses a partial FOV image of the currently used macro camera as the preview image, and uses a full FOV image of the macro camera as the preview image.

For example, the electronic device includes a long-focus macro camera and an ultra-wide-angle macro camera. When the zoom ratio is between 0.5x and 3.5x, the electronic device performs macro shooting by using the ultra-wide-angle macro camera, uses a partial FOV image captured by the ultra-wide-angle macro camera as a preview image, and uses a full FOV image captured by the ultra-wide-angle macro camera as a navigation image. When the zoom ratio is greater than 3.5x, after switching the ultra-wide-angle macro camera to the long-focus macro camera, the electronic device performs macro shooting by using the long-focus macro camera, uses a partial FOV image captured by the long-focus macro camera as the preview image, and uses a full FOV image captured by the long-focus macro camera as the navigation image.

It should be noted that, when the image navigation image and the preview image are images captured by a same macro camera, in addition to a full FOV image captured by the macro camera, a partial FOV image captured by the macro camera may be used as the navigation image, provided that an FOV of the navigation image is greater than an FOV of the preview image.

In some other embodiments of this application, the image navigation image and the preview image may not be images captured by a same macro camera, and an FOV of the macro camera of the image navigation image may be greater than an FOV of the macro camera of the preview image. In this case, the electronic device 100 may include at least two macro cameras. For example, a mobile phone includes an ultra-wide-angle macro camera and a long-focus macro camera. An FOV of the ultra-wide-angle macro camera is greater than an FOV of the long-focus macro camera. An image captured by the ultra-wide-angle macro camera is used as an image navigation image, and an image captured by the long-focus macro camera is used as a preview image.

Certainly, the FOV of the macro camera of the navigation image may alternatively be less than the FOV of the macro camera of the preview image. In this case, image cropping may be performed to ensure that the FOV of the image navigation image is greater than the FOV of the preview image. To be specific, the full FOV image captured by the macro camera corresponding to the navigation image is cropped, to obtain a cropped image corresponding to the navigation image; and the full FOV image captured by the macro camera corresponding to the preview image is cropped, to obtain a cropped image corresponding to the preview image. An FOV of the cropped image corresponding to the navigation image is greater than an FOV of the cropped image corresponding to the preview image.

It should be noted that, in addition to the full FOV image captured by the macro camera, the partial FOV image captured by the macro camera may be used as the navigation image, provided that the FOV of the navigation image is greater than the FOV of the preview image. Further, when the partial FOV image captured by the macro camera is used as the navigation image, a different zoom ratio indicates a different field of view of the FOV image of the navigation image. That is, images of different FOVs may be cropped from the full FOV image based on the zoom ratio to be used as the navigation image.

In an image navigation solution based on at least two macro cameras, the electronic device 100 may perform a switching relay based on the at least two macro cameras in a zoom process of a macro shooting mode. In this way, macro shooting with a wider focal length range is implemented, and image navigation is performed by using an image with a larger FOV, thereby improving convenience for a user in macro composition adjustment and searching for a macro shooting subject.

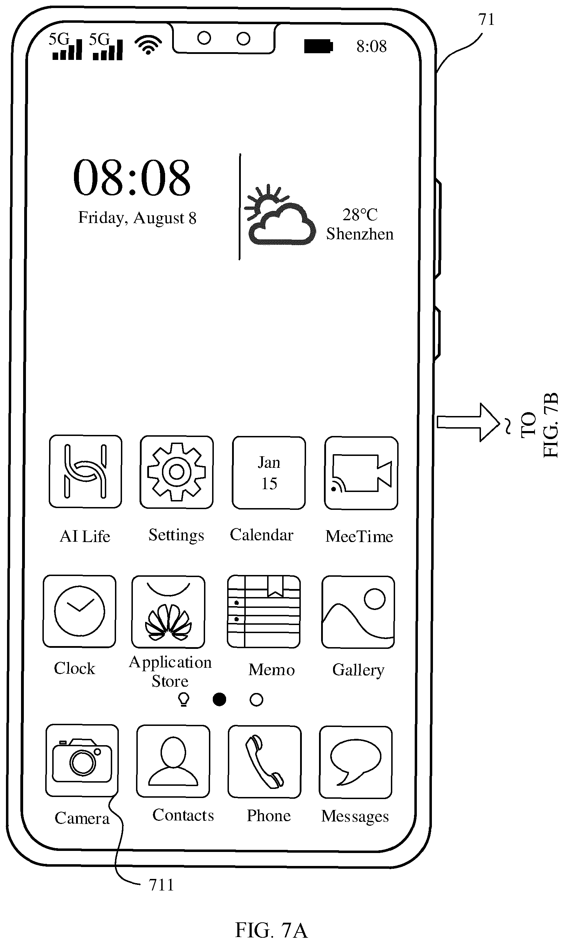

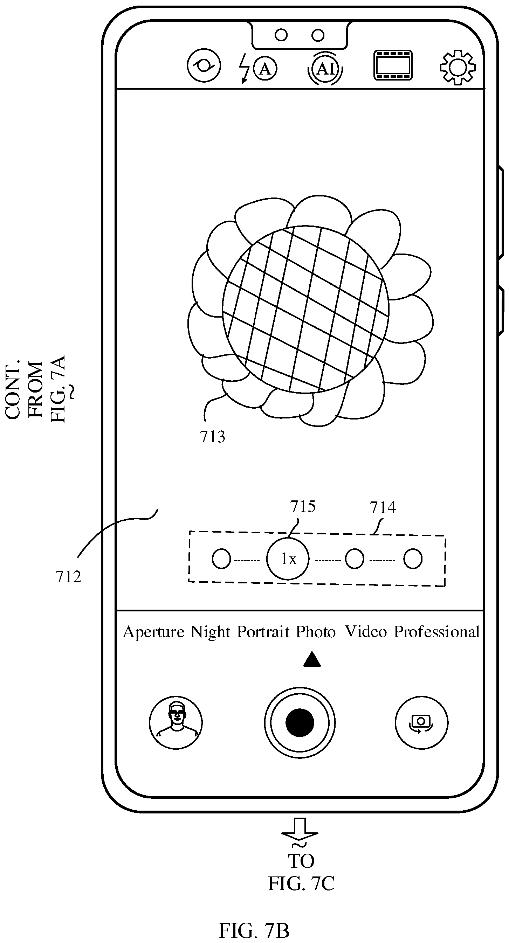

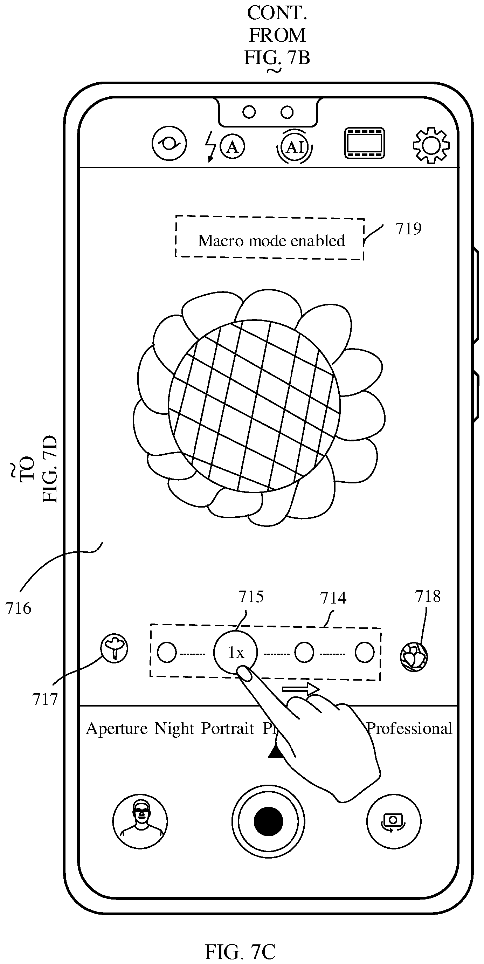

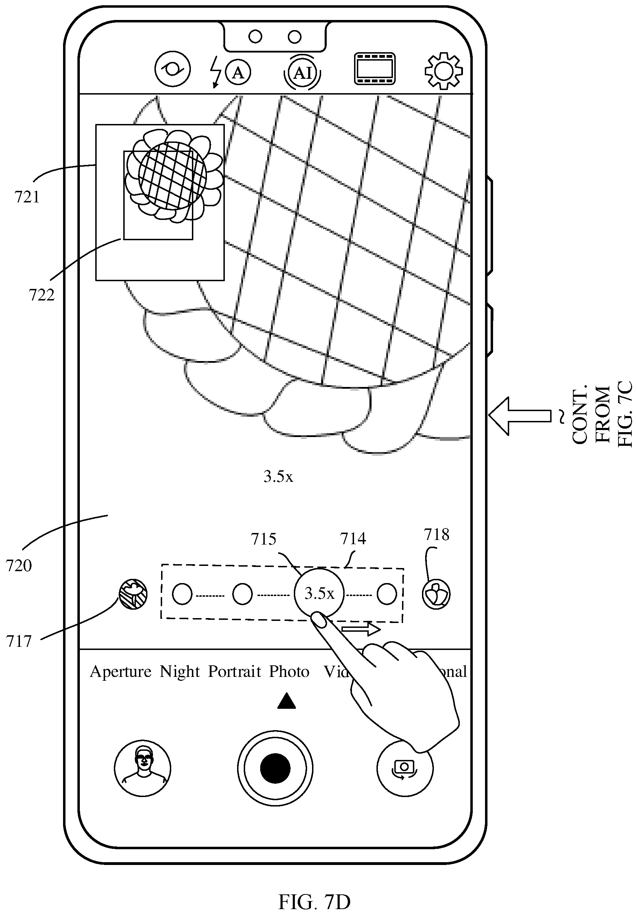

For example, refer to a schematic diagram of image navigation shown in FIG. 7A to FIG. 7D. In this case, the electronic device 100 is a mobile phone 71, and the mobile phone 71 includes a main camera, a long-focus macro camera, and an ultra-wide-angle macro camera.

As shown in FIG. 7A to FIG. 7D, after detecting a tap operation on Camera 711, the mobile phone 71 displays a photo preview interface 712 in response to the tap operation. The photo preview interface 712 includes a shooting subject 713, a zoom bar 714, and a zoom control 715. In this case, an image captured by the main camera is displayed in the photo preview interface 712, the image is a preview image, and a current zoom ratio is 1x.

The mobile phone 71 detects, in a photo preview state, a distance between the mobile phone 71 and the shooting subject 713. When detecting that shooting distances of N consecutive frames of images are all less than a first threshold, the mobile phone 71 determines that a condition for automatically entering a macro shooting mode is met, automatically enters the macro shooting mode, and displays a photo preview interface 716. An image captured by the ultra-wide-angle macro camera is displayed in the photo preview interface 716. The photo preview interface 716 includes an ultra-wide-angle macro shortcut control 717, a long-focus macro shortcut control 718, and prompt information 719. In this case, when the mobile phone 71 enters the macro shooting mode, the ultra-wide-angle macro camera is used by default, the ultra-wide-angle macro shortcut control 717 is in an enabled state, and the long-focus macro shortcut control 718 is in a disabled state. The mobile phone 71 may continuously display the prompt information 719 in the macro shooting mode, or may cancel displaying the prompt information 719 after continuously displaying the prompt information 719 for a period of time.

After the macro shooting mode is entered, a user drags the zoom control 715 rightward to increase the zoom ratio from 1x to 3.5x. Certainly, the user may quickly switch to long-focus macro by tapping the long-focus macro shortcut control 718. The mobile phone 71 determines, in response to the drag operation performed by the user on the zoom control 715, that a current zoom ratio is 3.5x, and that a camera switching ratio is reached. In this case, the mobile phone 71 displays a photo preview interface 720. An image captured by the long-focus macro camera is displayed in the photo preview interface 720. In other words, when the camera switching ratio is reached, the photo preview image of the mobile phone 71 is switched from the image captured by the ultra-wide-angle macro camera to the image captured by the long-focus macro camera. In this way, a switching relay between the ultra-wide-angle macro camera and the long-focus macro camera is used to implement macro shooting from an ultra-wide-angle focal length range to a long-focus focal length range.

After switching the ultra-wide-angle macro camera to the long-focus macro camera, the mobile phone 71 switches from an ultra-wide-angle macro camera mode to a long-focus macro camera mode. Therefore, when the zoom ratio reaches 3.5x, the ultra-wide-angle macro shortcut control 717 in the photo preview interface 720 is in the disabled state, and the long-focus macro shortcut control 718 is in the enabled state.

In addition, after switching to the long-focus macro camera, the mobile phone 71 further displays a navigation window 721 in a superimposed manner on the photo preview interface 720, where the navigation window 721 is configured to display a navigation image. In addition, a rectangular block 722 identifies a location of the preview image in the navigation image. The navigation image displayed in the navigation window 721 is the image captured by the ultra-wide-angle macro camera. In this case, a full FOV image captured by the ultra-wide-angle macro camera may be used as the navigation image, or a full FOV image captured by the ultra-wide-angle macro camera may be cropped to a proper field of view (for example, 78°), and then the cropped image is used as the navigation image. In a zoom process of the macro shooting mode, the mobile phone 71 may obtain a location of the preview image in the ultra-wide-angle image by calculating a value of an image offset between a center of a long-focus image and a center of an ultra-wide-angle image, and identify a relative location relationship between the preview image and the ultra-wide-angle image by using the rectangular block 722. In this way, on the basis of the switching relay between the ultra-wide-angle macro camera and the long-focus macro camera to implement macro shooting with a wider focal length range, when the preview image is switched from the ultra-wide-angle macro camera to the long-focus macro camera, an image captured by a macro camera (that is, the ultra-wide-angle macro camera) with a larger FOV is used as the navigation image, so that a user performs macro image composition and searches for a macro shooting target by using the navigation image with a larger FOV

Certainly, the electronic device 100 may alternatively not perform a switching relay by using at least two macro cameras. In this case, after entering the macro shooting mode, the electronic device 100 uses only one macro camera to perform macro shooting, and does not perform a macro camera switching relay based on a plurality of macro cameras, but uses a macro camera with a larger FOV to perform image navigation.

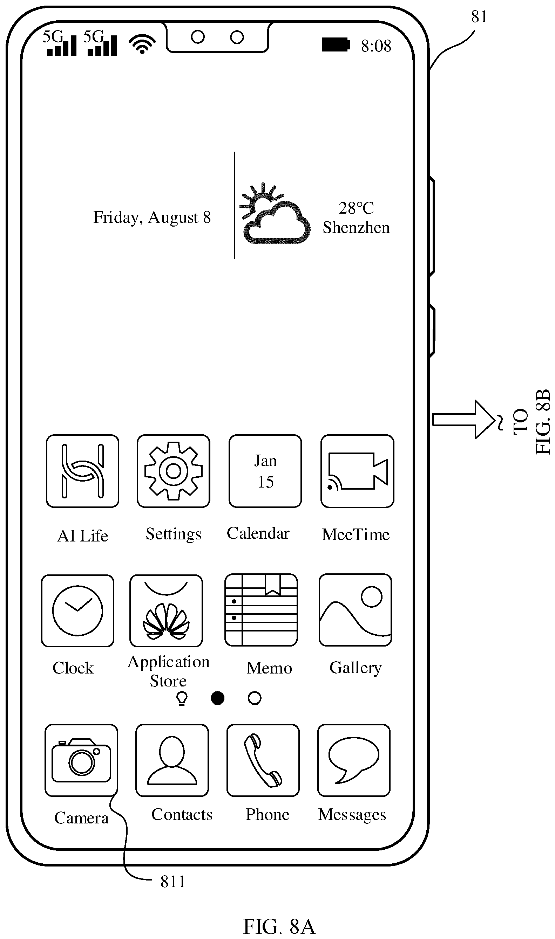

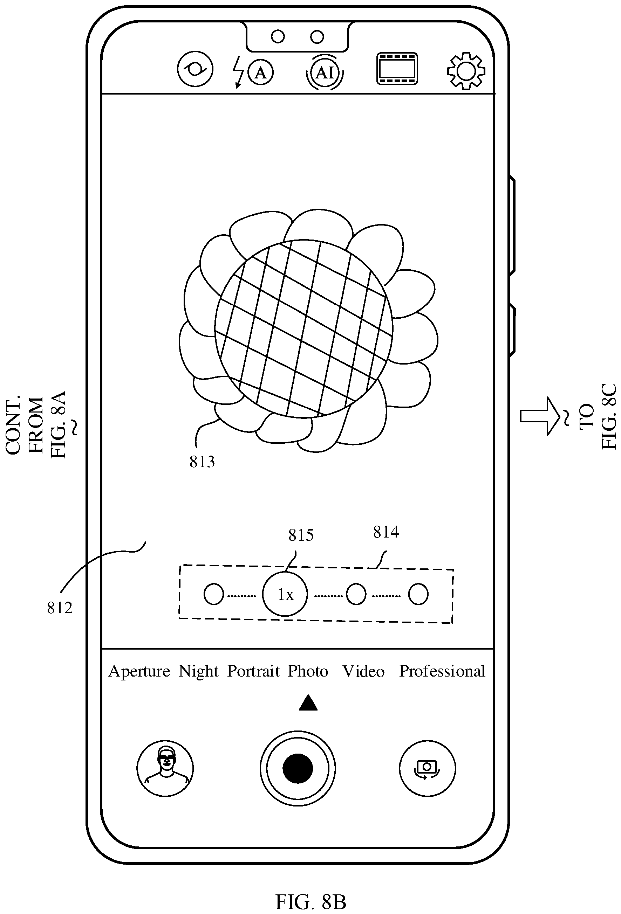

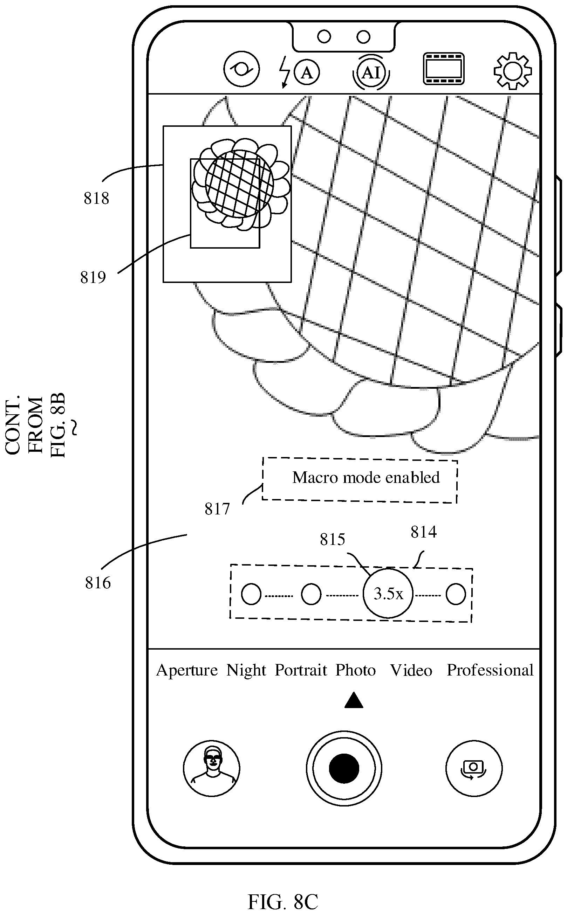

For example, refer to another schematic diagram of image navigation shown in FIG. 8A to FIG. 8C. In this case, the electronic device 100 is a mobile phone 81, and the mobile phone 81 includes a main camera, a long-focus macro camera, and an ultra-wide-angle macro camera. The long-focus macro camera is used only for macro shooting. The ultra-wide-angle macro camera is not used for macro shooting, but is used only for image navigation.

As shown in FIG. 8A to FIG. 8C, after detecting a tap operation on Camera 811, the mobile phone 81 displays a photo preview interface 812 in response to the tap operation, and displays a preview image in the interface. The photo preview interface 812 includes a shooting subject 813, a zoom bar 814, and a zoom control 815. In this case, an image captured by the main camera is displayed in the photo preview interface 812, and a current zoom ratio is 1x.

The mobile phone 81 detects, in a photo preview state, a distance between the mobile phone 81 and the shooting subject 813. When detecting that shooting distances of N consecutive frames of images are all less than a first threshold, the mobile phone 81 determines that a condition for automatically entering a macro shooting mode is met, automatically enters the macro shooting mode, and displays a photo preview interface 816. An image captured by the long-focus macro camera is displayed in the photo preview interface 816. The photo preview interface 816 includes prompt information 817, a navigation window 818, and a rectangular block 819.

The navigation window 818 is used to display a navigation image. In this case, the navigation image is an image captured by the ultra-wide-angle macro camera. The mobile phone 81 obtains a location of the preview image in the image navigation image by calculating a value of an image offset between a center of an ultra-wide-angle image and a center of a long-focus image, and identifies a relative location relationship between the preview image and the navigation image by using the rectangular block 819.

It should be noted that, the navigation solution based on cameras of at least two different FOVs provided in this embodiment of this application may be applied to a macro shooting mode. In addition, when the solution is applied to the macro shooting mode, the at least two cameras may include some macro cameras and some non-macro cameras. For example, the electronic device includes a long-focus macro camera and a wide-angle camera. In this case, the long-focus macro camera is used to perform macro shooting, and the wide-angle camera is used to perform image navigation. In other words, an image captured by the long-focus macro camera is used as a preview image, and an image captured by the wide-angle camera is used as a navigation image. The solution may further be applied to a non-macro shooting mode. In addition, the cameras of at least two different FOVs may not be macro cameras. For example, in a common photo mode, when a zoom ratio reaches 15x, a mobile phone may use an image captured by a long-focus camera as a preview image, and display a navigation window in a superimposed manner on a photo preview interface. A navigation image displayed in the navigation window is an image captured by an ultra-wide-angle camera.

It should be further noted that an identification pattern identifying the preview image and the navigation image is not limited to the foregoing rectangular block, and a display location of the identification pattern is not limited to the foregoing location. The identification pattern and the display location, a display manner, and the like of the identification pattern are not limited herein.

It should be noted that, based on the foregoing image navigation solution of the at least two macro cameras, when a switching relay is performed based on the at least two macro cameras, image offset cropping may not be performed by using the foregoing image center alignment solution. However, in this case, image transition is unnatural and not smooth during camera switching.

Further, based on the image navigation solution of the at least two macro cameras, when a switching relay is performed based on the at least two macro cameras, to ensure that image transition is more smooth and natural during camera switching, the electronic device 100 may further perform image offset cropping based on an image offset value by using the image center alignment solution. In this case, after entering the macro shooting mode, the electronic device 100 uses a first macro camera by default to perform macro shooting, and displays, in a preview interface, an image captured by the first macro camera as a preview image. It may be understood that the electronic device 100 may display the navigation image in the preview image in a superimposed manner after entering the macro shooting mode; or may display the navigation image in the preview image in a superimposed manner only when the zoom ratio reaches a target ratio. The latter is used as an example for description in the following.

In a zoom process of a macro shooting mode, the electronic device 100 obtains a current zoom ratio, and determines whether the current zoom ratio reaches a camera switching ratio and whether the current zoom ratio reaches a target ratio. If the current zoom ratio reaches the camera switching ratio and reaches the target ratio, the first macro camera is switched to a second macro camera, that is, the preview image is switched from the first macro camera to the second macro camera, and the image captured by the first macro camera is displayed on the preview image in a superimposed manner as an image navigation image. An FOV of the first macro camera is greater than an FOV of the second macro camera. In addition, in a process of zooming to the camera switching ratio, a value of an image offset between an image center of the first macro camera and an image center of the second macro camera under the current zoom ratio may be calculated by using the foregoing image center alignment solution, a relative location relationship between the navigation image and the preview image is identified based on the image offset value, image offset cropping is performed on the image captured by the first macro camera based on the image offset value, and an obtained cropped image is used as a preview image for display, to ensure that image transition is more natural and smooth when the first macro camera is switched to the second macro camera.

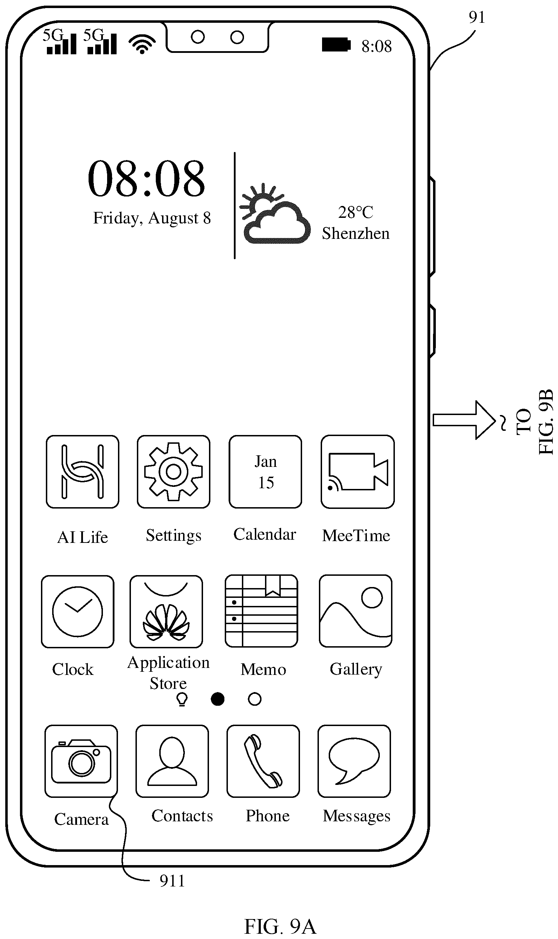

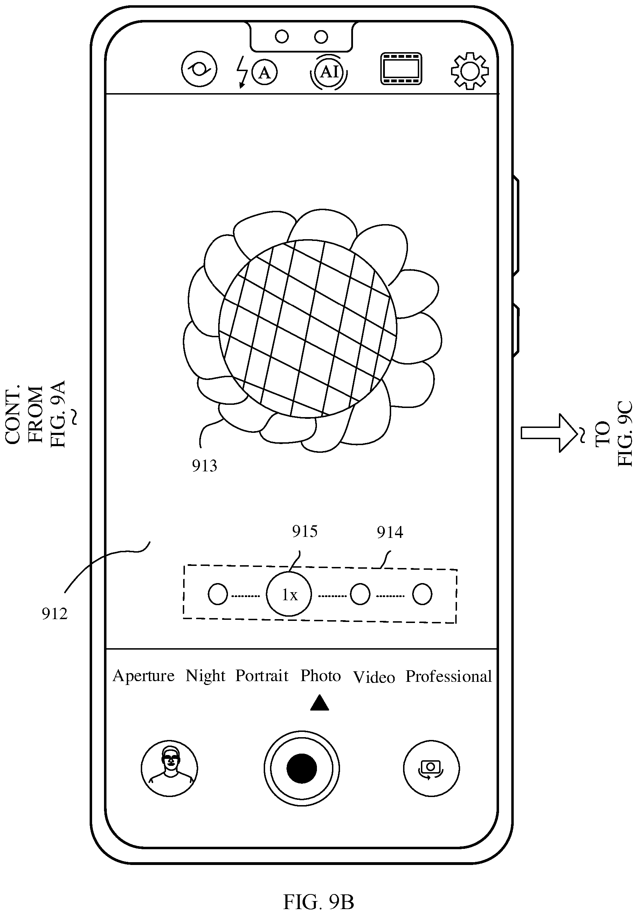

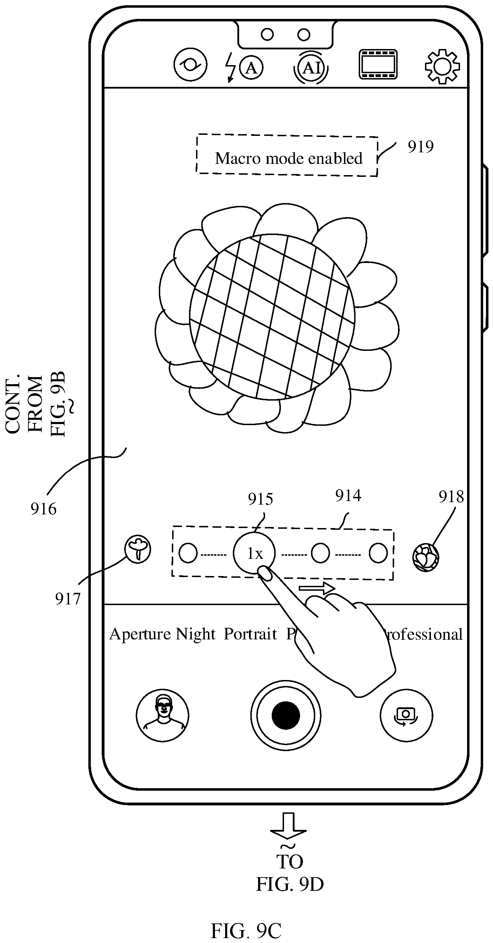

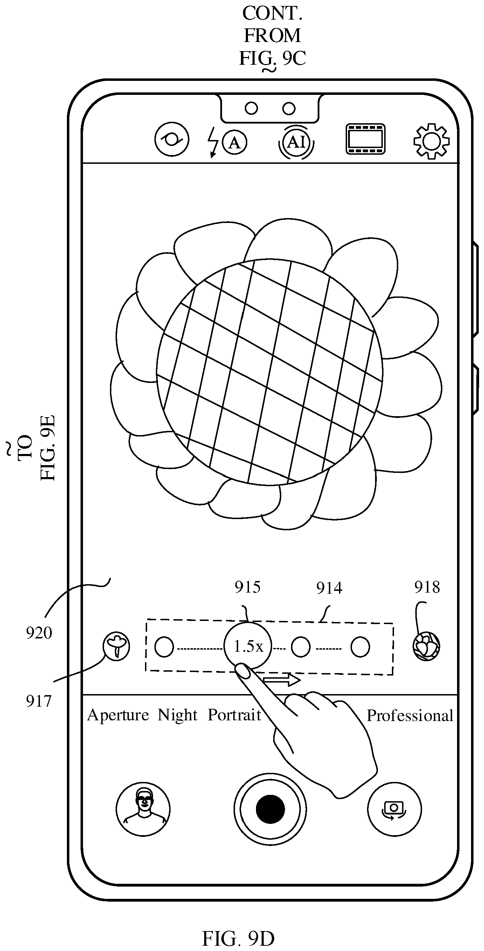

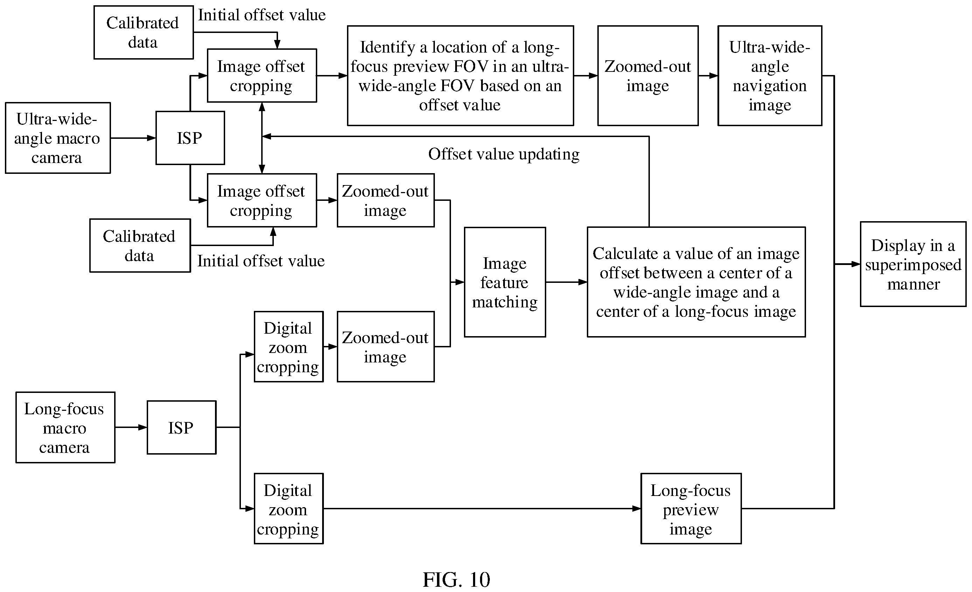

For example, the following provides description with reference to a schematic diagram of a long-focus low medium ratio image navigation solution shown in FIG. 9A to FIG. 9F and a schematic flowchart of the long-focus low medium ratio image navigation solution shown in FIG. 10.

In this case, the electronic device 100 is a mobile phone 91, and the mobile phone 91 includes a main camera, a long-focus macro camera, and an ultra-wide-angle macro camera. The target ratio is 3.5x.

As shown in FIG. 9A to FIG. 9F, after detecting a tap operation on Camera 911, the mobile phone 91 displays a photo preview interface 912 in response to the tap operation. The photo preview interface 912 includes a zoom bar 914 and a zoom control 915, and further includes a shooting subject 913. In this case, an image captured by the main camera is displayed in the photo preview interface 912, and a current zoom ratio is 1x.

The mobile phone 91 detects, in a photo preview state, a distance between the mobile phone 91 and the shooting subject 913. When detecting that shooting distances of N consecutive frames of images are all less than a first threshold, the mobile phone 91 determines that a condition for automatically entering a macro shooting mode is met, automatically enters the macro shooting mode, and displays a photo preview interface 916. The photo preview interface 916 includes an ultra-wide-angle macro shortcut control 917, a long-focus macro shortcut control 918, and prompt information 919. In this case, when the mobile phone 91 enters the macro shooting mode, the ultra-wide-angle macro camera is used by default, the ultra-wide-angle macro shortcut control 917 is in an enabled state, and the long-focus macro shortcut control 918 is in a disabled state.

After entering the macro shooting mode, the mobile phone 91 enables the ultra-wide-angle macro camera and the long-focus macro camera, and obtains an ultra-wide-angle image captured by using the ultra-wide-angle macro camera and a long-focus image captured by the long-focus macro camera.

When the mobile phone 91 just enters the macro shooting mode, the mobile phone 91 performs, based on an initial offset value, image offset cropping on the image captured by the ultra-wide-angle macro camera, to obtain a cropped image, and uses the cropped image as a to-be-displayed image, that is, displays the cropped image in the photo preview interface 916. In other words, after the mobile phone 91 enters the macro shooting mode, the preview image is switched from the image captured by the main camera to the image captured by the ultra-wide-angle macro camera.

In the macro shooting mode, a user may change the zoom ratio by dragging the zoom control 915 on the zoom bar 914. In a zoom process, the mobile phone 91 obtains a current zoom ratio in real time, and determines whether the current zoom ratio reaches a camera switching ratio and whether the current zoom ratio reaches a target ratio.

As shown in FIG. 9A to FIG. 9F, after the mobile phone 91 enters the macro shooting mode, the photo preview interface 916 is displayed, and the photo preview interface 916 displays a current zoom ratio 1x. The user drags the zoom control 915 rightward to zoom the zoom ratio from 1x to 1.5x, and a photo preview interface 920 is displayed. In this case, the zoom ratio does not reach the camera switching ratio and the target ratio, and the mobile phone 91 continues to use the ultra-wide-angle macro camera to perform macro shooting. In response to the drag operation of the user on the zoom control 915, the mobile phone 91 executes an image center alignment solution in the zoom process, to crop a to-be-displayed image. Specifically, for the long-focus image, the mobile phone 91 performs down-sampling processing by using an ISP, to obtain a long-focus zoomed-out image output by the ISP; for the ultra-wide-angle image, the mobile phone 91 performs image offset cropping by using the ISP based on an updated image offset value, to obtain a cropped image, and uses the cropped image as the to-be-displayed image, that is, the cropped image as an ultra-wide-angle preview image. In addition, the mobile phone 91 further performs down-sampling processing on the cropped image by using the ISP to obtain an ultra-wide-angle zoomed-out image, performs image feature matching on the ultra-wide-angle zoomed-out image and the long-focus zoomed-out image, calculates a value of an image offset between a center of the long-focus image and a center of the ultra-wide-angle image based on an image feature matching result and the current zoom ratio, and performs offset value updating based on the image offset value.

The user continues to drag the zoom control 915 rightward to increase the zoom ratio from 1.5x to 3.5x. The mobile phone 91 determines, in response to the drag operation performed by the user on the zoom control 915, that a current zoom ratio is 3.5x, the camera switching ratio and the target ratio are reached, and that camera switching and image navigation image display in a superimposed manner need to be performed.

Specifically, as shown in FIG. 10, for the long-focus image, the mobile phone 91 performs digital zoom cropping on the long-focus image by using the ISP, to obtain a long-focus cropped image, and uses the long-focus cropped image as a long-focus preview interface, that is, displays the long-focus cropped image as the preview image in a photo preview interface 921. In addition, the mobile phone 91 further performs down-sampling processing on the long-focus cropped image by using the ISP, to obtain a long-focus zoomed-out image. For the ultra-wide-angle image, the mobile phone 91 performs image offset cropping on the ultra-wide-angle image by using the ISP based on the updated image offset value, to obtain an ultra-wide-angle cropped image, and performs down-sampling processing on the ultra-wide-angle cropped image, to obtain an ultra-wide-angle zoomed-out image.

Then, the mobile phone 91 performs image feature matching on the ultra-wide-angle zoomed-out image and the long-focus zoomed-out image, calculates a value of an image offset between a center of the ultra-wide-angle image and a center of the long-focus image based on an image feature matching result and the current zoom ratio, and performs offset value updating based on the image offset value. In addition, the mobile phone 91 further identifies a location of the long-focus cropped image in the ultra-wide-angle cropped image based on the image offset value, and performs down-sampling processing on the identified ultra-wide-angle cropped image, to obtain an identified zoomed-out image. The identified zoomed-out image is displayed as an ultra-wide-angle navigation image on the long-focus preview interface in a superimposed manner.

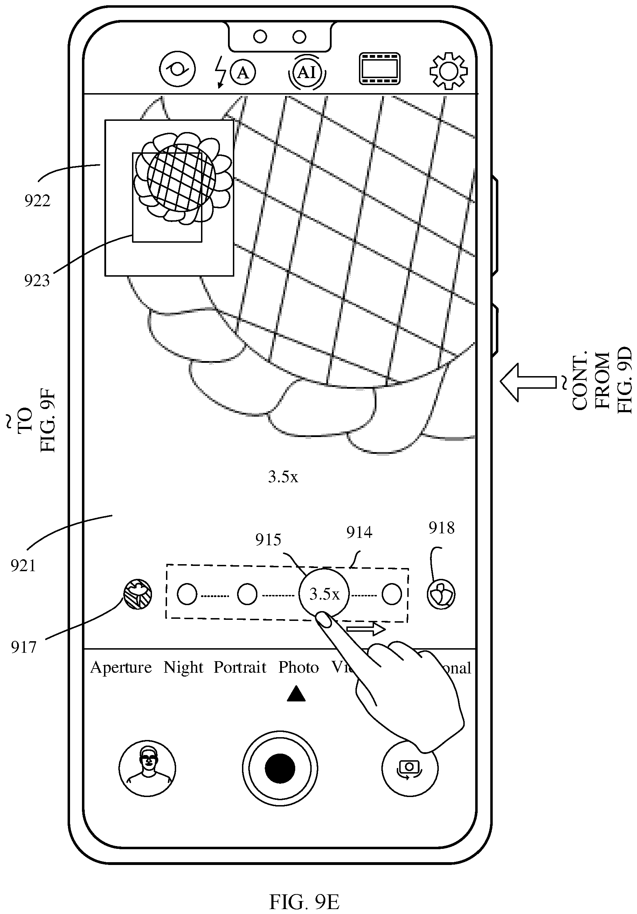

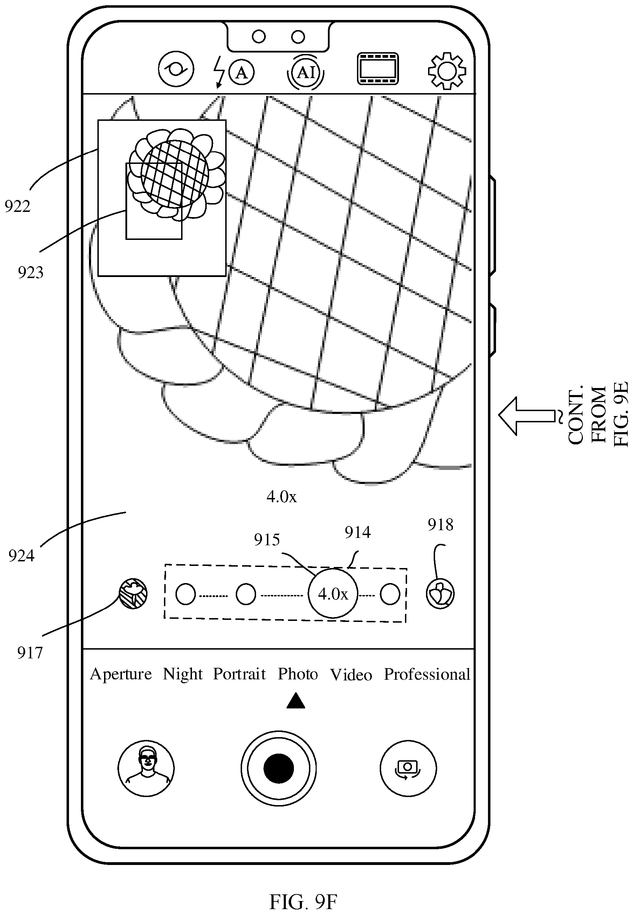

As shown in FIG. 9A to FIG. 9F, the mobile phone 91 displays the long-focus cropped image in the photo preview interface 921, to switch the preview image from the ultra-wide-angle macro camera to the long-focus macro camera, to implement a macro camera switching relay. In addition, the mobile phone 91 further displays the identified zoomed-out image on the preview interface in a superimposed manner. Specifically, as shown in an image navigation window 922 in FIG. 9E and FIG. 9F, the identified zoomed-out image is displayed in the image navigation window 922 as the navigation image, and a rectangular block 923 identifies the location of the preview image in the navigation image. In the photo preview interface 921, the mobile phone 91 has switched from ultra-wide-angle macro to long-focus macro. Therefore, the ultra-wide-angle macro shortcut control 917 is in the disabled state, and the long-focus macro shortcut control 918 is in the enabled state.

After ultra-wide-angle macro is switched to long-focus macro, the user continues to drag the zoom control 915 rightward to increase the zoom ratio from 3.5x to 4x. The mobile phone 91 determines, in response to the drag operation of the user on the zoom control 915, that a current zoom ratio is 4x, and falls in a focal length range of the long-focus macro camera. In this case, the mobile phone 91 performs the procedure shown in FIG. 10, to obtain the long-focus cropped image, and displays the long-focus cropped image in a photo preview interface 924; and identifies a location of the long-focus cropped image in the ultra-wide-angle cropped image based on the image offset value, to identify a location of the long-focus preview image in the ultra-wide-angle navigation image, and displays the identified zoomed-out image in the image navigation window 922.

The user may continue to drag the zoom control 915 to increase the zoom ratio. When the zoom ratio is greater than 10x, the mobile phone 91 may continue to use the image captured by the ultra-wide-angle macro camera as the image navigation image, or when the zoom ratio exceeds the long-focus focal length range, the navigation image is not displayed. However, if the ultra-wide-angle macro camera is still used for navigation in a high ratio, a rectangular block used for identification on the navigation image is small, which is not conducive to precise navigation of a long-focus high-ratio image. Therefore, to implement precise navigation of the long-focus high-ratio image, when the zoom ratio is greater than 10x, the mobile phone 91 may use a long-focus full FOV image captured by the long-focus macro camera as the navigation image, and use a long-focus partial FOV image captured by the long-focus macro camera as the preview image.

In addition, it can be learned from FIG. 9A to FIG. 9F that, when the zoom ratio is in a focal length range of the ultra-wide-angle macro camera, that is, 0.5x to 3.5x, the mobile phone 91 does not display the navigation image in a superimposed manner on the preview image in the zoom process of the macro camera. In some other embodiments, the mobile phone 91 may alternatively perform image navigation image display in a superimposed manner in the focal length range of the ultra-wide-angle macro camera. However, when in the low-medium-ratio focal length range (for example, 0.5x to 1.5x) of the ultra-wide-angle macro camera, an FOV of the preview image is large, and the user may conveniently perform macro image composition adjustment and search for a macro shooting target. Therefore, the navigation image may not be displayed in the low-medium-ratio focal length range of the ultra-wide-angle macro camera. When the zoom ratio is in a high-ratio focal length range (for example, 1.5x to 3.5x) of the ultra-wide-angle macro camera, the FOV of the preview image is small, and convenience of macro image composition adjustment and searching for the macro shooting target is poor. The mobile phone 91 may display the navigation image in a superimposed manner, so as to improve interaction experience of the user in macro shooting.

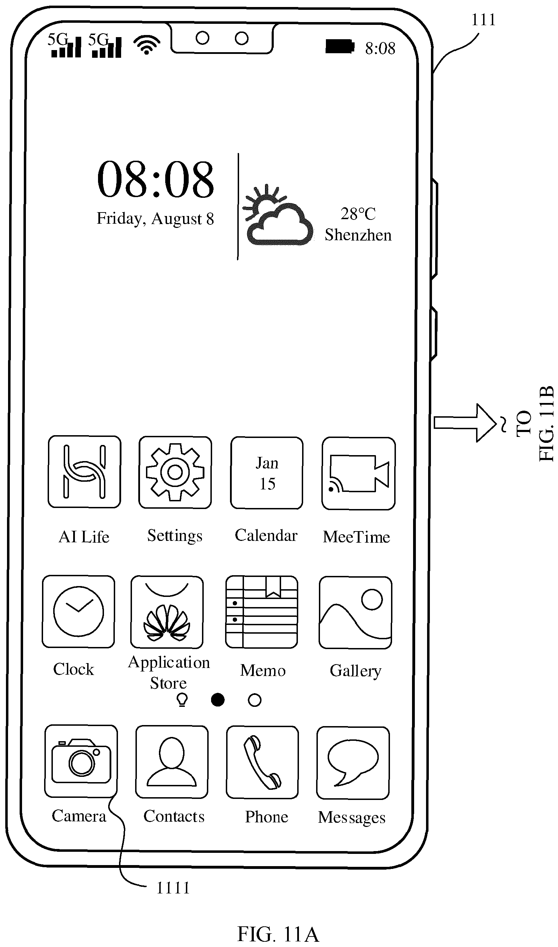

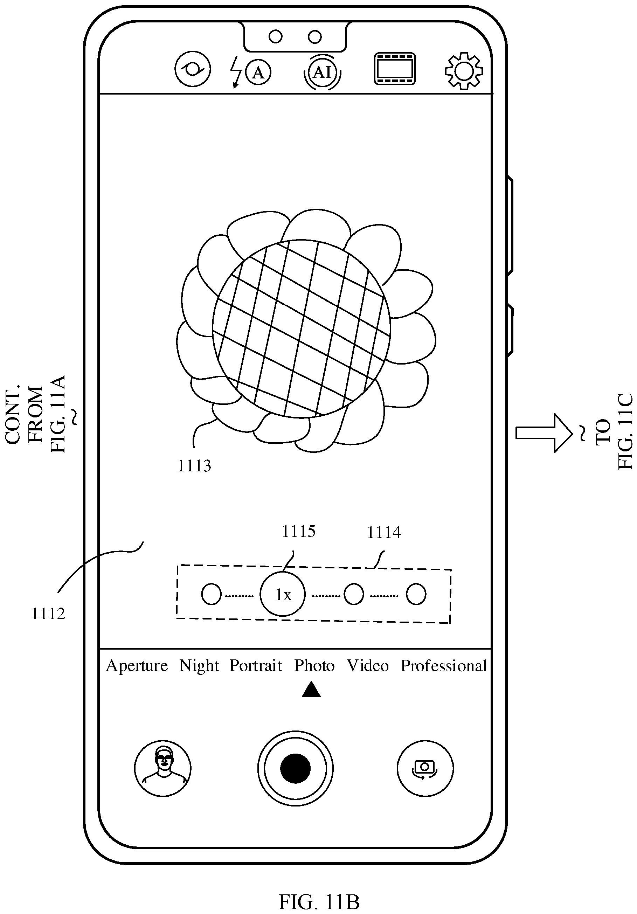

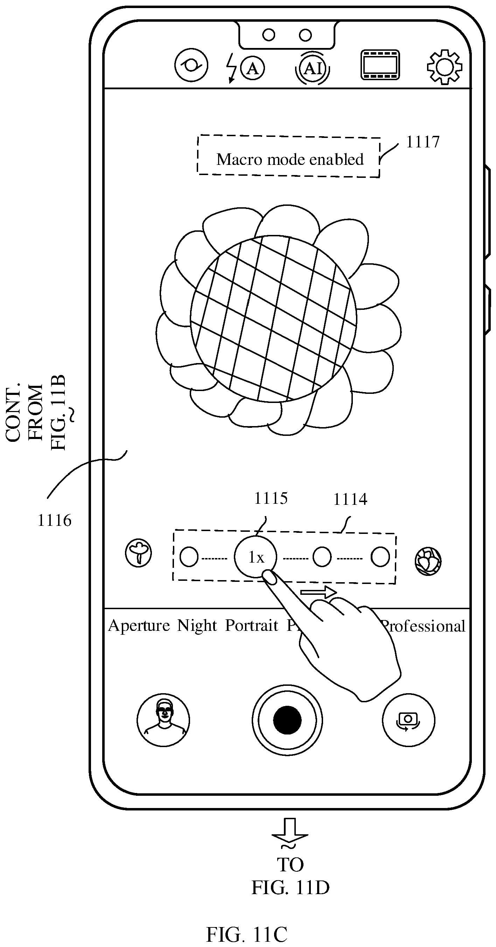

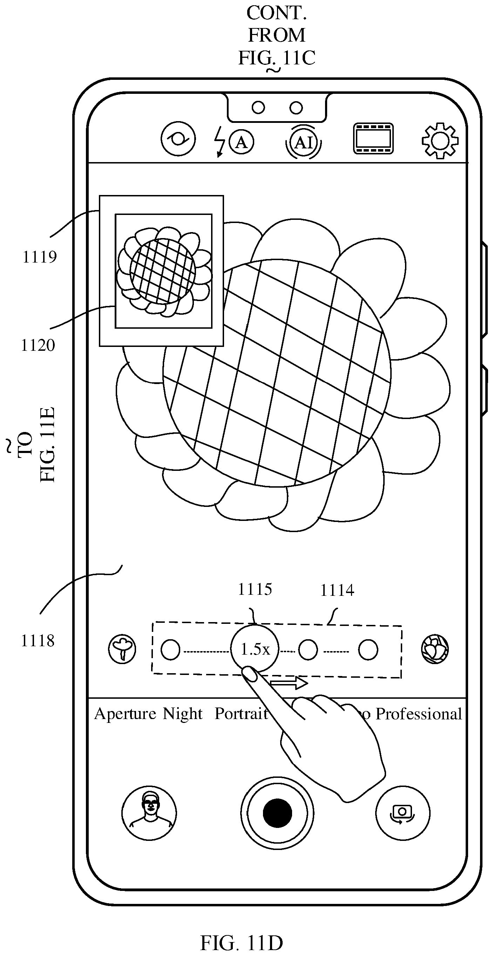

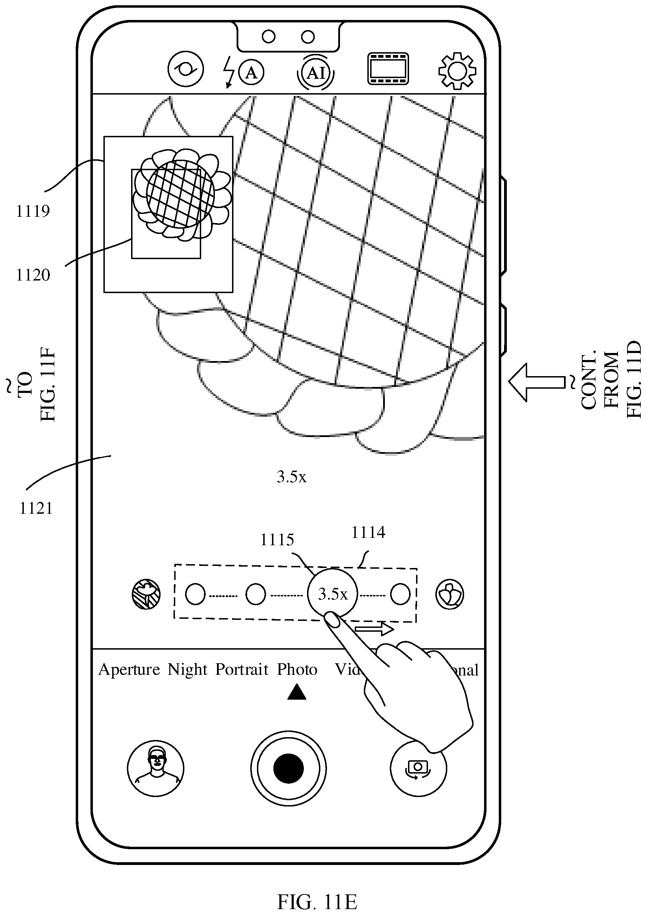

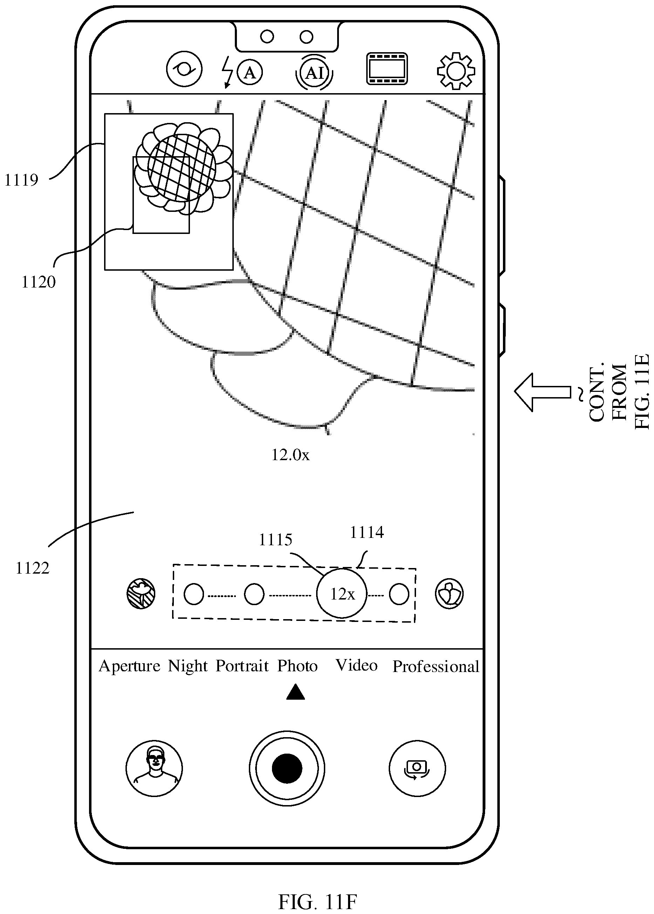

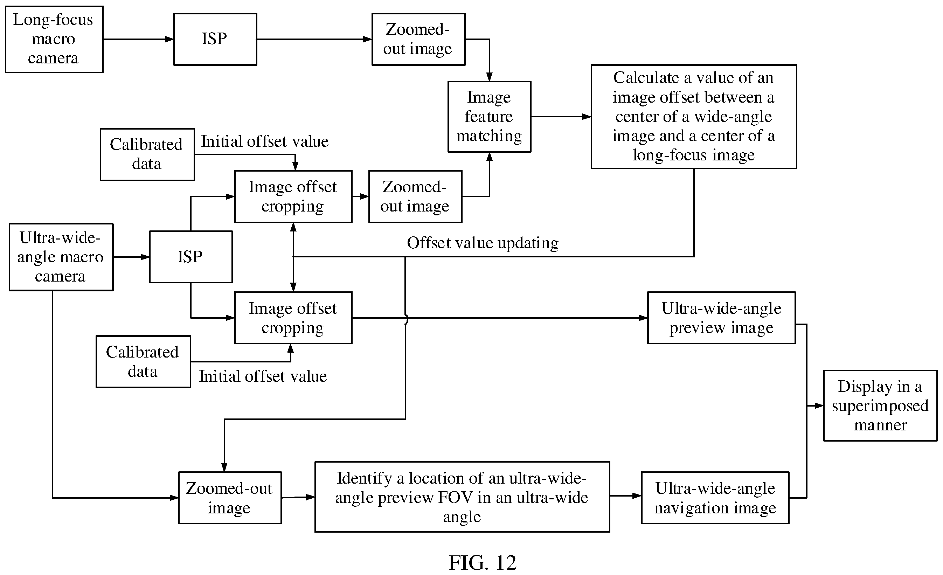

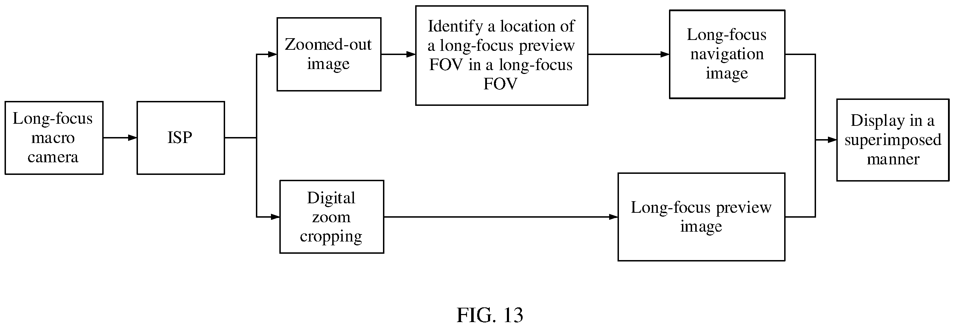

For example, the following provides description with reference to still another schematic diagram of image navigation shown in FIG. 11A to FIG. 11F, a schematic flowchart of an ultra-wide-angle high-ratio navigation solution shown in FIG. 12, and a schematic flowchart of a long-focus high-ratio navigation solution shown in FIG. 13.

In this case, the electronic device 100 is a mobile phone 111, and the mobile phone 111 includes a main camera, a long-focus macro camera, and an ultra-wide-angle macro camera. A camera switching ratio is 3.5x, and a target ratio is 1.5x.

As shown in FIG. 11A to FIG. 11F, after detecting a tap operation on Camera 1111, the mobile phone 111 displays a photo preview interface 1112 in response to the tap operation. The photo preview interface 1112 includes a shooting subject 1113, a zoom bar 1114, and a zoom control 1115. In this case, an image captured by the main camera is displayed in the photo preview interface 1112 as a preview interface, and a current zoom ratio is 1x.

The mobile phone 111 detects, in a photo preview state, a distance between the mobile phone 111 and the shooting subject 1113. When detecting that shooting distances of N consecutive frames of images are all less than a first threshold, the mobile phone 111 determines that a condition for automatically entering a macro shooting mode is met, automatically enters the macro shooting mode, and displays a photo preview interface 1116. The photo preview interface 1116 includes ultra-wide-angle macro prompt information 1117. In this case, when the mobile phone 111 enters a macro shooting mode, the mobile phone 111 enables the ultra-wide-angle macro camera and the long-focus macro camera, to obtain an ultra-wide-angle image captured by using the ultra-wide-angle macro camera and a long-focus image captured by using the long-focus macro camera. In addition, the mobile phone 111 uses the ultra-wide-angle macro camera by default to perform macro shooting, and the photo preview interface 1116 displays an image captured by the ultra-wide-angle macro camera.

When the mobile phone 111 just enters the macro shooting mode, the mobile phone 111 performs, based on an initial offset value, image offset cropping on the image captured by the ultra-wide-angle macro camera, to obtain a cropped image, and uses the cropped image as a to-be-displayed image, that is, displays the cropped image in the photo preview interface 1116. In other words, after the mobile phone 111 enters the macro shooting mode, the preview image is switched from the image captured by the main camera to the image captured by the ultra-wide-angle macro camera.

When the zoom ratio is 1x, the zoom ratio falls in a focal length range of the ultra-wide-angle macro camera, and is of an ultra-wide-angle low-medium ratio. An ultra-wide-angle low-medium ratio range is 0.5x to 1.5x, and an ultra-wide-angle high ratio range is 1.5x to 3.5x. Therefore, the mobile phone 111 does not display a navigation image on a preview image in a superimposed manner.

The user drags the zoom control 1115 to increase the zoom ratio from 1x to 1.5x. The mobile phone 111 determines, in response to the drag operation on the zoom control 1115, that a current zoom ratio is 1.5x, the target ratio is reached, the camera switching ratio is not reached, and that the current zoom ratio falls in the ultra-wide-angle high ratio range, and the mobile phone 111 uses an ultra-wide-angle full FOV image as the navigation image, and an ultra-wide-angle partial FOV as the preview image. In this case, the mobile phone 111 performs the procedure shown in FIG. 12, to implement ultra-wide-angle high-ratio navigation.

Specifically, for the long-focus image, the mobile phone 111 performs down-sampling on the long-focus image by using an ISP, to obtain a long-focus zoomed-out image. For the ultra-wide-angle image, the mobile phone 111 performs image offset cropping on the ultra-wide-angle image by using the ISP based on an updated image offset value, to obtain a cropped image, and uses the cropped image as an ultra-wide-angle preview image, that is, displays the cropped image in a photo preview interface 1118. The mobile phone 111 further performs down-sampling on the cropped image by using the ISP, to obtain an ultra-wide-angle zoomed-out image, performs image feature matching on the ultra-wide-angle zoomed-out image and the wide-angle zoomed-out image, calculates a value of an image offset between a center of the ultra-wide-angle image and a center of the long-focus image based on image feature matching and the current zoom ratio, and performs offset value updating based on the image offset value. In addition, down-sampling is further performed on an uncropped ultra-wide-angle image to obtain a zoomed-out image, and then a location of an ultra-wide-angle partial FOV (that is, the cropped image) in the ultra-wide-angle full FOV image is identified in the zoomed-out image based on an updated image offset value, to obtain an identified zoomed-out image, and the identified zoomed-out image is used as an ultra-wide-angle navigation image and displayed on an ultra-wide-angle preview image in a superimposed manner. As shown in FIG. 11A to FIG. 11F, an image navigation window 1119 and a rectangular block 1120 that are used to display an image navigation image are displayed in the photo preview interface 1118 in a superimposed manner, and the rectangular block 1120 identifies a location of the ultra-wide-angle preview image in the ultra-wide-angle navigation image.

The user drags the zoom control 1115 to increase the zoom ratio from 1.5x to 3.5x. The mobile phone 111 determines, in response to the drag operation on the zoom control 1115, that a current zoom ratio is 3.5x, the current zoom ratio reaches the camera switching ratio, and that the current zoom ratio is of a long-focus low-medium ratio. In this case, camera switching needs to be performed, the ultra-wide-angle image is used as the navigation image, and the long-focus image is used as the preview image. A long-focus low-medium ratio range is 3.5x to 10x, and a long-focus high ratio range is greater than 10x. In this case, the mobile phone 111 performs the procedure shown in FIG. 10, to obtain the long-focus preview image and the ultra-wide-angle navigation image, and displays the ultra-wide-angle navigation image on the long-focus preview image in a superimposed manner. As shown in FIG. 11A to FIG. 11F, when the zoom ratio is 3.5x, the mobile phone 111 displays a photo preview interface 1121, and the navigation window 1119 and the rectangular block 1120 are displayed on the photo preview interface 1121 in a superimposed manner. In this case, the navigation image displayed in the navigation window 1119 is the ultra-wide-angle navigation image determined according to the procedure shown in FIG. 10, and the preview image is the long-focus preview image determined according to the procedure shown in FIG. 10.

The user drags the zoom control 1115 to increase the zoom ratio from 3.5x to 12x. The mobile phone 111 determines, in response to the drag operation on the zoom control 1115, that a current zoom ratio is 12x and is of a long-focus high ratio, a long-focus full FOV image needs to be used as the navigation image, and that a long-focus partial FOV image needs to be used as the preview image. In this case, the mobile phone 111 may perform the procedure shown in FIG. 13, to implement long-focus high-ratio navigation.

Specifically, for the long-focus full FOV image, the mobile phone 111 performs down-sampling processing by using the ISP, to obtain a zoomed-out image output by the ISP. In addition, the mobile phone 111 further performs digital zoom cropping on the long-focus full FOV image, to crop the long-focus partial FOV image from the long-focus full FOV image, and uses the long-focus partial FOV image as the long-focus preview image for displaying in a photo preview interface 1122. In addition, the mobile phone 111 further identifies, based on a cropping location, a location of the cropped partial FOV image in the full FOV image, to obtain a long-focus navigation image, and displays the long-focus navigation image in the image navigation window 1119 on the photo preview interface 1122.

It should be noted that in the image navigation solution, the macro camera of the electronic device 100 may be a fixed-focus camera, or may be a continuous zoom camera. This is not limited herein.

In the foregoing macro shooting scenario, the electronic device 100 may perform a switching relay based on the at least two macro cameras, to implement macro shooting with a wider focal length range. Further, in macro shooting, a navigation image of a larger FOV may be displayed on a preview image in a superimposed manner, to improve convenience of macro composition adjustment and searching for a macro shooting target by a user.

When the user finds an appropriate macro shooting angle and a macro shooting target by performing the foregoing operations such as macro camera switching and image navigation, the user may trigger the electronic device 100 to perform an image shooting operation, to obtain a macro shooting photo or a macro shooting video.

When the electronic device 100 shoots a macro photo, a photo shooting manner may be different if a current zoom ratio is different. For example, the electronic device 100 includes an ultra-wide-angle macro camera and a long-focus macro camera. When the zoom ratio is of an ultra-wide-angle low-medium ratio, the electronic device 100 performs photo shooting by using the ultra-wide-angle macro camera. When the zoom ratio is of an ultra-wide-angle high ratio, the electronic device 100 obtains an ultra-wide-angle image by using the ultra-wide-angle macro camera, obtains a long-focus image by using the long-focus macro camera, performs image fusion on the ultra-wide-angle image and the long-focus image to obtain a fused image, and uses the fused image as an output image. When the zoom ratio is of a long-focus ratio, the electronic device 100 performs photo shooting by using the long-focus macro camera.

During image fusion, the electronic device 100 may determine a location of the long-focus image in the ultra-wide-angle image through image feature matching, that is, determine an area that is in the ultra-wide-angle image and that corresponds to the long-focus image, where the area is a long-focus FOV area. Then, the electronic device 100 uses the long-focus image to improve image quality of a long-focus FOV image in the ultra-wide-angle image, thereby improving image quality of macro shooting. In specific application, an image fusion manner may be arbitrary. For example, the long-focus FOV area in the ultra-wide-angle image is directly replaced with the long-focus image.

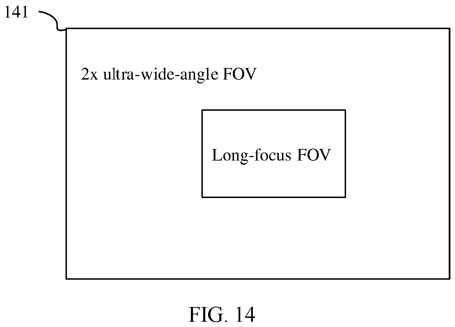

For example, refer to a schematic diagram of a fused image shown in FIG. 14. A fused image 141 is a fused image corresponding to a zoom ratio 2x, and the fused image includes a long-focus FOV area. When the zoom ratio is 2x, the electronic device 100 shoots a 2x ultra-wide-angle image by using an ultra-wide-angle macro camera, and shoots a long-focus image by using a long-focus macro camera; and performs image feature matching on the long-focus image and the ultra-wide-angle image to determine a long-focus FOV area in the ultra-wide-angle image, and performs image fusion on the long-focus image and the ultra-wide-angle image to obtain the fused image 141, so as to improve image quality of the long-focus FOV area in the ultra-wide-angle image by using the long-focus image.

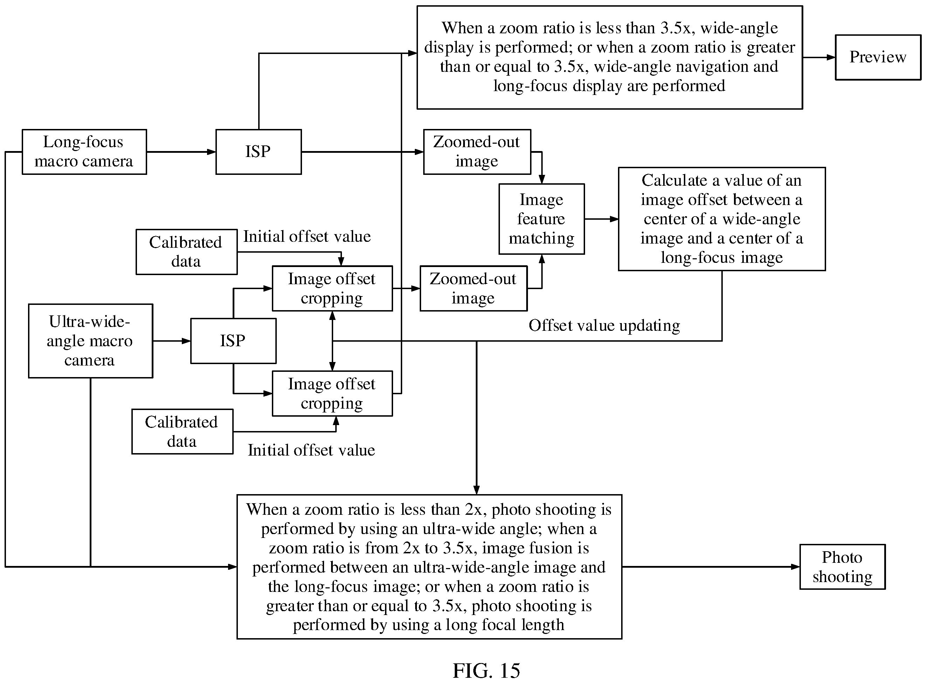

For example, the following provides description with reference to a schematic flowchart of macro shooting shown in FIG. 15.

In this case, the electronic device 100 includes an ultra-wide-angle macro camera and a long-focus macro camera.

After entering a macro shooting mode, the electronic device 100 enables the long-focus macro camera and the ultra-wide-angle macro camera, and obtains images captured by the two macro cameras. In a preview phase, when a zoom ratio is less than 3.5x, ultra-wide-angle display is performed, that is, the image captured by the ultra-wide-angle macro camera is used as a preview image. When the zoom ratio is greater than or equal to 3.5x, long-focus display and wide-angle navigation are performed, that is, the image captured by the long-focus camera is used as the preview image, and the image captured by the ultra-wide-angle macro camera is used as a navigation image.

It should be noted that, for a solution of navigation preview and image center alignment, refer to descriptions of corresponding content above. Details are not described herein again.

In addition, the electronic device 100 further calculates, through image feature matching, a value of an image offset between a center of the ultra-wide-angle image and a center of the long-focus image.

When the zoom ratio is less than 2x, the electronic device 100 performs photo shooting by using an ultra-wide angle.

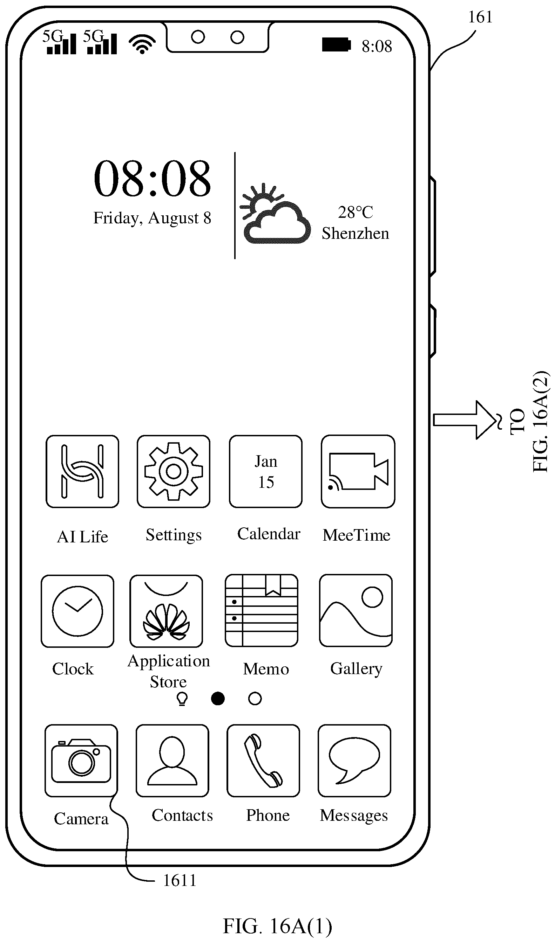

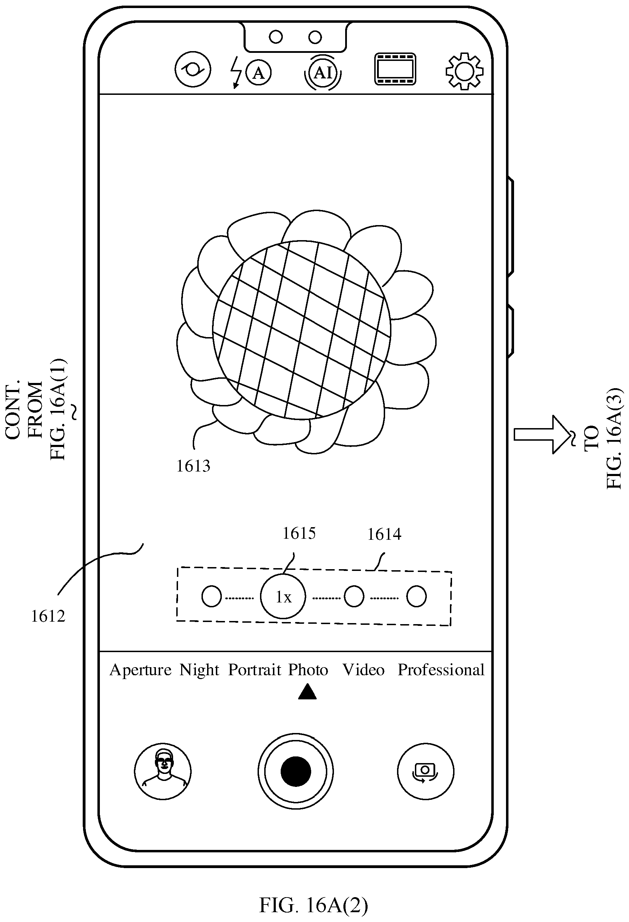

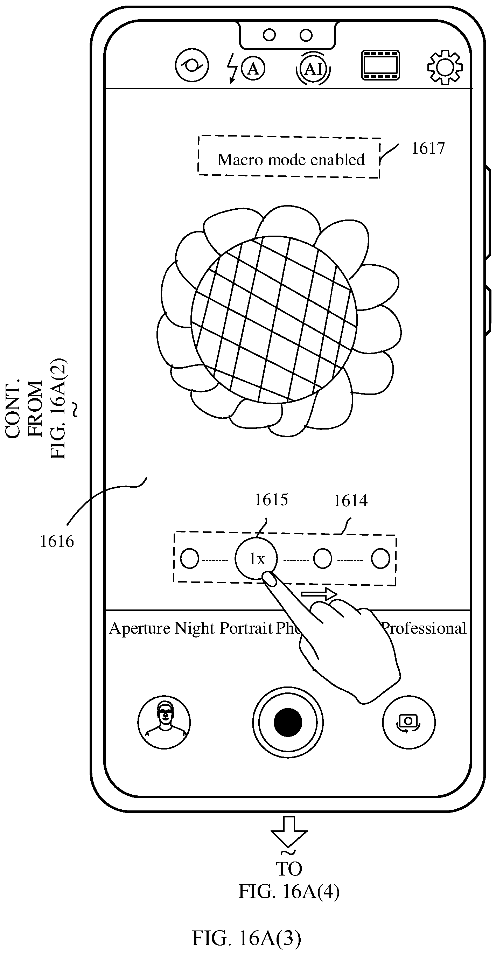

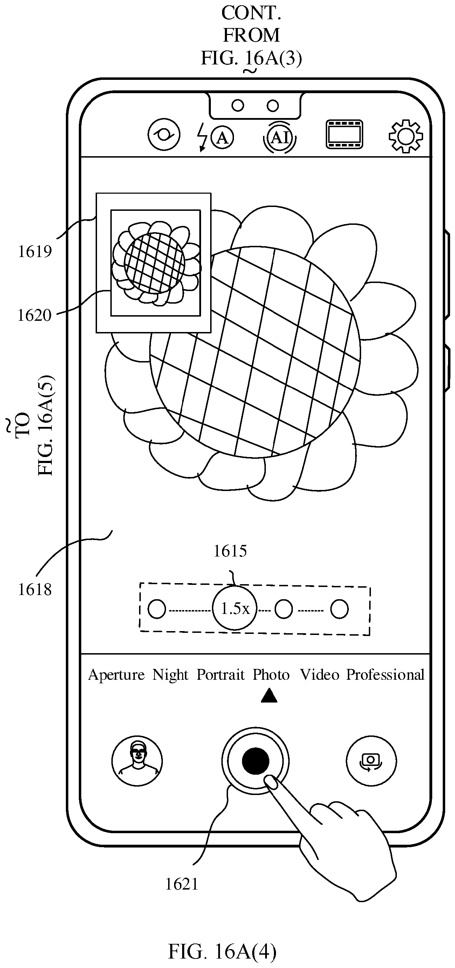

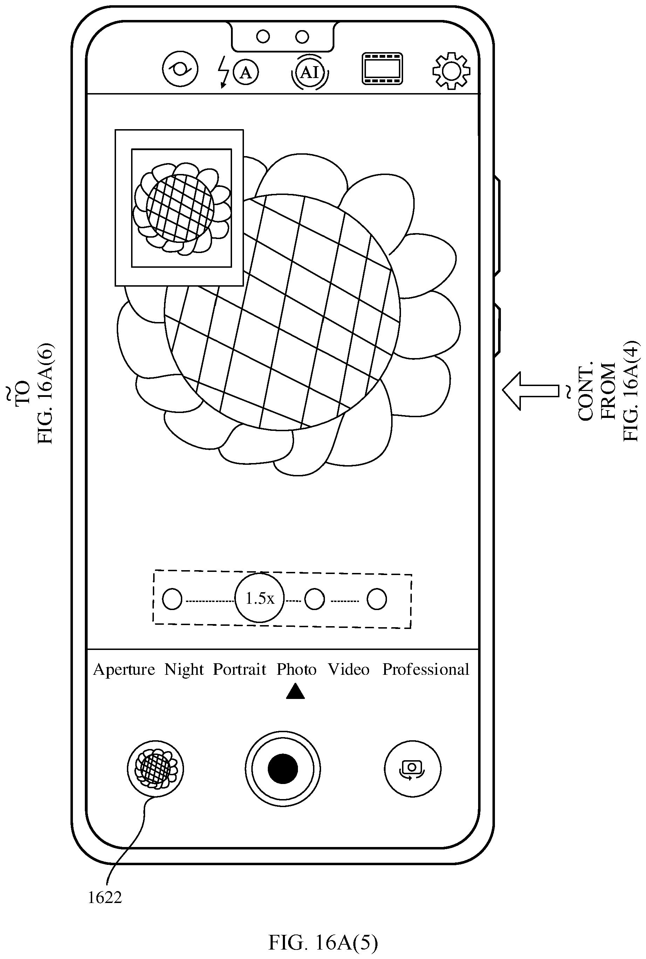

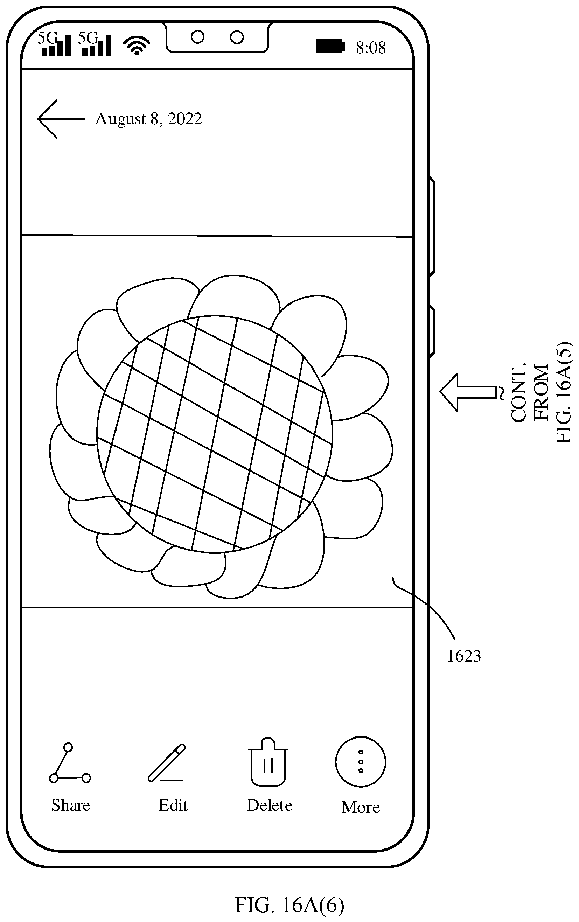

For example, refer to a schematic diagram of macro photo shooting shown in FIG. 16A(1) to FIG. 16A(6). A mobile phone 161 includes a main camera, a long-focus macro camera, and an ultra-wide-angle macro camera.

After detecting a tap operation on Camera 1611, the mobile phone 161 displays a photo preview interface 1612 in response to the tap operation. The photo preview interface 1612 includes a shooting subject 1613, a zoom bar 1614, and a zoom control 1615, and in this case, the zoom bar 1614 is at 1x. In this case, an image captured by the main camera is displayed in the photo preview interface as a preview interface.

In a photo preview state, if the mobile phone 161 determines that a condition for automatically entering a macro shooting mode is met, the mobile phone 161 displays a photo preview interface 1616. The photo preview interface 1616 includes prompt information 1617. When entering the macro shooting mode, the mobile phone 161 uses the ultra-wide-angle macro camera for macro shooting by default, that is, switches the main camera to the ultra-wide-angle macro camera, and displays an image captured by the ultra-wide-angle macro camera in the photo preview interface 1616.

After entering the macro shooting mode, the mobile phone 161 detects a drag operation on the zoom control 1615, and in response to the drag operation, pushes a zoom motor and a focus motor to perform zooming and focusing, and outputs an image in the preview interface.

When the mobile phone 161 detects that the zoom control 1615 is at 1.5x, the mobile phone 161 displays a photo preview interface 1618. The photo preview interface 1618 includes a navigation window 1619 used to display a navigation image, and a rectangular block 1620 identifying a relative location relationship between the preview image and the navigation image. In this case, the zoom ratio 1.5x falls in a focal length range of the ultra-wide-angle macro camera. The mobile phone 161 uses an ultra-wide-angle partial FOV image as the preview image, and uses an ultra-wide-angle full FOV image as the navigation image.

When the zoom ratio is 1.5x, the mobile phone 161 detects a tap operation on a photo shooting control 1621, and performs a photo shooting operation in response to the tap operation. In this case, because the zoom ratio 1.5x is less than 2x, an ultra-wide angle is used for photo shooting, that is, the image captured by the ultra-wide-angle macro camera is used as a shot photo, and the photo is displayed in a control 1622. When the mobile phone 161 detects a tap operation on the control 1622, the mobile phone 161 displays a photo preview image 1623. A photo displayed in the photo preview image 1623 is the image captured by the ultra-wide-angle macro camera when the zoom ratio is 1.5x.

It should be noted that, in a zoom process of the macro shooting mode, in a process of zooming from an ultra-wide-angle focal length range to a long-focus focal length range, image offset cropping may be performed by using the foregoing image alignment solution, so that image transition in the zoom process is more smooth and natural.

When the zoom ratio is 2x to 3.5x, the electronic device 100 determines a long-focus FOV area in an ultra-wide-angle image based on an updated image offset value, and performs photo shooting through fusion of the ultra-wide-angle image and a long-focus image.

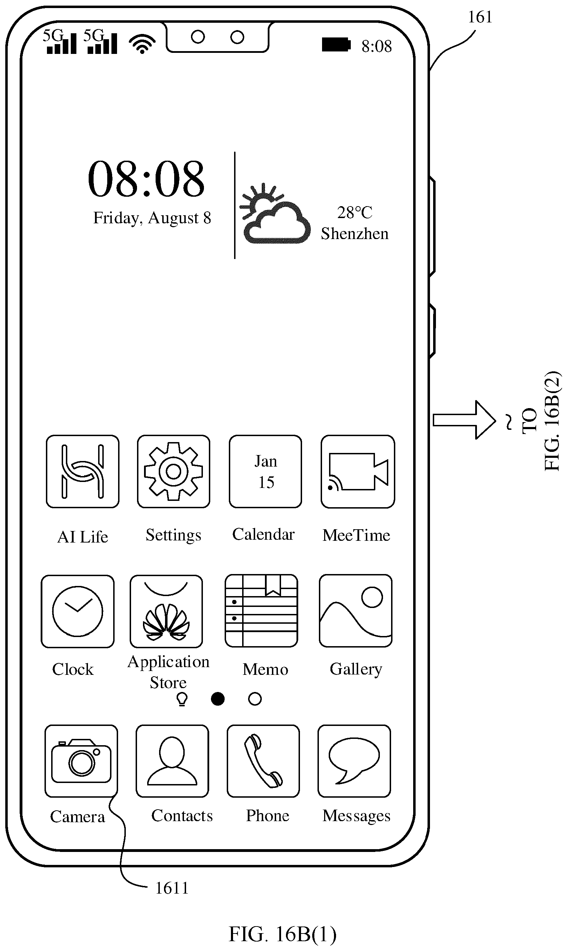

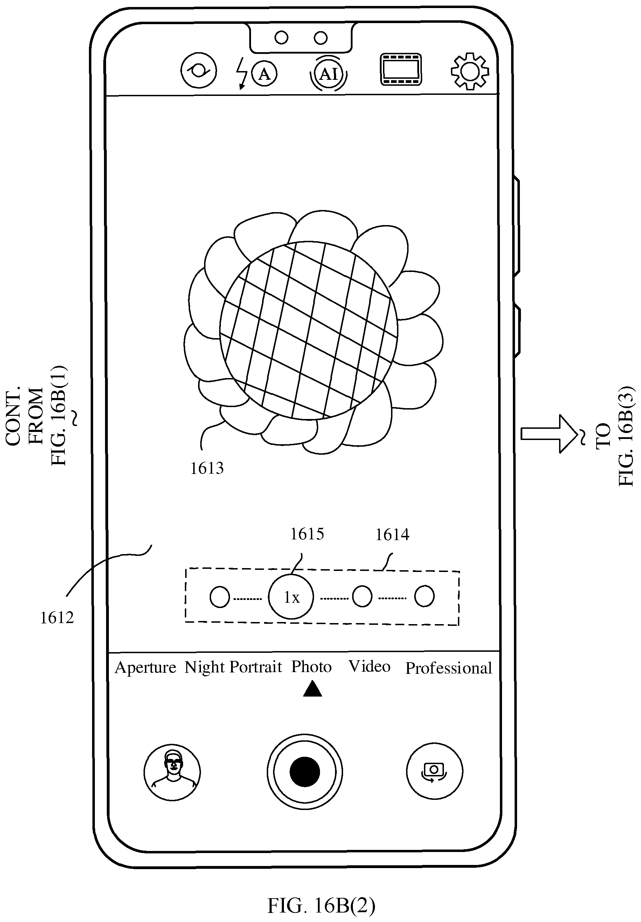

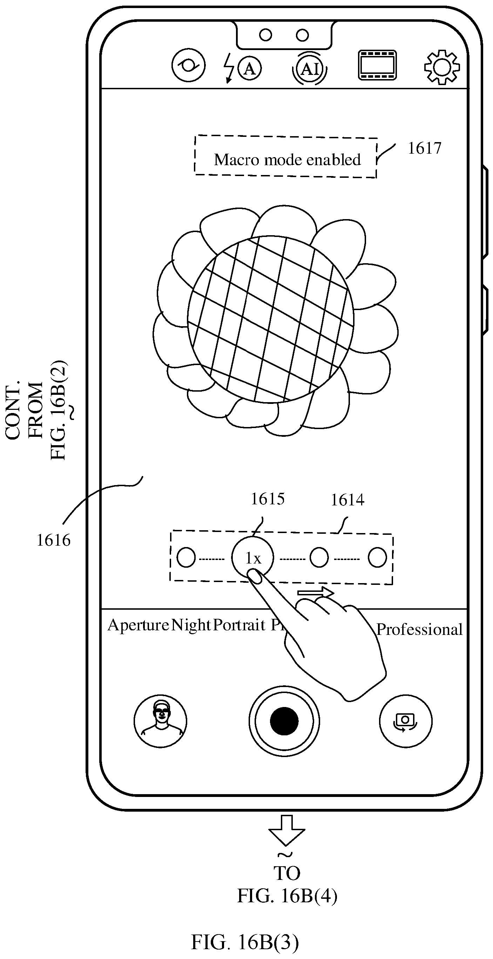

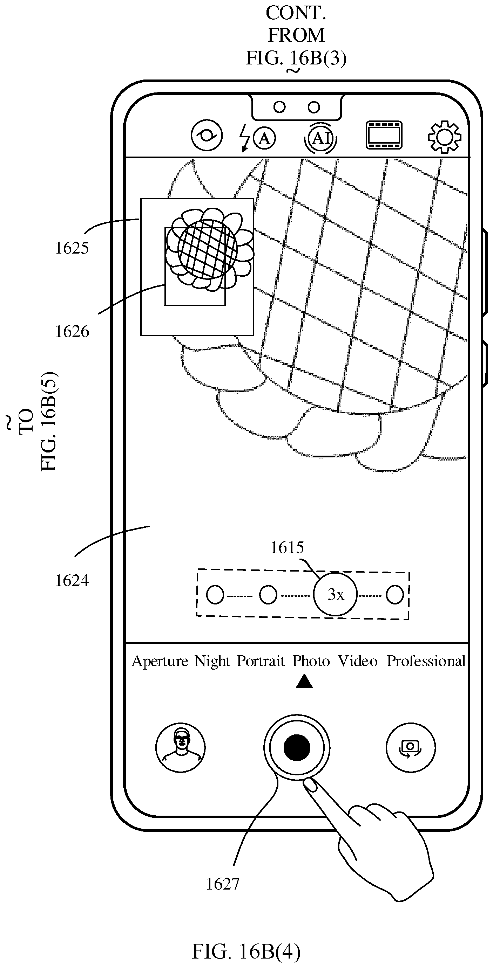

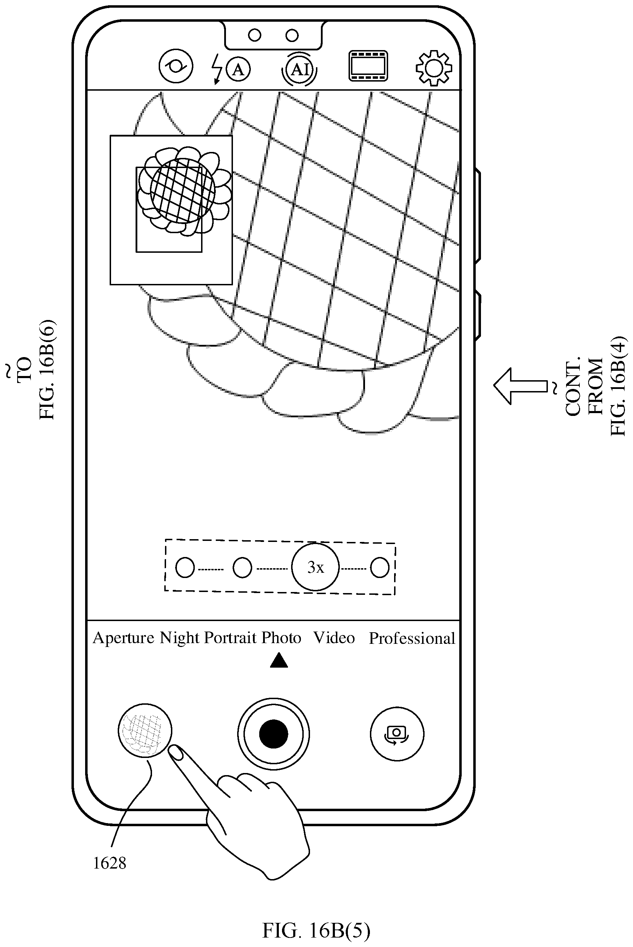

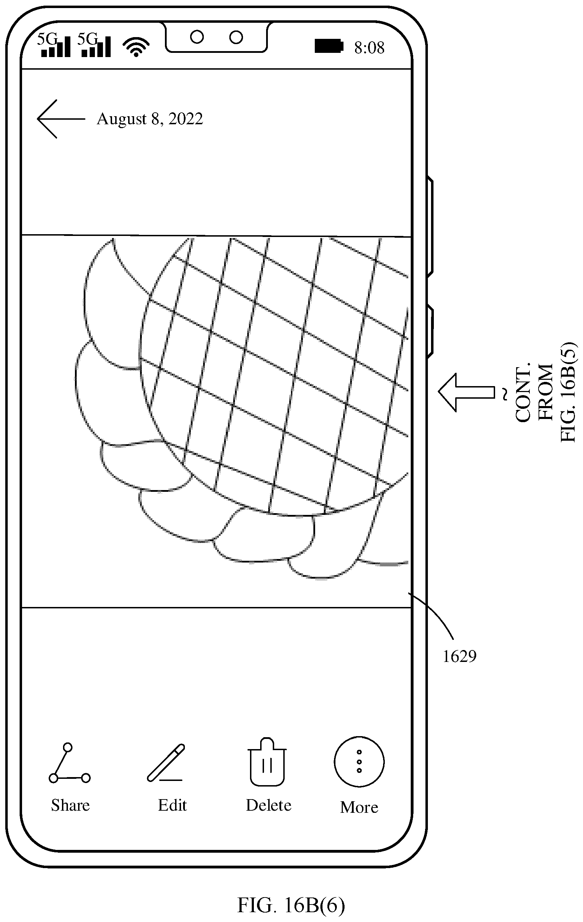

For example, refer to another schematic diagram of macro photo shooting shown in FIG. 16B(1) to FIG. 16B(6). Based on the scenario in FIG. 16A(1) to FIG. 16A(6), the mobile phone 161 detects a drag operation on the zoom control 1615 in the photo preview state, and outputs an image in the preview interface in response to the drag operation.

When the mobile phone 161 detects that the zoom control 1615 is at 3x, the mobile phone 161 displays a photo preview interface 1624. The photo preview interface 1624 includes a navigation window 1625 used to display a navigation image, and a rectangular block 1626 identifying a relative location relationship between the preview image and the navigation image. In this case, the zoom ratio 3x falls in a focal length range of the long-focus macro camera. The mobile phone 161 uses the ultra-wide-angle partial FOV image as the preview image, and uses the ultra-wide-angle full FOV image as the navigation image.

When the zoom ratio is 3x, the mobile phone 161 detects a tap operation on a photo shooting control 1627, and performs a photo shooting operation in response to the tap operation. In this case, because the zoom ratio 3x is greater than 2x and less than 3.5x, a manner of fusion of an ultra-wide-angle image and a long-focus image is used for photo shooting, that is, image fusion is performed on the image captured by the ultra-wide-angle macro camera and an image captured by the long-focus macro camera to obtain a fused image, and the fused image is displayed in a control 1628. When the mobile phone 161 detects a tap operation on the control 1628, the mobile phone 161 displays a photo preview image 1629. A photo displayed in the photo preview image 1629 is a fused image obtained through image fusion when the zoom ratio is 3x.

When the zoom ratio is greater than or equal to 3.5x, the electronic device 100 performs photo shooting by using a long focus.

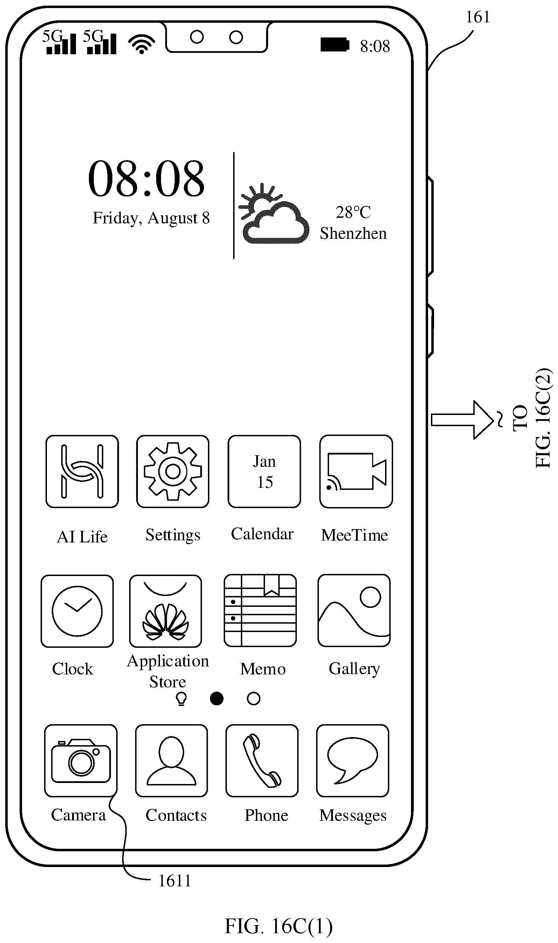

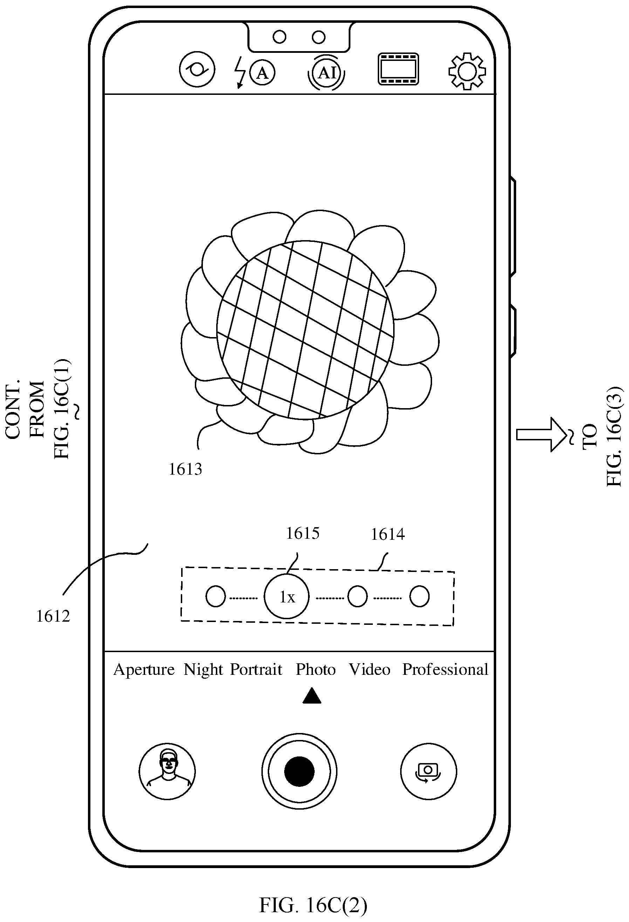

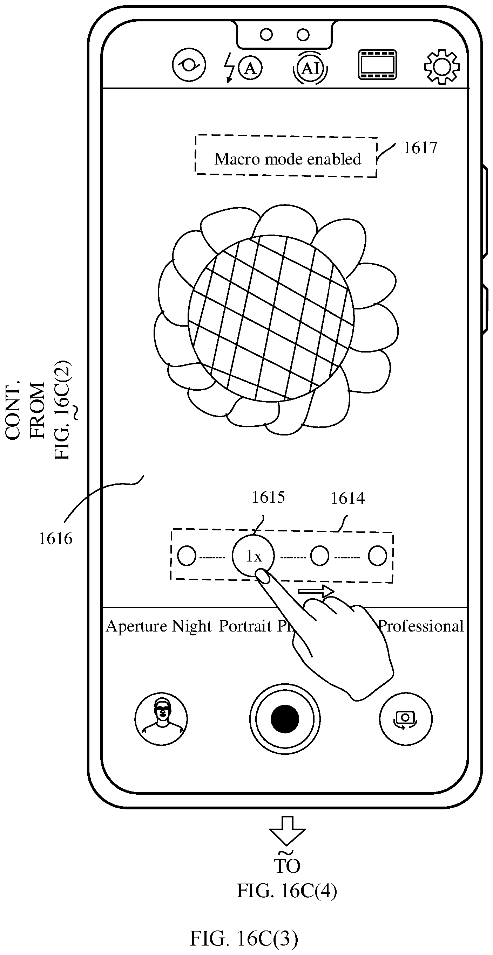

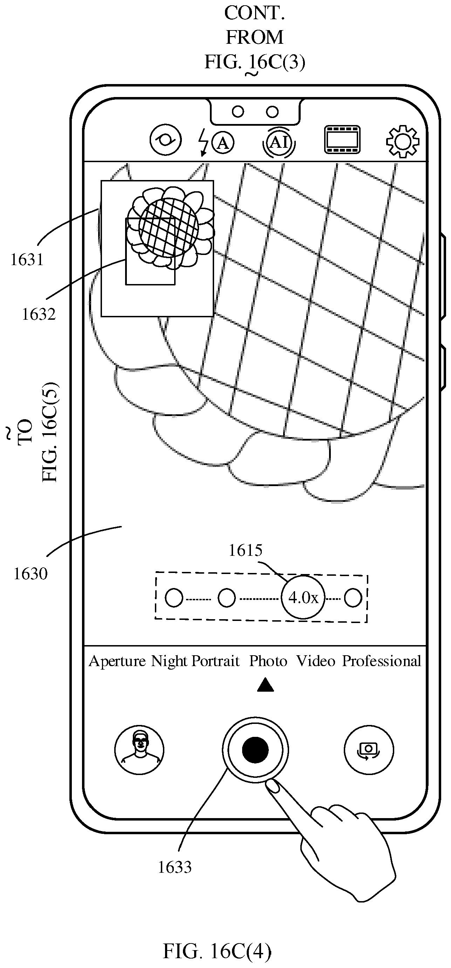

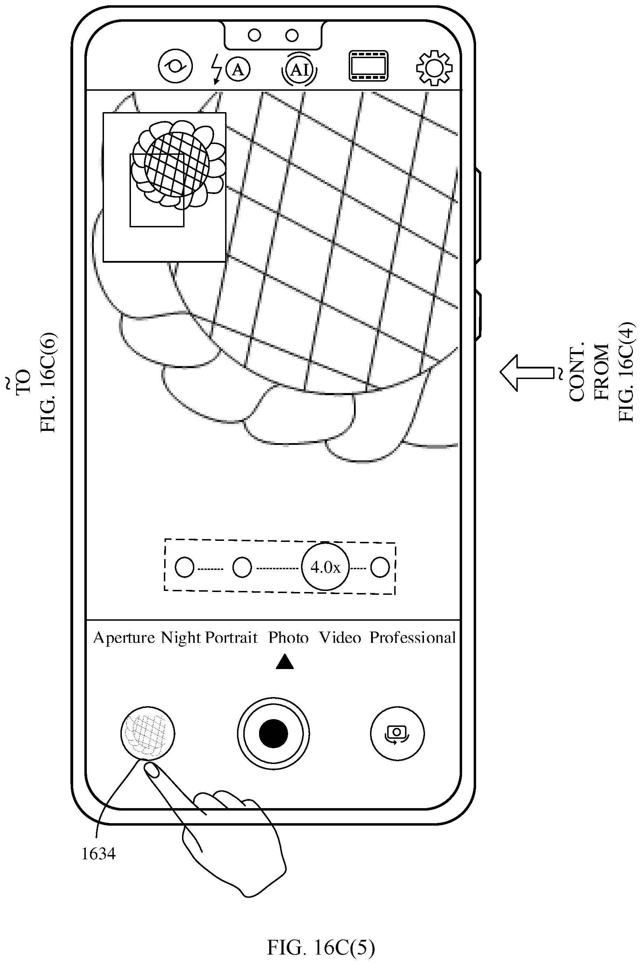

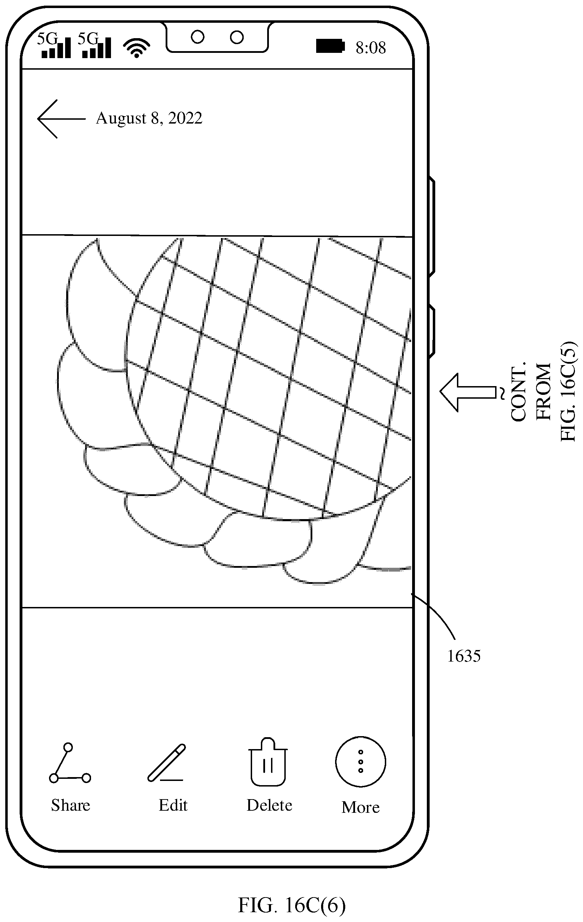

For example, refer to still another schematic diagram of macro photo shooting shown in FIG. 16C(1) to FIG. 16C(6). Based on the scenario in FIG. 16A(1) to FIG. 16A(6), after entering the macro shooting mode, the mobile phone 161 detects a drag operation on the zoom control 1615, and in response to the drag operation, pushes the zoom motor and the focus motor to perform zooming and focusing, and outputs an image in the preview interface. In this case, when the mobile phone 161 detects that the zoom control 1615 is at 4x, the mobile phone 161 displays a photo preview interface 1630. The photo preview interface 1630 includes a navigation window 1631 used to display a navigation image, and a rectangular block 1632 identifying a relative location relationship between the preview image and the navigation image. In this case, the mobile phone 161 switches the ultra-wide-angle macro camera to the long-focus macro camera. The zoom ratio 4x falls in the focal length range of the long-focus macro camera. The mobile phone 161 uses the image captured by the ultra-wide-angle macro camera as the navigation image, and uses the image captured by the long-focus macro camera as the preview image.

When the zoom ratio is 4x, the mobile phone 161 detects a tap operation on a photo shooting control 1633, and performs a photo shooting operation in response to the tap operation. In this case, because the zoom ratio 4x is greater than 3.5x, a long focal length is used for photo shooting, that is, the image captured by the long-focus macro camera is used as a shot photo, and the photo is displayed in a control 1634. When the mobile phone 161 detects a tap operation on the control 1634, the mobile phone 161 displays a photo preview image 1635. A photo displayed in the photo preview image 1635 is the image captured by the long-focus macro camera when the zoom ratio is 4x.

It should be noted that in the photo shooting scenario shown in FIG. 16A(1) to FIG. 16A(6), in the zoom process of the macro shooting mode, when the zoom ratio reaches a camera switching ratio, the mobile phone 161 switches the ultra-wide-angle macro camera to the long-focus macro camera. In addition, in a process of zooming from the ultra-wide-angle focal length range to the long-focus focal length range, a value of an image offset between a center of the ultra-wide-angle image and a center of the long-focus image is determined through image feature matching, and image offset cropping is performed based on the image offset value, to implement alignment between the center of the ultra-wide-angle image and the center of the long-focus image. In addition, in the preview phase of the macro shooting mode, an image captured by a corresponding macro camera is used as the navigation image and the preview image based on the zoom ratio.

It should be noted that, although the foregoing description is based on a photo preview scenario as an example, the macro shooting solution based on at least two macro cameras, the solution of automatically entering and exiting a macro shooting mode, the image center alignment solution, and the preview navigation solution that are provided in embodiments of this application may be further applicable to other scenarios, for example, a long-focus video recording preview scenario and a video shooting scenario. This is not limited herein.

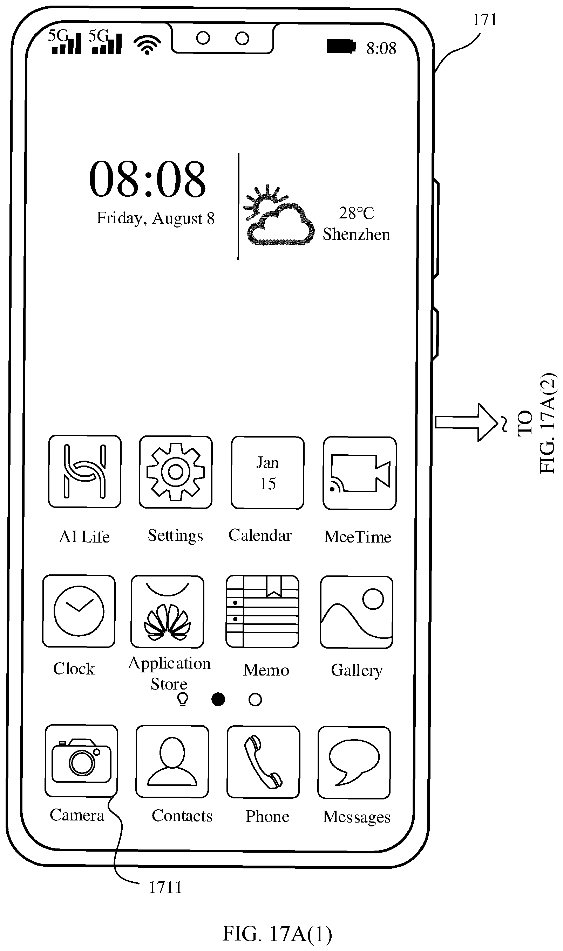

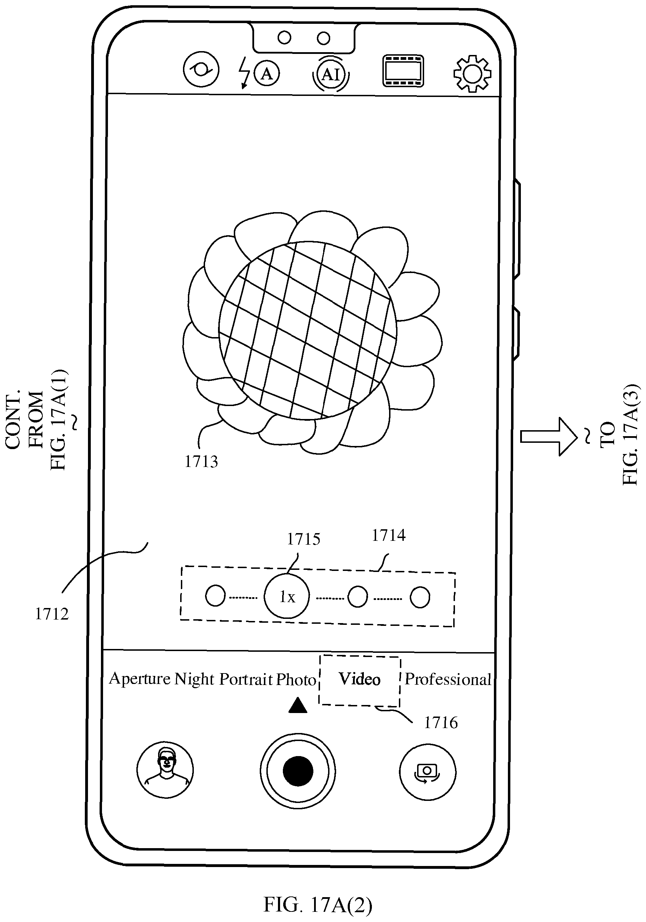

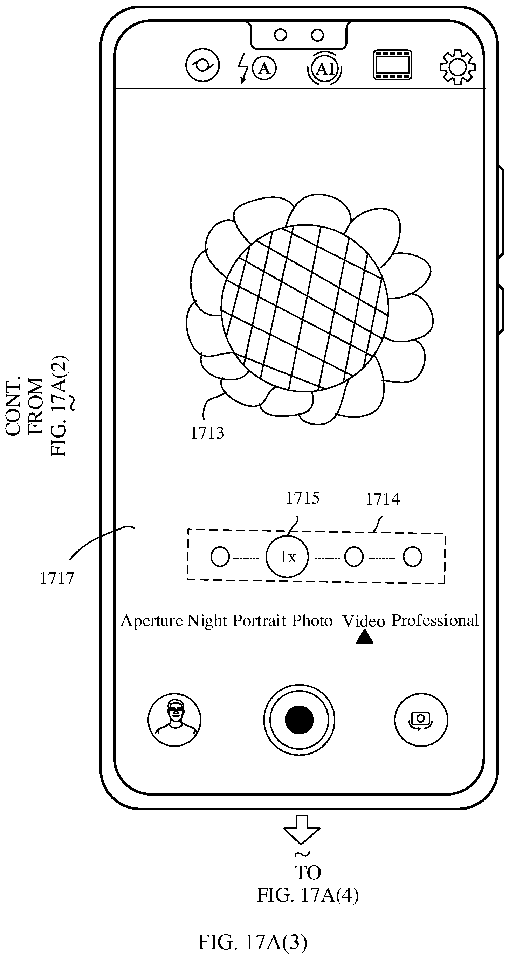

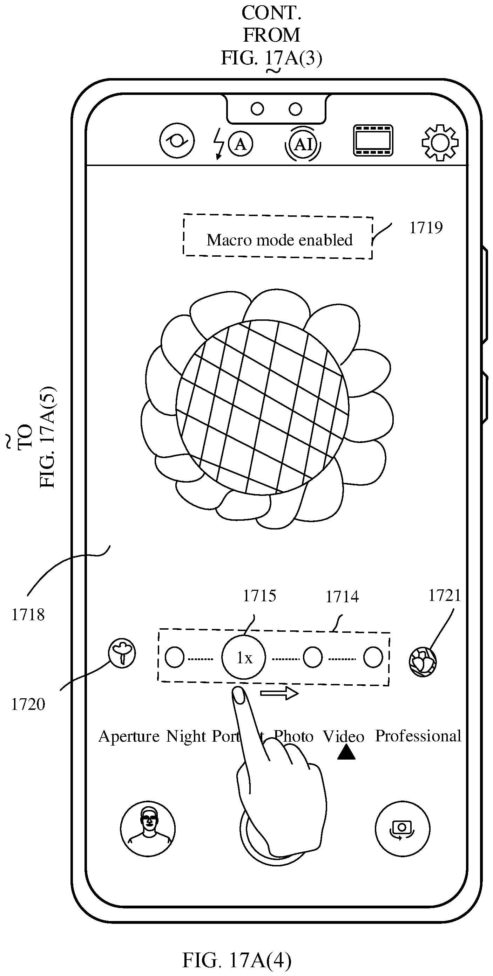

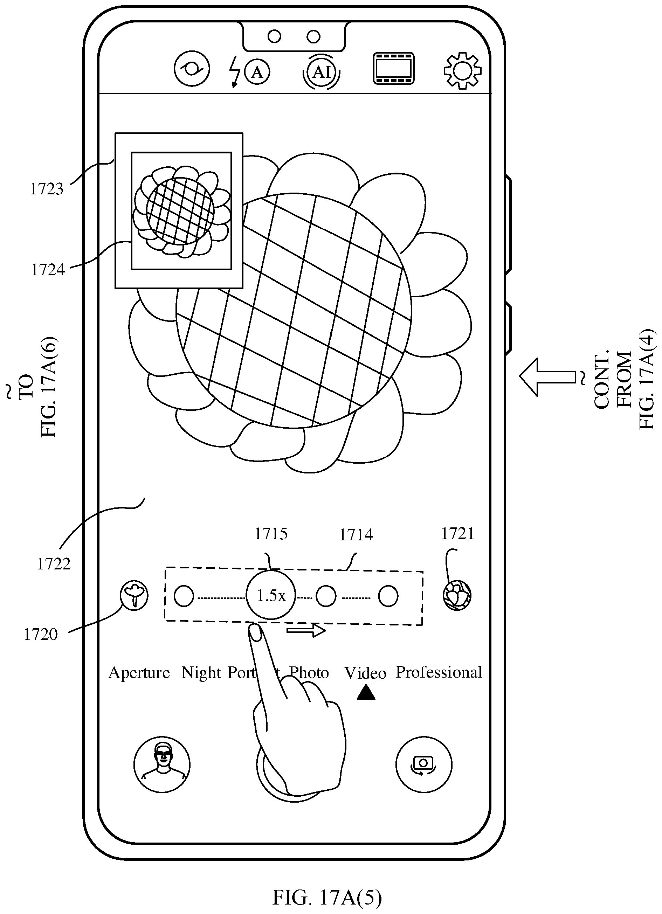

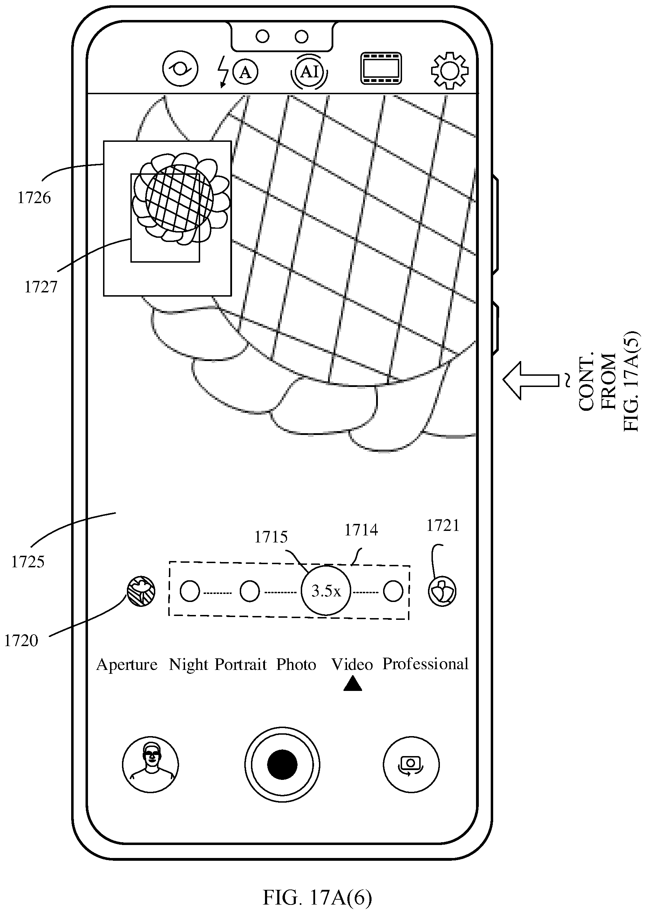

For example, refer to a schematic diagram of macro video recording shown in FIG. 17A(1) to FIG. 17A(6). A mobile phone 171 includes a main camera, a long-focus macro camera, and an ultra-wide-angle macro camera.

As shown in FIG. 17A(1) to FIG. 17A(6), after detecting a tap operation on Camera 1711, the mobile phone 171 displays a photo preview interface 1712 in response to the tap operation. The photo preview interface 1712 includes a shooting subject 1713, a zoom bar 1714, and a zoom control 1715, and in this case, the zoom bar 1714 is at 1x. In this case, an image captured by the main camera is displayed in the photo preview interface.

When the mobile phone 171 in a photo preview state detects a tap operation on a "Video" control 1716, the mobile phone 171 enters a video recording mode in response to the tap operation, and displays a video recording preview interface 1717. The image captured by the main camera is displayed in the video recording preview interface 1717.

After entering the video recording mode, if the mobile phone 171 detects, in the video preview state, that shooting distances of N consecutive frames of images are less than a first threshold, the mobile phone 171 determines that a condition for automatically entering a macro shooting mode is met, enters the macro shooting mode, and displays a video recording preview interface 1718. The video recording preview interface 1718 includes prompt information 1719, an ultra-wide-angle macro shortcut control 1720, and a long-focus macro shortcut control 1721. In this case, when the mobile phone 171 enters the macro shooting mode, the ultra-wide-angle macro camera is used by default, and in the video recording preview interface 1718, the ultra-wide-angle macro shortcut control 1720 is in an enabled state, and the long-focus macro shortcut control 1721 is in a disabled state. In addition, an image captured by the ultra-wide-angle macro camera is displayed in the video recording preview interface 1718.

A user drags the zoom control 1715 to increase a zoom ratio from 1x to 1.5x. The mobile phone 171 determines, in response to the drag operation on the zoom control 1715, that a current zoom ratio is 1.5x, and that the current zoom ratio does not reach a camera switching ratio, continues to perform macro shooting by using the ultra-wide-angle macro camera, and displays, in a video recording preview interface 1722, the image captured by the ultra-wide-angle macro camera. In this case, the current zoom ratio 1.5x falls in a focal length range of the ultra-wide-angle macro camera, and a full FOV image captured by the ultra-wide-angle macro camera is used as a navigation image, and a partial FOV image captured by the ultra-wide-angle macro camera is used as a preview image, that is, displays a navigation window 1723 used to display the navigation image in the video recording preview interface 1722, and identifies a relative location relationship between the preview image and the navigation image by using a rectangular block 1724.

The user drags the zoom control 1715 to increase the zoom ratio from 1.5x to 3.5x. The mobile phone 171 determines, in response to the drag operation on the zoom control 1715, that a current zoom ratio is 3.5x, and that the current zoom ratio reaches a camera switching ratio, switches the ultra-wide-angle macro camera to the long-focus macro camera, and displays, in a video recording preview interface 1725, an image captured by the long-focus macro camera as the preview image; and displays, in a superimposed manner, the image captured by the ultra-wide-angle macro camera as the navigation image on the preview image, that is, displays a navigation window 1726 used to display the navigation image, and identifies a relative location relationship between the long-focus image and the ultra-wide-angle image by using a rectangular block 1727.

In addition, because when the zoom ratio is 3.5x, the mobile phone 171 switches from ultra-wide-angle macro to long-focus macro, in the video recording preview interface 1725, the ultra-wide-angle macro shortcut control 1720 is in the disabled state, and the long-focus macro shortcut control 1721 is in the enabled state.

It may be understood that, in a process of zooming from the ultra-wide-angle focal length range to the long-focus focal length range, the mobile phone 171 may calculate a value of an image offset between a center of the ultra-wide-angle image and a center of the long-focus image through image feature matching, and perform image offset cropping based on the image offset value, to obtain a to-be-displayed image, so that image transition in a macro zoom process is more natural and smooth.

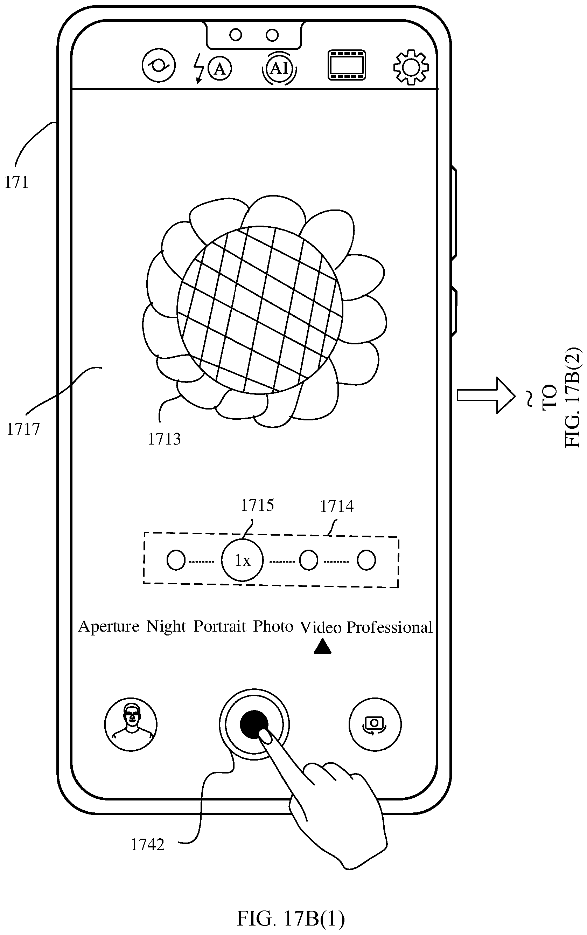

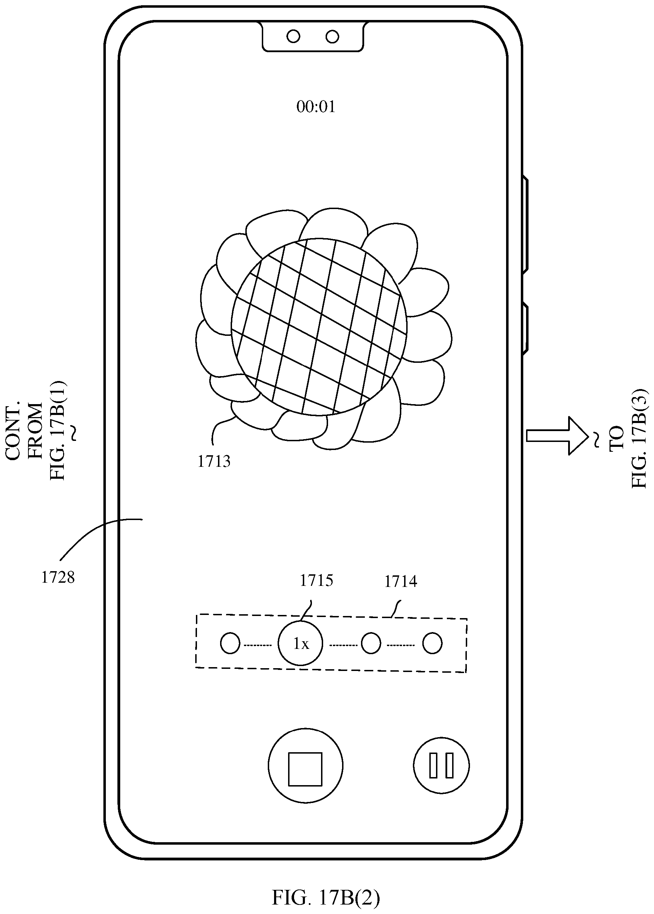

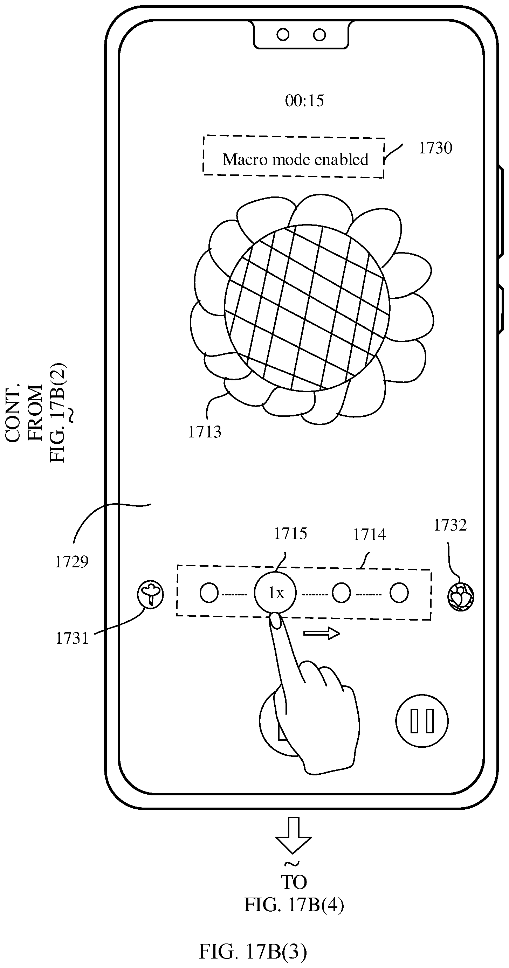

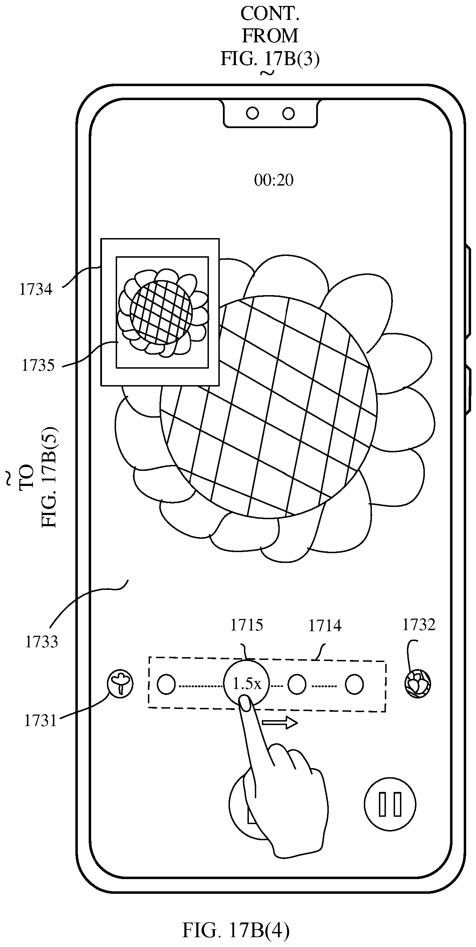

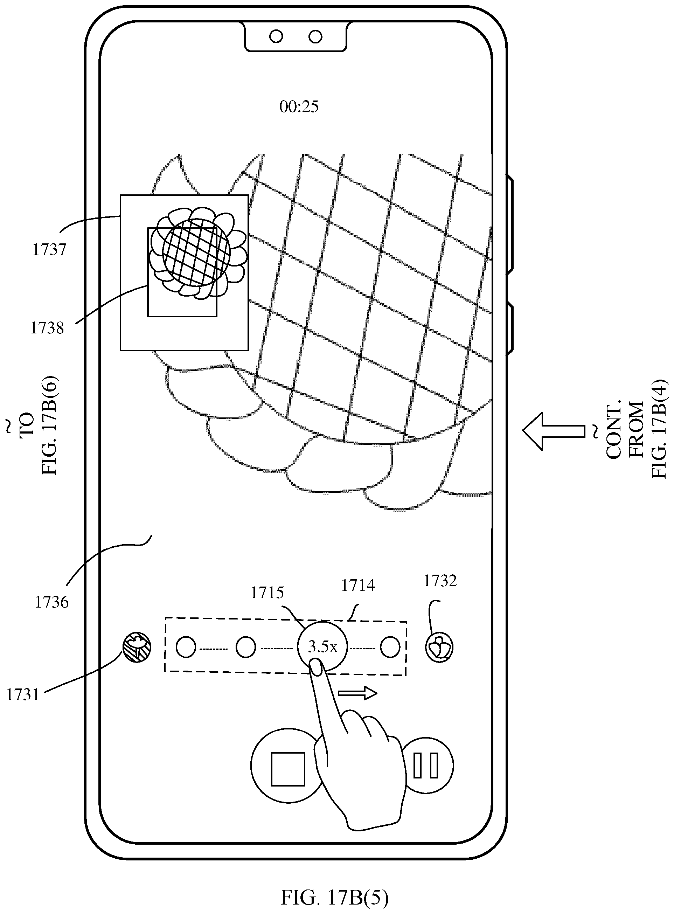

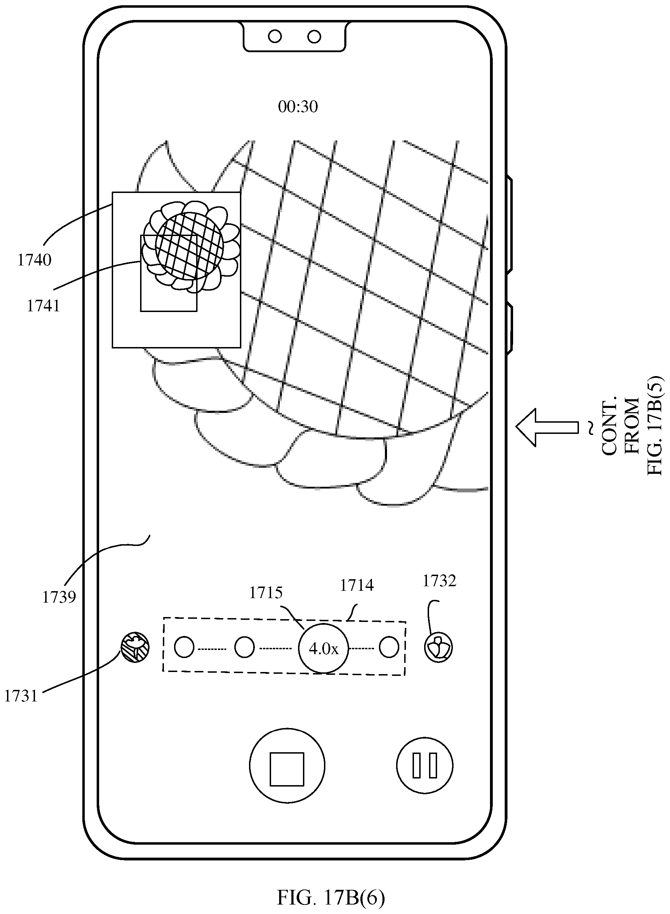

For another example, refer to a schematic diagram of macro video recording in FIG. 17B(1) to FIG. 17B(6). Based on the scenario in FIG. 17A(1) to FIG. 17A(6), after entering the video recording mode and displaying the video recording preview interface 1717, the mobile phone 171 detects a tap operation on a control 1742, and in response to the tap operation, performs video recording, and displays a video recording interface 1728. In this case, the image captured by the main camera is displayed in the video recording interface 1728.

If the mobile phone 171 detects, in a video recording state, that shooting distances of N consecutive frames of images are less than the first threshold, the mobile phone 171 determines that the condition for automatically entering the macro shooting mode is met, enters the macro shooting mode, and displays a video recording interface 1729. The video recording interface 1729 includes prompt information 1730, an ultra-wide-angle macro shortcut control 1731, and a long-focus macro shortcut control 1732. When the mobile phone 171 enters the macro shooting mode, ultra-wide-angle macro is entered by default, the ultra-wide-angle macro shortcut control 1731 is in an enabled state, and the long-focus macro shortcut control 1732 is in a disabled state. In this case, a video recording image switches from the main camera to the ultra-wide-angle macro camera, that is, the image captured by the ultra-wide-angle macro camera is displayed in the video recording interface 1729.

The user drags the zoom control 1715 to increase the zoom ratio from 1x to 1.5x. The mobile phone 171 determines, in response to the drag operation on the zoom control 1715, that a current zoom ratio is 1.5x, and that the current zoom ratio does not reach the camera switching ratio, continues to perform macro shooting by using the ultra-wide-angle macro camera, and displays, in a video recording interface 1733, the image captured by the ultra-wide-angle macro camera. In addition, because the zoom ratio 1.5x is of an ultra-wide-angle high ratio, the full FOV image captured by the ultra-wide-angle macro camera is used as the navigation image, and is displayed on the video recording image in a superimposed manner, as shown in a navigation window 1734 that is used to display the navigation image and that is in the video recording interface 1733, and a relative location relationship between the video recording image and the navigation image is identified by using a rectangular block 1735.

The user drags the zoom control 1715 to increase the zoom ratio from 1.5x to 3.5x. The mobile phone 171 determines, in response to the drag operation on the zoom control 1715, that a current zoom ratio is 3.5x, switches the ultra-wide-angle macro camera to the long-focus macro camera, and displays, in a video recording interface 1736, the image captured by the long-focus macro camera; and displays, in a superimposed manner, the image captured by the ultra-wide-angle macro camera as the navigation image on the video recording image, that is, displays a navigation window 1737 used to display the navigation image, and identifies a relative location relationship between the video recording image and the navigation image by using a rectangular block 1738.

The user drags the zoom control 1715 to increase the zoom ratio from 3.5x to 4x. The mobile phone 171 determines, in response to the drag operation on the zoom control 1715, that a current zoom ratio is 4x, and that the current zoom ratio belongs to the long-focus focal length range, and continues to display, in a video recording interface 1739, a partial FOV image captured by the long-focus macro camera; and displays a full FOV image captured by the long-focus macro camera as a navigation image on the recording image in a superimposed manner, as shown in a navigation window 1740 that is used to display the navigation image and that is in the video recording interface 1739, and identifies a relative location relationship between the recording image and the navigation image by using a rectangular block 1741.

It should be noted that, in the scenario in FIG. 17B(1) to FIG. 17B(6), in a zoom process of macro shooting, the mobile phone 171 may further calculate a value of an image offset between a center of the ultra-wide-angle image and a center of the long-focus image through image matching, and perform image offset cropping based on the image offset value, to obtain a to-be-displayed image, so that in a process of zooming from the ultra-wide-angle focal length range to the long-focus focal length range, image transition is more natural and smooth.

The electronic device provided in this embodiment of this application may include a memory, a processor, and a computer program that is stored in the memory and that can be run on the processor. When executing the computer program, the processor implements the method in any one of the foregoing method embodiments. An embodiment of this application further provides a computer-readable storage medium. The computer-readable storage medium stores a computer program. When the computer program is executed by a processor, steps in the foregoing method embodiments can be implemented. An embodiment of this application provides a computer program product. When the computer program product runs on an electronic device, the electronic device is enabled to implement the steps in the foregoing method embodiments when executing the computer program product. An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, descriptions of all embodiments have respective focuses. For a part that is not described in detail in an embodiment, refer to related descriptions in another embodiment. It should be understood that sequence numbers of the steps do not mean an execution sequence in embodiments. The execution sequence of the processes needs to be determined based on functions and internal logic of the processes, and should not constitute any limitation on the implementation processes of embodiments of this application. In addition, in the descriptions of the specification and claims of this application, the terms "first", "second", "third", and the like are merely intended for the purpose of differentiated description, but shall not be understood as an indication or an implication of relative importance. Reference to "an embodiment", "some embodiments", or the like described in the specification of this application indicates that one or more embodiments of this application include a specific feature, structure, or characteristic described with reference to embodiments. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized. In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A macro shooting method, applied to an electronic device, wherein the electronic device comprises at least two macro cameras, and the method comprises:

   in a macro shooting mode, when a zoom ratio is within a first ratio range, displaying, in a viewfinder frame, an image captured by a first macro camera;
   when the zoom ratio is a camera switching ratio, switching an image displayed in the viewfinder frame from the image captured by the first macro camera to an image captured by a second macro camera; and
when the zoom ratio is greater than the camera switching ratio and is within a second ratio range, displaying, in the viewfinder frame, the image captured by the second macro camera, wherein the second ratio range comprises the camera switching ratio, wherein
a focal length of the first macro camera is different from a focal length of the second macro camera; and
the at least two macro cameras comprise the first macro camera and the second macro camera.

2. The method according to claim 1, wherein the method further comprises:

displaying, in a superimposed manner, a navigation window on a preview image displayed in the viewfinder frame, wherein the navigation window is used to display a navigation image; and
a field of view of the navigation image is greater than a field of view of the preview image.

3. The method according to claim 2, wherein when the zoom ratio is within the second ratio range, the navigation image is the image captured by the first macro camera, and the preview image is the image captured by the second macro camera.

4. The method according to claim 2, wherein when the zoom ratio is within the first ratio range, the navigation image and the preview image each are the image captured by the first macro camera; and/or
when the zoom ratio is within the second ratio range, the navigation image and the preview image each are the image captured by the second macro camera.

5. The method according to claim 2, wherein when the zoom ratio is within the first ratio range, the navigation image and the preview image each are the image captured by the first macro camera; and
when the zoom ratio is within the second ratio range, the navigation image is the image captured by the first macro camera, and the preview image is the image captured by the second macro camera.

6. The method according to claim 2, wherein when the zoom ratio is within the first ratio range, the navigation image and the preview image each are the image captured by the first macro camera;

when the zoom ratio is within a third ratio range, the navigation image is the image captured by the first macro camera, and the preview image is the image captured by the second macro camera; and
when the zoom ratio is within a fourth ratio range, the navigation image and the preview image each are the image captured by the second macro camera, wherein
the second ratio range comprises the third ratio range and the fourth ratio range, and the third ratio range comprises the camera switching ratio.

7. The method according to any one of claims 2 to 6, wherein the zoom ratio is within the first ratio range; and
the displaying, in a viewfinder frame, an image captured by a first macro camera, and displaying, in a superimposed manner, a navigation window on a preview image displayed in the viewfinder frame comprises:

in a zoom process of the first ratio range, performing, based on an initially calibrated image offset value or an image offset value updated last time, image offset cropping on the image captured by the first macro camera, to obtain a first cropped image;
based on the image offset value, identifying, by using an identification pattern, a location of the first cropped image in the image captured by the first macro camera, to obtain a first identification image; and
displaying the first cropped image in the viewfinder frame, and displaying the first identification image in the navigation window of the viewfinder frame, wherein
the identification pattern identifies a relative location relationship between the preview image and the navigation image.

8. The method according to claim 7, wherein the method further comprises:

performing image feature matching based on the first cropped image and the image captured by the second macro camera, to obtain a first image feature matching result; and
determining, based on the first image feature matching result and a zoom ratio of the image captured by the first macro camera, an image offset value of the image captured by the first macro camera, and performing offset value updating based on the image offset value of the image captured by the first macro camera.

9. The method according to claim 8, wherein the determining, based on the first image feature matching result and a zoom ratio of the image captured by the first macro camera, an image offset value of the image captured by the first macro camera comprises:

obtaining, by using a formula $offset_{cur} = \dfrac{zoom_{cur} - zoom_{pre}}{zoom_{end} - zoom_{pre}} * (offset - offset_{pre}) + offset_{pre}$, the image offset value of the image captured by the first macro camera, wherein

*offset* represents a value of an offset from a field-of-view center of the first macro camera to a field-of-view center of the second macro camera, and is a pre-calibrated offset value or the image feature matching result;

$offset_{pre}$ represents an image offset value of a previous frame of image, and $offset_{cur}$ represents an image offset value of a current frame of image; and

$zoom_{pre}$ represents a zoom ratio of the previous frame of image, $zoom_{cur}$ represents a zoom ratio of the current frame of image, $zoom_{end}$ represents a zoom ratio obtained when image offset ends and is less than or equal to the camera switching ratio, and $zoom_{start}$ represents a zoom ratio obtained when image offset starts and is greater than or equal to a minimum zoom ratio of the first macro camera.

10. The method according to any one of claims 2 to 9, wherein the zoom ratio is within the second ratio range or the third ratio range; and
the displaying, in the viewfinder frame, the image captured by the second macro camera, and displaying, in a superimposed manner, a navigation window on a preview image displayed in the viewfinder frame comprises:

in a zoom process of the second ratio range or the third ratio range, performing digital zoom cropping on the image captured by the second macro camera, to obtain a second cropped image;
based on the initially calibrated image offset value or the image offset value updated last time, identifying a location of the second cropped image in a target image by using the identification pattern, to obtain a second identification image; and
displaying the second cropped image in the viewfinder frame, and displaying the second identification image in the navigation window of the viewfinder frame, wherein
the target image is a third cropped image obtained by performing, based on the initially calibrated image offset value or the updated image offset value, image offset cropping on the image captured by the first macro camera, or a full field-of-view image captured by the first macro camera.

11. The method according to claim 10, wherein the method further comprises:

performing image feature matching based on the second cropped image and the target image, to obtain a second image feature matching result; and
determining an image offset value of the target image based on the second image feature matching result and a zoom ratio of the target image, and performing offset value updating based on the image offset value of the target image.

12. The method according to claim 10, wherein the zoom ratio is within the fourth ratio range; and
the displaying, in the viewfinder frame, the image captured by the second macro camera, and displaying, in a superimposed manner, a navigation window on a preview image displayed in the viewfinder frame comprises:

performing digital zoom cropping on the image captured by the second macro camera, to obtain a fourth cropped image;
identifying, by using the identification pattern, a location of the fourth cropped image in the image captured by the second macro camera, to obtain a third identification image; and
displaying the fourth cropped image in the viewfinder frame, and displaying the third identification image in the navigation window of the viewfinder frame.

13. The method according to any one of claims 1 to 12, wherein the method further comprises:

if the zoom ratio is within a fifth ratio range, when detecting a photo shooting operation, in response to the photo shooting operation, outputting the image captured by the first macro camera;
if the zoom ratio is within a sixth ratio range, when detecting a photo shooting operation, in response to the photo shooting operation, performing image fusion on the image captured by the first macro camera and the image captured by the second macro camera, to obtain a fused image, and outputting the fused image; or
if the zoom ratio is within the second ratio range, when detecting a photo shooting operation, in response to the photo shooting operation, outputting the image captured by the second macro camera, wherein the first ratio range comprises the fifth ratio range and the sixth ratio range.

14. The method according to claim 13, wherein the fused image comprises a target area and a non-target area, and image quality of the target area is higher than image quality of the non-target area; and
the target area is an area that is in the image captured by the first macro camera and that corresponds to the image captured by the second macro camera.

15. The method according to any one of claims 1 to 14, wherein the method further comprises:

detecting a first shooting distance of an image captured by a target camera; and
if first shooting distances of N consecutive frames of images are all less than a first threshold, switching from the target camera to a default macro camera, and displaying, in the viewfinder frame, an image captured by the default macro camera, wherein
the default macro camera is the first macro camera or the second macro camera.

16. The method according to claim 15, wherein the method further comprises:
if the first shooting distances of the N consecutive frames of images are all less than the first threshold, displaying prompt information in the viewfinder frame, wherein the prompt information is used to prompt that the macro shooting mode is entered.

17. The method according to claim 15, wherein the method further comprises:

detecting a second shooting distance of an image captured by a current macro camera; and
if second shooting distances of M consecutive frames of images are all greater than a second threshold, switching from the current macro camera to the default macro camera, and displaying, in the viewfinder frame, the image captured by the default macro camera, wherein
the current macro camera is the first macro camera or the second macro camera.

18. The method according to claim 1, wherein the viewfinder frame further comprises a first shortcut control and a second shortcut control;

the first shortcut control is used to switch the image displayed in the viewfinder frame from the image captured by the first macro camera to the image captured by the second macro camera; and
the second shortcut control is used to switch the image displayed in the viewfinder frame from the image captured by the second macro camera to the image captured by the first macro camera.

19. A macro shooting method, applied to an electronic device, wherein the method comprises:
in a macro shooting mode, displaying, in a viewfinder frame, an image captured by a first macro camera, and displaying, in a superimposed manner, a navigation window on a preview image displayed in the viewfinder frame, wherein the navigation window is used to display a navigation image, and a field of view of the navigation image is greater than a field of view of the preview image.

20. The method according to claim 19, wherein the navigation image is the image captured by the first macro camera or an image captured by a second macro camera, and a field of view of the second macro camera is greater than a field of view of the first macro camera.

21. The method according to claim 20, wherein the navigation image is the image captured by the first macro camera; and
the displaying, in a viewfinder frame, an image captured by a first macro camera, and displaying, in a superimposed manner, a navigation window on a preview image displayed in the viewfinder frame comprises:

performing, based on an initially calibrated image offset value or an image offset value updated last time, image offset cropping on the image captured by the first macro camera, to obtain a first cropped image;
based on the image offset value, identifying, by using an identification pattern, a location of the first cropped image in the image captured by the first macro camera, to obtain a first identification image; and
displaying the first cropped image in the viewfinder frame, and displaying the first identification image in the navigation window of the viewfinder frame, wherein
the identification pattern identifies a relative location relationship between the preview image and the navigation image.

**22.** The method according to claim 21, wherein the method further comprises:

performing image feature matching based on the first cropped image and the image captured by the second macro camera, to obtain a first image feature matching result; and
determining, based on the first image feature matching result and a zoom ratio of the image captured by the first macro camera, an image offset value of the image captured by the first macro camera, and performing offset value updating based on the image offset value of the image captured by the first macro camera.

**23.** The method according to claim 22, wherein the determining, based on the first image feature matching result and a zoom ratio of the image captured by the first macro camera, an image offset value of the image captured by the first macro camera comprises:

obtaining, by using a formula $$offset_{cur} = \frac{zoom_{cur} - zoom_{pre}}{zoom_{end} - zoom_{pre}} * (offset - offset_{pre}) + offset_{pre}$$ , the image offset value of the image captured by the first macro camera, wherein

*offset* represents a value of an offset from a field-of-view center of the first macro camera to a field-of-view center of the second macro camera, and is a pre-calibrated offset value or the image feature matching result;
$offset_{pre}$ represents an image offset value of a previous frame of image, and $offset_{cur}$ represents an image offset value of a current frame of image; and
$zoom_{pre}$ represents a zoom ratio of the previous frame of image, $zoom_{cur}$ represents a zoom ratio of the current frame of image, $zoom_{end}$ represents a zoom ratio obtained when image offset ends and is less than or equal to a camera switching ratio, and $zoom_{start}$ represents a zoom ratio obtained when image offset starts and is greater than or equal to a minimum zoom ratio of the first macro camera.

**24.** The method according to claim 20, wherein the navigation image is the image captured by the second macro camera; and
the displaying, in a viewfinder frame, an image captured by a first macro camera, and displaying, in a superimposed manner, a navigation window on a preview image displayed in the viewfinder frame comprises:

performing digital zoom cropping on the image captured by the first macro camera, to obtain a second cropped image;
based on an initially calibrated image offset value or an image offset value updated last time, identifying, by using an identification pattern, a location of the second cropped image in a target image, to obtain a second identification image; and
displaying the second cropped image in the viewfinder frame, and displaying the second identification image in the navigation window of the viewfinder frame, wherein
the target image is a third cropped image obtained by performing, based on the initially calibrated image offset value or the updated image offset value, image offset cropping on the image captured by the second macro camera, or a full field-of-view image captured by the second macro camera.

**25.** The method according to claim 24, wherein the method further comprises:

performing image feature matching based on the second cropped image and the target image, to obtain a second image feature matching result; and
determining an image offset value of the target image based on the second image feature matching result and a zoom ratio of the target image, and performing offset value updating based on the image offset value of the target image.

**26.** The method according to claim 20, wherein the navigation image is the image captured by the first macro camera; and
the displaying, in a viewfinder frame, an image captured by a first macro camera, and displaying, in a superimposed manner, a navigation window on a preview image displayed in the viewfinder frame comprises:

performing digital zoom cropping on the image captured by the first macro camera, to obtain a fourth cropped image;

identifying, by using an identification pattern, a location of the fourth cropped image in the image captured by the first macro camera, to obtain a third identification image; and

displaying the fourth cropped image in the viewfinder frame, and displaying the third identification image in the navigation window of the viewfinder frame.

27. The method according to claim 19, wherein the method further comprises:

when detecting a photo shooting operation, in response to the photo shooting operation, performing image fusion on the image captured by the first macro camera and an image captured by a second macro camera, to obtain a fused image, and outputting the fused image, wherein

the fused image comprises a target area and a non-target area, and image quality of the target area is higher than image quality of the non-target area; and

the target area is an area that is in the image captured by the first macro camera and that corresponds to the image captured by the second macro camera.

28. The method according to any one of claims 21 to 27, wherein the method further comprises:

detecting a first shooting distance of an image captured by a target camera; and

if first shooting distances of N consecutive frames of images are all less than a first threshold, switching from the target camera to the first macro camera, and displaying, in the viewfinder frame, an image captured by a default macro camera.

29. The method according to claim 28, wherein the method further comprises:
if the first shooting distances of the N consecutive frames of images are all less than the first threshold, displaying prompt information in the viewfinder frame, wherein the prompt information is used to prompt that the macro shooting mode is entered.

30. The method according to any one of claims 21 to 29, wherein the method further comprises:

detecting a second shooting distance of the image captured by the first macro camera; and

if second shooting distances of M consecutive frames of images are all greater than a second threshold, switching from the first macro camera to the default macro camera, and displaying, in the viewfinder frame, the image captured by the default macro camera.

31. An electronic device, comprising a memory, a processor, and a computer program that is stored in the memory and that can be run on the processor, wherein when the processor executes the computer program, the method according to any one of claims 1 to 18 or claims 19 to 30 is implemented.

32. A computer-readable storage medium, wherein the computer-readable storage medium stores a computer program, and when the computer program is executed by a processor, the method according to any one of claims 1 to 18 or claims 19 to 30 is implemented.

_100_

Macro camera
[104]

Processor
[101]

Focus motor
[103]

Distance
sensor
[105A]

Sensor module
[105]

Memory [102]

FIG. 1

Application layer

| Camera | Calendar | Maps | WLAN | Music | Messages |

| Gallery | Phone | Navigation | Bluetooth | Videos | ... |

Application framework layer

| Window manager | Content extractor | Phone manager | Resource manager |

| Notification manager | View system | ... |

System library

Android runtime

| Surface manager | Three-dimensional graphics processing library |

| Two-dimensional graphics engine | Media library | ... |

Kernel layer

| Display driver | Camera driver | Focus motor driver |

| Audio driver | Sensor driver | ... |

FIG. 2

FIG. 3A(1)

FIG. 3A(2)

FIG. 3A(3)

FIG. 3B(1)

FIG. 3B(2)

FIG. 3B(3)

Macro mode disabled — 325

31

319

315   314

324

1x

Aperture Night Portrait Photo Video Professional

FIG. 3C

FIG. 3D(1)

CONT.
FROM
FIG. 3D(1)

319

326

315    314

1.5x

Aperture Night Portrait Pho        fessional

TO
FIG. 3D(3)

FIG. 3D(2)

CONT.
FROM
FIG. 3D(2)

TO
FIG. 3D(4)

319

3.5x

315        314

3.5x

327

Aperture Night Portrait Photo  Vid              nal

▲

FIG. 3D(3)

FIG. 3D(4)

Macro mode enabled — 323

31

329

319

315   314

1x

330   331

Aperture   Night   Portrait   Photo   Video   Professional

TO
FIG. 3E(2)

FIG. 3E(1)

CONT.
FROM
FIG. 3E(1)

332

319

3.5x

315 314

3.5x

330 331

Aperture  Night  Portrait  Photo  Video  Professional

▲

FIG. 3E(2)

FIG. 4

FIG. 5

FIG. 6

71

08:08
Friday, August 8

28°C
Shenzhen

TO
FIG. 7B

AI Life    Settings    Calendar    MeeTime

Clock    Application Store    Memo    Gallery

Camera    Contacts    Phone    Messages

711

FIG. 7A

CONT.
FROM
FIG. 7A

713

715    714

712

1x

Aperture Night Portrait Photo Video Professional

FIG. 7B

CONT.
FROM
FIG. 7B

Macro mode enabled — 719

TO FIG. 7D

716

717

715    714    718

1x

Aperture Night Portrait P̶    Professional

FIG. 7C

FIG. 7D

FIG. 8A

CONT. FROM FIG. 8A

TO FIG. 8C

813

815    814

812

Aperture  Night  Portrait  Photo   Video   Professional

FIG. 8B

CONT. FROM FIG. 8B

818

819

817 Macro mode enabled

816

815    814

3.5x

Aperture Night Portrait Photo Video Professional

▲

FIG. 8C

FIG. 9A

EP 4 475 544 A1

CONT.
FROM
FIG. 9A

913

915   914

912

1x

Aperture  Night  Portrait  Photo  Video  Professional

▲

TO
FIG. 9C

FIG. 9B

67

CONT. FROM FIG. 9B

Macro mode enabled — 919

916

915   914   918

917

Aperture Night Portrait P~~~~~rofessional

FIG. 9C

CONT.
FROM
FIG. 9C

FIG. 9D

FIG. 9E

922

923

924

917

4.0x

915    914    918

4.0x

Aperture  Night  Portrait  Photo  Video  Professional

▲

FIG. 9F

Display in a superimposed manner

Ultra-wide-angle navigation image

Zoomed-out image

Identify a location of a long-focus preview FOV in an ultra-wide-angle FOV based on an offset value

Calculate a value of an image offset between a center of a wide-angle image and a center of a long-focus image

Offset value updating

Image feature matching

Long-focus preview image

Initial offset value

Image offset cropping

Zoomed-out image

Zoomed-out image

Digital zoom cropping

Digital zoom cropping

Calibrated data

ISP

Image offset cropping

Initial offset value

Calibrated data

ISP

Ultra-wide-angle macro camera

Long-focus macro camera

FIG. 10

111

08:08
Friday, August 8

28°C
Shenzhen

TO
FIG. 11B

| | | | |
|---|---|---|---|
| AI Life | Settings | Calendar | MeeTime |
| Clock | Application Store | Memo | Gallery |
| Camera | Contacts | Phone | Messages |

5G 5G 8:08

1111

FIG. 11A

CONT.
FROM
FIG. 11A

TO
FIG. 11C

1113

1112

1115    1114

1x

Aperture  Night  Portrait  Photo  Video  Professional

▲

FIG. 11B

FIG. 11C

FIG. 11D

1119

1120

TO
FIG.11F

1121

CONT.
FROM
FIG. 11D

3.5x

1115   1114

3.5x

Aperture Night Portrait Photo  Vid      nal

FIG. 11E

12.0x

1119

1120

1122

1115    1114

12x

Aperture  Night  Portrait  Photo    Video   Professional

FIG. 11F

EP 4 475 544 A1

```
┌──────────┐         ┌──────┐         ┌──────────┐
│Long-focus│         │      │         │ Zoomed-  │
│  macro   │────────▶│ ISP  │────────▶│out image │─────┐
│ camera   │         │      │         │          │     │
└──────────┘         └──────┘         └──────────┘     │
                                                       ▼
                                              ┌──────────┐      ┌────────────────────┐
                                              │  Image   │      │ Calculate a value  │
                                              │ feature  │─────▶│ of an image offset │
                                              │ matching │      │ between a center of│
               ┌──────────┐  Initial offset   └──────────┘      │ a wide-angle image │
               │Calibrated│  value                   ▲          │ and a center of a  │
               │   data   │──────────┐               │          │ long-focus image   │
               └──────────┘          ▼               │          └────────────────────┘
                              ┌──────────┐     ┌──────────┐
                              │  Image   │     │ Zoomed-  │
                              │  offset  │────▶│out image │
                              │ cropping │     │          │
 ┌──────────┐    ┌──────┐     └──────────┘     └──────────┘
 │Ultra-wide│    │      │           ▲   Offset value updating
 │ -angle   │───▶│ ISP  │───────────┼──────────────────────────┐
 │  macro   │    │      │           │                           │
 │ camera   │    └──────┘           ▼                           │
 └──────────┘                ┌──────────┐              ┌──────────────────┐
      │                      │  Image   │              │ Ultra-wide-angle │
      │      ┌──────────┐    │  offset  │─────────────▶│  preview image   │
      │      │Calibrated│    │ cropping │              └──────────────────┘
      │      │   data   │───▶└──────────┘                       │
      │      └──────────┘  Initial offset                       ▼
      │                    value                       ┌──────────────────┐
      │                                                │   Display in a   │
      │                                                │   superimposed   │
      │                                                │     manner       │
      │                                                └──────────────────┘
      ▼                                                         ▲
 ┌──────────┐   ┌────────────────────────┐   ┌──────────────────┐
 │ Zoomed-  │   │Identify a location of  │   │ Ultra-wide-angle │
 │out image │──▶│an ultra-wide-angle     │──▶│ navigation image │
 │          │   │preview FOV in an ultra-│   └──────────────────┘
 └──────────┘   │wide angle              │
                └────────────────────────┘
```

FIG. 12

```
┌──────────┐     ┌──────┐
│Long-focus│     │      │
│  macro   │────▶│ ISP  │
│  camera  │     │      │
└──────────┘     └──────┘
```

```
                          ┌──────────┐     ┌──────────────────┐     ┌──────────┐
                          │Zoomed-out│     │Identify a location of│  │Long-focus│
                     ────▶│  image   │────▶│a long-focus preview │─▶│navigation│
                          │          │     │ FOV in a long-focus │  │  image   │
                          └──────────┘     │        FOV          │  └──────────┘
                                           └──────────────────┘
```

```
     ┌──────────┐                          ┌──────────────────┐
     │ Digital  │                          │                  │
────▶│  zoom    │─────────────────────────▶│Long-focus preview│
     │ cropping │                          │      image       │
     └──────────┘                          └──────────────────┘
```

```
┌─────────────┐
│ Display in a │
│ superimposed │
│   manner     │
└─────────────┘
```

FIG. 13

141

2x ultra-wide-angle FOV

Long-focus FOV

FIG. 14

EP 4 475 544 A1

```
                                    ┌──────────────────────────────────────────┐
                                    │ When a zoom ratio is less than 3.5x,       │
                                    │ wide-angle display is performed; or when a │      ┌──────────┐
                                    │ zoom ratio is greater than or equal to     │─────▶│ Preview  │
                                    │ 3.5x, wide-angle navigation and long-focus │      └──────────┘
                                    │ display are performed                      │
                                    └──────────────────────────────────────────┘
```

| Long-focus macro camera | → | ISP | → | Zoomed-out image |

| Calibrated data | Initial offset value |
| Image offset cropping |
| Zoomed-out image |
| Image feature matching |
| Calculate a value of an image offset between a center of a wide-angle image and a center of a long-focus image |

| Ultra-wide-angle macro camera | → | ISP |
| Image offset cropping |
| Calibrated data | Initial offset value |

Offset value updating

When a zoom ratio is less than 2x, photo shooting is performed by using an ultra-wide angle; when a zoom ratio is from 2x to 3.5x, image fusion is performed between an ultra-wide-angle image and the long-focus image; or when a zoom ratio is greater than or equal to 3.5x, photo shooting is performed by using a long focal length

Photo shooting

FIG. 15

08:08

Friday, August 8

28°C
Shenzhen

161

TO FIG. 16A(2)

AI Life    Settings    Calendar    MeeTime

Clock    Application Store    Memo    Gallery

Camera    Contacts    Phone    Messages

1611

FIG. 16A(1)

CONT. FROM FIG. 16A(1)

TO FIG. 16A(3)

1613

1615    1614

1x

1612

Aperture  Night  Portrait  Photo  Video  Professional

FIG. 16A(2)

Macro mode enabled ⌐ 1617

1615    1614

1x

1616

Aperture Night Portrait Ph          Professional

⇩
~
TO
FIG. 16A(4)

FIG. 16A(3)

EP 4 475 544 A1

CONT.
FROM
FIG. 16A(3)

FIG. 16A(4)

86

TO
FIG. 16A(6)

CONT.
FROM
FIG. 16A(4)

Aperture  Night  Portrait  Photo  Video  Professional

1622

FIG. 16A(5)

← August 8, 2022

CONT.
FROM
FIG. 16A(5)

1623

Share  Edit  Delete  More

FIG. 16A(6)

FIG. 16B(1)

FIG. 16B(2)

CONT. FROM FIG. 16B(2)

1617

Macro mode enabled

1616

1615    1614

1x

Aperture Night Portrait P    Professional

FIG. 16B(3)

CONT.
FROM
FIG. 16B(3)

1625

1626

TO
FIG. 16B(5)

1624

1615

3x

Aperture  Night  Portrait  Photo  Video  Professional

1627

FIG. 16B(4)

FIG. 16B(5)

August 8, 2022

CONT.
FROM
FIG. 16B(5)

1629

Share    Edit    Delete    More

FIG. 16B(6)

**08:08**
Friday, August 8

28°C
Shenzhen

AI Life    Settings    Calendar    MeeTime

Jan
15

Clock    Application
Store    Memo    Gallery

Camera    Contacts    Phone    Messages

1611

161

TO
FIG. 16C(2)

FIG. 16C(1)

CONT. FROM FIG. 16C(1)

TO FIG. 16C(3)

1613

1615 1614

1612

1x

Aperture  Night  Portrait  Photo  Video  Professional

FIG. 16C(2)

CONT. FROM FIG. 16C(2)

Macro mode enabled — 1617

1615    1614

1616

1x

Aperture Night Portrait P    Professional

TO
FIG. 16C(4)

FIG. 16C(3)

CONT.
FROM
FIG. 16C(3)

1631

1632

TO
FIG. 16C(5)

1630

1615

4.0x

Aperture Night Portrait Photo Video Professional

▲

1633

FIG. 16C(4)

TO
FIG. 16C(6)

CONT.
FROM
FIG. 16C(4)

4.0x

Aperture Night Portrait Photo Video Professional

1634

FIG. 16C(5)

August 8, 2022

CONT. FROM FIG. 16C(5)

1635

Share    Edit    Delete    More

FIG. 16C(6)

FIG. 17A(1)

CONT. FROM FIG. 17A(1)

TO FIG. 17A(3)

1713

1712

1715  1714

1x

Aperture Night Portrait Photo  Video  Professional

1716

FIG. 17A(2)

CONT. FROM FIG. 17A(2)

1713

1715    1714

1717

1x

Aperture Night Portrait Photo Video Professional

▲

TO

FIG. 17A(4)

FIG. 17A(3)

CONT.
FROM
FIG. 17A(3)

Macro mode enabled — 1719

TO
FIG. 17A(5)

1718

1720

1715    1714    1721

1x

Aperture  Night  Port    Photo  Video  Professional

FIG. 17A(4)

1723
1724
1722
1720

1715 1714 1721

1.5x

Aperture  Night  Port  Photo  Video  Professional

TO
FIG. 17A(6)

CONT.
FROM
FIG. 17A(4)

FIG. 17A(5)

CONT.
FROM
FIG. 17A(5)

Aperture  Night  Portrait  Photo  Video  Professional

FIG. 17A(6)

Aperture Night Portrait Photo Video Professional

FIG. 17B(1)

TO
FIG. 17B(2)

CONT. FROM FIG. 17B(1)

1728

1713

00:01

1715    1714

1x

TO FIG. 17B(3)

FIG. 17B(2)

CONT.
FROM
FIG. 17B(2)

00:15

Macro mode enabled — 1730

1713

1729

1715   1714   1732

1x

1731

TO
FIG. 17B(4)

FIG. 17B(3)

CONT.
FROM
FIG. 17B(3)

00:20

1734

1735

TO
FIG. 17B(5)

1733

1715    1714    1732

1.5x

1731

FIG. 17B(4)

FIG. 17B(5)

00:30

1740

1741

1739

1715    1714    1732

4.0x

1731

CONT.
FROM
FIG. 17B(5)

FIG. 17B(6)

<div align="center">INTERNATIONAL SEARCH REPORT</div>

| International application No. |
| --- |
| **PCT/CN2023/083740** |

| A. | CLASSIFICATION OF SUBJECT MATTER |
| --- | --- |
| | H04N23/45(2023.01)i |

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, CNKI, ENTXT, ENTXTC: 倍率, 倍数, 导航, 焦, 拍摄, 切换, magnification, multiple, navigation, focuse, photograph, switch

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111654629 A (SPREADTRUM COMMUNICATIONS (SHANGHAI) CO., LTD.) 11 September 2020 (2020-09-11) description, paragraphs 68-80 | 1, 31, 32 |
| Y | CN 111654629 A (SPREADTRUM COMMUNICATIONS (SHANGHAI) CO., LTD.) 11 September 2020 (2020-09-11) description, paragraphs 68-80 | 2-6, 13-18 |
| X | CN 111010506 A (HUAWEI TECHNOLOGIES CO., LTD.) 14 April 2020 (2020-04-14) description, paragraph 180 | 19, 20, 26-32 |
| Y | CN 111010506 A (HUAWEI TECHNOLOGIES CO., LTD.) 14 April 2020 (2020-04-14) description, paragraph 180 | 2-6, 13-18 |
| A | US 2021218898 A1 (SAMSUNG ELECTRONICS CO., LTD.) 15 July 2021 (2021-07-15) entire document | 1-32 |
| A | CN 111183632 A (HUAWEI TECHNOLOGIES CO., LTD.) 19 May 2020 (2020-05-19) entire document | 1-32 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 June 2023** | **22 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083740**

| Patent document cited in search report | | | Publication date (day/month/year) | Patent family member(s) | | | Publication date (day/month/year) |
|---|---|---|---|---|---|---|---|
| CN | 111654629 | A | 11 September 2020 | None | | | |
| CN | 111010506 | A | 14 April 2020 | JP | 2023501663 | A | 18 January 2023 |
| | | | | US | 2022394190 | A1 | 08 December 2022 |
| | | | | WO | 2021093793 | A1 | 20 May 2021 |
| | | | | EP | 4044580 | A1 | 17 August 2022 |
| | | | | EP | 4044580 | A4 | 16 November 2022 |
| | | | | KR | 20220080195 | A | 14 June 2022 |
| US | 2021218898 | A1 | 15 July 2021 | US | 11412148 | B2 | 09 August 2022 |
| | | | | WO | 2021141445 | A1 | 15 July 2021 |
| | | | | KR | 20210090476 | A | 20 July 2021 |
| CN | 111183632 | A | 19 May 2020 | WO | 2020073959 | A1 | 16 April 2020 |

Form PCT/ISA/210 (patent family annex) (July 2022)

**REFERENCES CITED IN THE DESCRIPTION**

**Patent documents cited in the description**

- CN 202210351277